(19) Europäisches Patentamt / European Patent Office / Office européen des brevets

(11) **EP 2 381 248 B1**

(12) **EUROPEAN PATENT SPECIFICATION**

(45) Date of publication and mention of the grant of the patent:
**16.09.2015 Bulletin 2015/38**

(51) Int Cl.:
**G01N 25/18** (2006.01)  **G01F 1/68** (2006.01)
**G01F 15/04** (2006.01)  **G01F 1/00** (2006.01)

(21) Application number: **11163139.6**

(22) Date of filing: **20.04.2011**

(54) **Gas flow rate measuring system with thermal diffusivity correction**

System zur Messung der Strömungsrate eines Gases mit Wärmediffusionskorrektur

Système de mesure du débit de fluide avec correction pour la diffusion thermique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2010 JP 2010097139**

(43) Date of publication of application:
**26.10.2011 Bulletin 2011/43**

(73) Proprietor: **Azbil Corporation**
**Chiyoda-ku**
**Tokyo 100-6419 (JP)**

(72) Inventor: **Ooishi, Yasuharu**
**Tokyo 100-6419 (JP)**

(74) Representative: **Kling, Simone**
**Lavoix Munich**
**Bayerstrasse 83**
**80335 München (DE)**

(56) References cited:
**EP-A1- 2 009 431**    **US-A- 4 059 982**
**US-A1- 2005 034 532**

**Description**

Cross Reference to Related Applications

The present application claims priority to Japanese Patent Application No. 2010-097139, filed April 20, 2010.

Field of Technology

The present invention relates to a thermal diffusivity measuring system, a concentration of caloric component measuring system, and a flow rate measuring system in relation to a gas inspection technology.

Background of the Invention

Conventionally, it has been necessary to use costly gas chromatography equipment, or the like, to analyze the compliments of a mixed gas when calculating the amount of heat production of a mixed gas. Additionally, there have been proposals for a method for calculating the amount of heat production from a mixed gas by calculating the ratio of methane ($CH_4$), propane ($C_3H_8$), nitrogen ($N_2$), and carbon dioxide gas ($CO_2$) components included in the mixed gas through measuring the thermal conductivity of the mixed gas and the speed of sound in the mixed gas (See, for example, Japanese Examined Patent Application Publication 2004-514138 ("JP '138"). However, the method disclosed in JP '138 requires a costly speed-of-sound sensor to measure the speed of sound, in addition to a sensor for measuring the thermal conductivity. Because of this, measuring the amount of heat production by a mixed gas has not been easy.
Conventionally, not only has the measurement of the amount of heat production of a mixed gas been difficult, but also the measurement of properties of a mixed gas, such as the thermal diffusivity and the concentration of caloric component, and the like, has been difficult as well. Given this, the object of the present invention is to provide a thermal diffusivity measuring system, a concentration of caloric component measuring system, and a flow rate measuring system wherein the characteristics of a gas can be measured easily.
US 2005/0034532 A1 discloses a compensated flowmeter having a probe adapted to project into flowing media within a conduit. The probe includes a thermal dispersion sensor, and a compensating gas properties sensor contained within a no-flow chamber of the probe.
EP 2009 431 A1 provides a fluid identification device of long life. Identification of an identification target fluid is carried out by using at least two liquid type detection parts each of which is equipped with both of a temperature detector and a heating element, selecting electrical conduction to any one of the heating elements, and identifying the identification target fluid based on a fluid temperature detection signal of the temperature detector in the fluid detection part not including the heating element whose electrical conduction has been selected and an output of the fluid type detection circuit.

Summary of the Invention

According to the present invention a flow rate measuring system according to claim 1 is provided.

Brief Description of the Drawings

FIG. 1 is a perspective view of a microchip.
FIG. 2 is a cross-sectional diagram, viewed from the direction of the section II-II, of the microchip.
FIG. 3 is a circuit diagram relating to a heater element.
FIG. 4 is a circuit diagram relating to a temperature measuring element.
FIG. 5 is a graph illustrating the relationship between the heat producing temperature of the heater element and the radiation coefficient of the gas in the example.
FIG. 6 is a first schematic diagram of a thermal diffusivity calculating equation generating system.
FIG. 7 is a second schematic diagram of a thermal diffusivity calculating equation generating system.
FIG. 8 is a flowchart illustrating a method for generating a thermal diffusivity calculating equation.
FIG. 9 is a schematic diagram illustrating a thermal diffusivity measuring system.
FIG. 10 is a flowchart illustrating a method for measuring a thermal diffusivity.
FIG. 11 is a table showing the compositions of sample mixed gases used in examples of embodiment relating to the present invention.
FIG. 12 is a table showing the true values and calculated values for the inverses of the thermal diffusivities for the sample mixed gases used in the examples according to the present invention.

FIG. 13 is a graph illustrating the true values and calculated values for the inverses of the thermal diffusivities for the sample mixed gases used in the examples according to the present invention.

FIG. 14 is a schematic diagram of a thermal diffusivity calculating equation generating system.

FIG. 15 is a schematic diagram illustrating a thermal diffusivity measuring system.

FIG. 16 is a schematic diagram of a concentration of caloric component calculating equation generating system.

FIG. 17 is a flowchart illustrating a method for generating a concentration of caloric component calculating equation.

FIG. 18 is a schematic diagram of a concentration of caloric component measuring system.

FIG. 19 is a flowchart illustrating a method for measuring a concentration of caloric component.

FIG. 20 is a table showing the compositions of sample mixed gases used in examples according to the present invention.

FIG. 21 is a table showing the true values and calculated values for the alkane densities in the sample mixed gases used in the examples according to the present invention.

FIG. 22 is a graph illustrating the true values and calculated values for the alkane densities in the sample mixed gases used in the examples according to the present invention.

FIG. 23 is a schematic diagram of a concentration of caloric component calculating equation generating system.

FIG. 24 is a schematic diagram of a concentration of caloric component measuring system.

FIG. 25 is a schematic diagram of a specific heat capacity calculating equation generating system.

FIG. 26 is a flowchart illustrating a method for generating a specific heat capacity calculating equation.

FIG. 27 is a schematic diagram of a specific heat capacity measuring system.

FIG. 28 is a flowchart illustrating a method for measuring a specific heat capacity.

FIG. 29 is a table showing the true values and calculated values for specific heat capacities divided by the thermal conductivities in the sample mixed gases used in the examples according to the present invention.

FIG. 30 is a graph illustrating the true values and calculated values for specific heat capacities divided by the thermal conductivities in the sample mixed gases used in the examples according to the present invention.

FIG. 31 is a schematic diagram of a specific heat capacity calculating equation generating system.

FIG. 32 is a schematic diagram of a specific heat capacity measuring system.

FIG. 33 is a schematic diagram of a flow rate measuring system according to the invention.

FIG. 34 is a schematic diagram of the flow meter of FIG.33.

FIG. 35 is a perspective view of a microchip.

FIG. 36 is a cross-sectional diagram, viewed from the direction of the section XXXVI-XXXVI, of the microchip of FIG. 35.

FIG. 37 is a table showing the compositions of mixed gases used in the present invention.

FIG. 38 is a table showing the flow rate detection errors for the mixed gases used in the present invention.

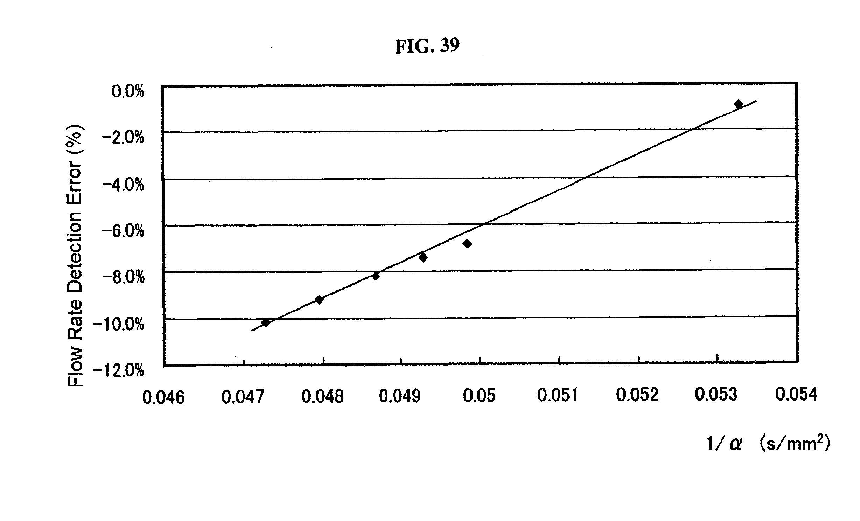

FIG. 39 is a graph illustrating the flow rate detection errors for the mixed gases used in the present invention.

FIG. 40 is a schematic diagram of a flow rate measuring system as set forth in another example according to the present invention.

FIG. 41 is a schematic diagram of a flow rate measuring system as set forth in an example according to the present invention.

FIG. 42 is a schematic diagram of a flow meter as set forth in the example according to the present invention.

FIG. 43 is a schematic diagram of a flow rate measuring system as set forth in a further example according to the present invention.

FIG. 44 is a schematic diagram of a flow rate measuring system as set forth in an example.

FIG. 45 is a schematic diagram of a flow meter as set forth in the example according to the present invention.

FIG. 46 is a schematic diagram of a flow rate measuring system as set forth in another example according to the present invention.

FIG. 47 is a graph illustrating the relationship between the radiation coefficients and thermal conductivities.

Detailed Description of the Invention

Examples of the present invention are described below. In the descriptions of the drawings below, identical or similar components are indicated by identical or similar codes. Note that the diagrams are schematic. Consequently, specific measurements should be evaluated in light of the descriptions below. Furthermore, even within these drawings there may, of course, be portions having differing dimensional relationships and proportions.

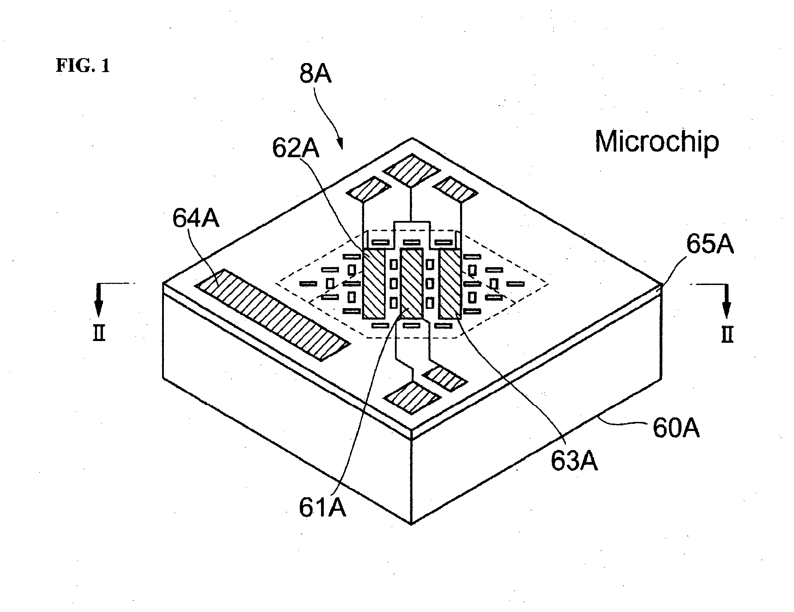

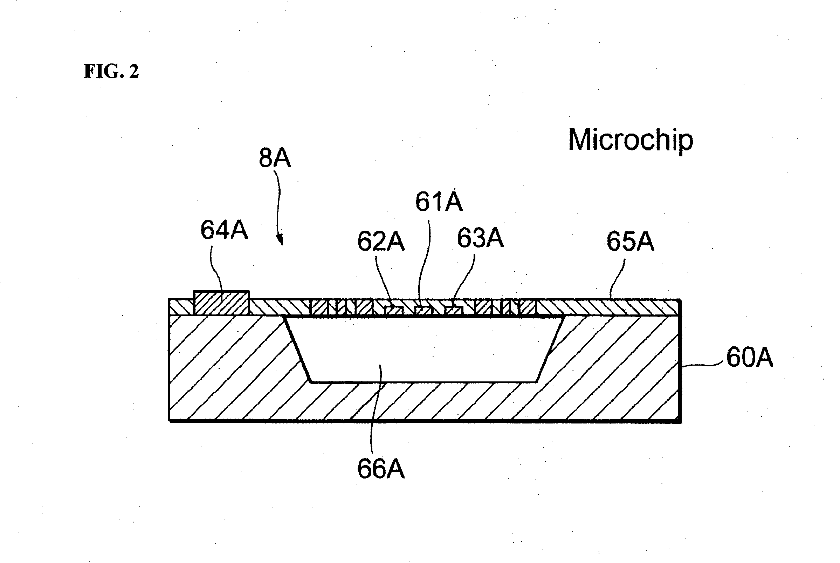

A microchip 8A that is used in a thermal diffusivity calculating equation generating system is described in reference to FIG. 1, which is a perspective diagram, and FIG. 2, which is a cross-sectional diagram that is viewed from the direction of the section II-II. The microchip 8A comprises a substrate 60A, which is provided with a cavity 66A, and a dielectric layer 65A, which is disposed so as to cover the cavity 66A on the substrate 60A. The thickness of the substrate 60A is, for example, 0.5 mm. The length and width dimensions of the substrate 60A are, for example, 1.5 mm each. The portion of the dielectric layer 65A that covers the cavity 66A forms a thermally insulating diaphragm. The microchip 8A further comprises a heater element 61A that is provided on a portion of the diaphragm of the dielectric layer 65A, a first temperature measuring element 62A and a second temperature measuring element 63A provided in a portion of the diaphragm of the dielectric layer 65A so that the heater element 61 A is interposed therebetween, and a third temperature measuring element 64A that is provided on the substrate 60A.

The heater element 61A is disposed in the center of the portion of the diaphragm of the dielectric layer 65A that covers the cavity 66A. The heater element 61A is, for example, a resistor, and produces heat through the supply of electric power thereto, to heat the ambient gas that contacts the heater element 61A. The first temperature measuring element 62A, the second temperature measuring element 63A, and the third temperature measuring element 64A are, for example, each resistors and each detect the gas temperature of the ambient gas prior to the production of heat by the heater element 61A. Note that the gas temperature may be measured using any single one of the first temperature measuring element 62A, the second temperature measuring element 63A, or the third temperature measuring element 64A. Conversely, an average value of the gas temperature detected by the first temperature measuring element 62A and the gas temperature detected by the second temperature measuring element 63A may be used as the gas temperature. While the description below is for an example wherein the average value of the gas temperatures detected by the first temperature measuring element 62A and the second temperature measuring element 63A is used as the gas temperature, there is no limitation thereto.

Silicon (Si), or the like, may be used as the material for the substrate 60A. Silicon dioxide ($SiO_2$), or the like, may be used as the material for the dielectric layer 65A. The cavity 66A may be formed through anisotropic etching, or the like. Furthermore, platinum (Pt) or the like may be used as the material for the first temperature measuring element 62A, the second temperature measuring element 63A, and the third temperature measuring element 64A, and they may be formed through a lithographic method, or the like.

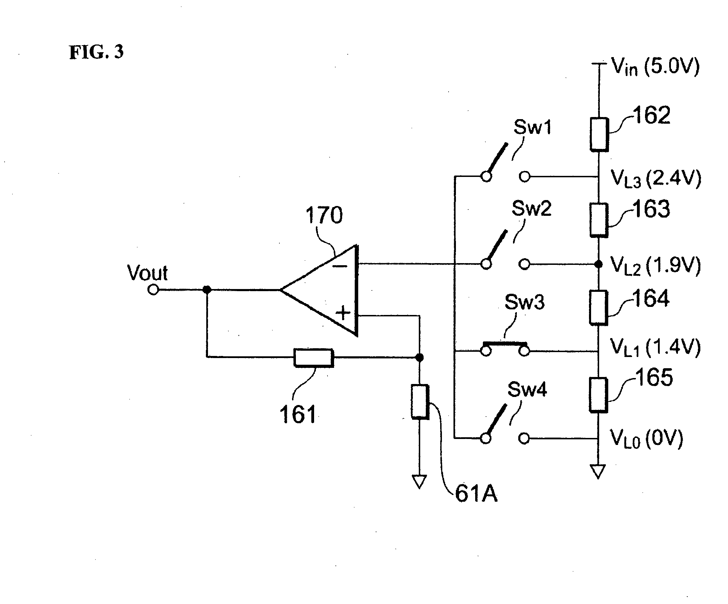

As illustrated in FIG. 3, one end of the heater element 61 A is connected electrically to a + input terminal of an operational amplifier 170, for example, with the other end grounded. A resistive element 161 is connected, in parallel, to the + input terminal and the output terminal of the operational amplifier 170. The - input terminal of the operational amplifier 170 is connected electrically between a resistive element 162 and a resistive element 163, which are connected in series, between the resistive element 163 and a resistive element 164, which are connected in series, between the resistive element 164 and a resistive element 165, which are connected in series, or between the resistive element 165 and a ground terminal. The appropriate selection of the resistance values for each of the resistive elements 162 through 165 will produce a voltage $V_{L3}$ of, for example, 2.4 V between the resistive element 163 and 162 when a voltage Vin of, for example, 5.0V is applied to one end of the resistive element 162. Additionally, a voltage $V_{L2}$ of, for example, 1.9 V is produced between the resistive element 164 and the resistive element 163, and a voltage $V_{L1}$ of, for example, 1.4 V is produced between the resistive element 165 and the resistive element 164.

A switch SW1 is connected between the resistive element 162 and the resistive element 163 and the - input terminal of the operational amplifier 170, and a switch SW2 is connected between the resistive element 163 and the resistive element 164 and the - input terminal of the operational amplifier 170. Furthermore, a switch SW3 is connected between the resistive element 164 and the resistive element 165 and the - input terminal of the operational amplifier 170, and a switch SW4 is connected between the resistive element 165 and ground terminal and the - input terminal of the operational amplifier 170.

When applying the voltage $V_{L3}$ of 2.4 V to the - input terminal of the operational amplifier 170, only switch SW1 is turned ON, and switches SW2, SW3, and SW4 are turned OFF. When applying the voltage $V_{L2}$ of 1.9 V to the - input terminal of the operational amplifier 170, only switch SW2 is turned ON, and switches SW1, SW3, and SW4 are turned OFF. When applying the voltage $V_{L1}$ of 1.4 V to the - input terminal of the operational amplifier 170, only switch SW3 is turned ON, and switches SW1, SW2, and SW4 are turned OFF. When applying the voltage $V_{L0}$ of 0V to the - input terminal of the operational amplifier 170, only switch SW4 is turned ON, and switches SW1, SW2, and SW3 are turned OFF. Consequently, 0V and any of three levels of voltages can be applied to the - input terminal of the operational amplifier 170 through turning the switches SW1, SW2, SW3, and SW4 ON and OFF. Because of this, the applied voltage that determines the heat producing temperature of the heater element 61 A can be set to any of three levels through turning the switches SW1, SW2, SW3, and SW4 ON and OFF.

In the heater element 61A illustrated in FIG. 1 and FIG. 2, the resistance value varies depending on the temperature. The relationship between the heat producing temperature $T_H$ of the heater element 61A and the resistance value $R_H$ of the heater element 61A is given by Equation (1), below:

$$R_H = R_{STD} \times [1 + \alpha(T_H - T_{STD}) + \beta(T_H - T_{STD})^2] \ldots (1)$$

Here $T_{STD}$ indicates a standard temperature of, for example, 20°C. $R_{STD}$ indicates a resistance value that is measured in advance at the standard temperature of $T_{STD}$. a is the first-order temperature coefficient of resistance, and β is the second-order temperature coefficient of resistance. Moreover, the resistance value $R_H$ of the heater element 61 A is given by Equation (2), below, from the driving power $P_H$ of the heater element 61A and the current $I_H$ flowing in the heater element 61 A:

$$R_H = P_H / I_H{}^2 ... (2)$$

Conversely, the resistance value $R_H$ of the heater element 61 A is given by Equation (3), below, from the voltage $V_H$ applied to the heater element 61 A and the current $I_H$ flowing in the heater element 61 A:

$$R_H = V_H / I_H ... (3)$$

Here the heat producing temperature $T_H$ of the heater element 61A reaches a thermal equilibrium and stabilizes between the heater element 61A and the ambient gas. Note that this "thermal equilibrium" refers to a state wherein there is a balance between the heat production by the heater element 61 A and the heat dissipation from the heater element 61 A into the ambient gas. As indicated in Equation (4), below, radiation coefficient $M_I$ of the ambient gas is obtained by dividing the driving power $P_H$ of the heater element 61A by the difference between the heat producing temperature $T_H$ of the heater element 61A and the temperature $T_I$ of the ambient gas in this equilibrium state. Note that the units for the radiation coefficient MI are, for example, W/°C.

$$M_I = P_H / (T_H - T_I) ... (4)$$

Because the current $I_H$ flowing in the heater element 61A and the driving power $P_H$ or the voltage $V_H$ can be measured, the heat producing temperature $T_H$ of the heater element 61 A can be calculated from Equation (1) through Equation (3), above. Moreover, the temperature $T_I$ of the ambient gas can be measured by the first temperature measuring element 62A and the second temperature measuring element 63A in FIG. 1. Consequently, the radiation coefficient $M_I$ can be calculated using the microchip 8A illustrated in FIG. 1 and FIG. 2.

Microchip 8A is secured, in a chamber, or the like, that is filled with the ambient gas, through, for example, a thermally insulating member that is disposed on the bottom face of the microchip 8A. Securing the microchip 8A through a thermally insulating member within a chamber, or the like, makes the temperature of the microchip 8A less susceptible to temperature variations of the inner wall of the chamber, or the like. The thermally insulating member is made from glass, or the like, with a thermal conductivity of, for example, no more than 1.0 W/(m · K).

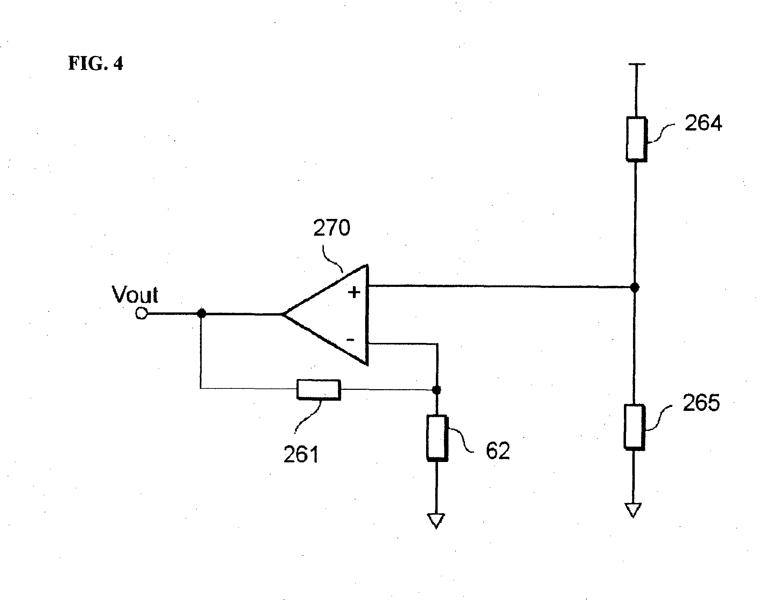

As illustrated in FIG. 4, one end of the first temperature measuring element 62A is connected electrically to a - input terminal of an operational amplifier 270, for example, with the other end grounded. A resistive element 261 is connected, in parallel, to the - input terminal and the output terminal of the operational amplifier 270. The + input terminal of the operational amplifier 270 is connected electrically to between a resistive element 264 and a resistive element 265 that are connected in series. This causes a weak voltage of about 0.3 V to be applied to the first temperature measuring element 62A. The temperature of the first temperature measuring element 62A, to which the weak voltage of about 0.3 V is applied, will approximate the ambient temperature $T_I$.

Here the ambient gas is a mixed gas, where the mixed gas is assumed to comprise four gas components: gas A, gas B, gas C, and gas D. The sum of the volume fraction $V_A$ of the gas A, the volume fraction $V_B$ of the gas B, the volume fraction $V_C$ of the gas C, and the volume fraction $V_D$ of the gas D, as given by Equation (5), below, is 1:

$$V_A + V_B + V_C + V_D = 1 ... (5)$$

Furthermore, defining the inverse of the thermal diffusivity of the gas A as $1/K_A$, the inverse of the thermal diffusivity of the gas B as $1/K_B$, the inverse of the thermal diffusivity of the gas C as $1/K_C$, and the inverse of the thermal diffusivity of the gas D as $1/K_D$, the inverse of the thermal diffusivity of the mixed gas, $1/\alpha$, is given by the sum of the product of the inverses of the thermal diffusivities of the individual gas components. Consequently, the inverse $1/\alpha$ of the thermal diffusivity of the mixed gas is given by Equation (6), below.

Note that the thermal diffusivity $\alpha$ (m²/s) is given by Equation (7), below, wherein k is the thermal conductivity

(Js$^{-1}$m$^{-1}$K$^{-1}$), p is the density (kgm$^{-3}$), and Cp is the specific heat capacity (Jkg$^{-1}$K$^{-1}$).

$$1/\alpha = 1/K_A \times V_A + 1/K_B \times V_B + 1/K_C \times V_C + 1/K_D \times V_D \ldots (6)$$

$$\alpha = k / (\rho Cp) \ldots (7)$$

Next, when the radiation coefficient of gas A is defined as $M_A$, the radiation coefficient of gas B is defined as $M_B$, the radiation coefficient of gas C is defined as $M_C$, and the radiation coefficient of gas D is defined as $M_D$, the radiation coefficient $M_I$ of the mixed gas is given by the sum of the products of the radiation coefficients of the individual gas components with the volume fractions of those gas components. Consequently, the radiation coefficient $M_I$ of the mixed gas is given by Equation (8), below.

$$M_I = M_A \times V_A + M_B \times V_B + M_C \times V_C + M_D \times V_D \ldots (8)$$

Moreover, because the radiation coefficient of the gas is dependent on the heat producing temperature $T_H$ of the heater element 61 A, the radiation coefficient $M_I$ of the mixed gas is given by Equation (9) as a function of the heat producing temperature $T_H$ of the heater element 61A:

$$M_I(T_H) = M_A(T_H) \times V_A + M_B(T_H) \times V_B + M_C(T_H) \times V_C + M_D(T_H) \times V_D \ldots (9)$$

Consequently, the radiation coefficient $M_I(T_{H1})$ of the mixed gas, when the heat producing temperature of the heater element 61A is $T_{H1}$, is given by Equation (10), below. Moreover, the radiation coefficient $M_I(T_{H2})$ of the mixed gas, when the heat producing temperature of the heater element 61A is $T_{H2}$, is given by Equation (11), below, and the radiation coefficient $M_I(T_{H3})$ of the mixed gas, when the heat producing temperature of the heater element 61A is $T_{H3}$, is given by Equation (12), below. Note that the heat producing temperature $T_{H1}$, the heat producing temperature $T_{H2}$, and the heat producing temperature $T_{H3}$, are each different temperatures.

$$M_I(T_{H1}) = M_A(T_{H1}) \times V_A + M_B(T_{H1}) \times V_B + M_C(T_{H1}) \times V_C + M_D(T_{H1}) \times V_D \ldots (10)$$

$$M_I(T_{H2}) = M_A(T_{H2}) \times V_A + M_B(T_{H2}) \times V_B + M_C(T_{H2}) \times V_C + M_D(T_{H2}) \times V_D \ldots (11)$$

$$M_I(T_{H3}) = M_A(T_{H3}) \times V_A + M_B(T_{H3}) \times V_B + M_C(T_{H3}) \times V_C + M_D(T_{H3}) \times V_D \ldots (12)$$

If the radiation coefficients $M_A(T_H)$, $M_B(T_H)$, $M_C(T_H)$, and $M_D(T_H)$ have non-linearity with respect to the heat producing temperature $T_H$ of the heater element 61 A, the aforementioned Equations (10) through (12) will have a linearly independent relationship. Moreover, even if the radiation coefficients $M_A(T_H)$, $M_B(T_H)$, $M_C(T_H)$, and $M_D(T_H)$ have linearity with respect to the heat producing temperature $T_H$ of the heater element 61A, the aforementioned Equations (10) through (12) will have a linearly independent relationship if the rates of change of the radiation coefficients $M_A(T_H)$, $M_B(T_H)$, $M_C(T_H)$, and $M_D(T_H)$ of the individual gases with respect to the heat producing temperature $T_H$ of the heater element 61A are different. Moreover, if Equations (10) through (12) have a linearly independent relationship, then Equation (5) and Equations (10) through (12) will have a linearly independent relationship.

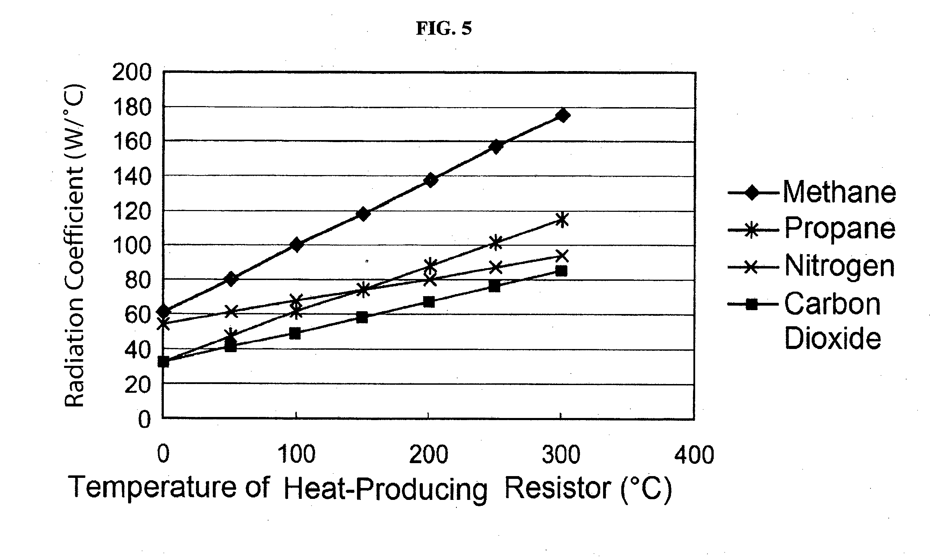

FIG. 5 is a graph illustrating the relationship between the heat producing temperature of the heater element 61A and the radiation coefficients of the methane ($(CH_4$), propane ($C_3H_8$), nitrogen ($N_2$), and carbon dioxide ($CO_2$), which are included in natural gas. The radiation coefficients of the respective gas components of the methane (CH4), propane ($C_3H_8$), nitrogen ($N_2$), and carbon dioxide ($CO_2$), are linear with respect to the heat producing temperature of the heater element 61 A. However, the rates of change of the radiation coefficients of the methane ($CH_4$), propane

($C_3H_8$), nitrogen ($N_2$), and carbon dioxide ($CO_2$), with respect to the heat producing temperature of the heater element 61 A, are each different. Consequently, Equations (10) through (12), above, will be linearly independent if the gas components that comprise the mixed gas are methane ($CH_4$), propane ($C_3H_8$), nitrogen ($N_2$), and carbon dioxide ($CO_2$).

The values for the radiation coefficients $M_A(T_{H1})$, $M_B(T_{H1})$, $M_C(T_{H1})$, $M_D(T_{H1})$, $M_A(T_{H2})$, $M_B(T_{H2})$, $M_C(T_{H2})$, $M_D(T_{H2})$, $M_A(T_{H3})$, $M_B(T_{H3})$, $M_C(T_{H3})$, and $M_D(T_{H3})$ for the individual gas components in Equations (10) through (12) can be obtained in advance through measurements, or the like. Consequently, as illustrated in Equations (13) through (16), below, the volume fraction $V_A$ of the gas A, the volume fraction $V_B$ of the gas B, the volume fraction $V_C$ of the gas C, and the volume fraction $V_D$ of the gas D, of the mixed gas can be obtained as functions of the radiation coefficients $M_I(T_{H1})$, $M_I(T_{H2})$, and $M_I(T_{H3})$, by solving the system of equations of Equation (5) and Equations (10) through (12). Note that in Equations (13) through (16), below, fn, where n is a non-negative integer, is a code indicating a function:

$$V_A = f_1[M_I(T_{H1}), M_I(T_{H2}), M_I(T_{H3})] \ldots (13)$$

$$V_B = f_2[M_I(T_{H1}), M_I(T_{H2}), M_I(T_{H3})] \ldots (14)$$

$$V_C = f_3[M_I(T_{H1}), M_I(T_{H2}), M_I(T_{H3})] \ldots (15)$$

$$V_D = f_4[M_I(T_{H1}), M_I(T_{H2}), M_I(T_{H3})] \ldots (16)$$

Moreover, the gas volume is proportional to the temperature of the gas itself by Boyle-Charles law. If, for example, the temperature of the mixed gas prior to the causing the heater element 61 A to produce heat is defined as $T_I$, the volume fraction $V_A$ of the gas A, the volume fraction $V_B$ of the gas B, the volume fraction $V_C$ of the gas C, and the volume fraction $V_D$ of the gas D can be obtained as functions of the radiation coefficients $M_I(T_{H1})$, $M_I(T_{H2})$, and $M_I(T_{H3})$ of the mixed gas, and of the temperature $T_I$ of the mixed gas, as indicated in Equations (17) through (20), below.

$$V_A = f_1[M_I(T_{H1}), M_I(T_{H2}), M_I(T_{H3}), T_I] \ldots (17)$$

$$V_B = f_2[M_I(T_{H1}), M_I(T_{H2}), M_I(T_{H3}), T_I] \ldots (18)$$

$$V_C = f_3[M_I(T_{H1}), M_I(T_{H2}), M_I(T_{H3}), T_I] \ldots (19)$$

$$V_D = f_4[M_I(T_{H1}), M_I(T_{H2}), M_I(T_{H3}), T_I] \ldots (20)$$

Here Equation (21), below, is obtained through substituting Equation (17) through (20) into Equation (6), above.

$$1/\alpha = 1/K_A \times V_A + 1/K_B \times V_B + 1/K_C \times V_C + 1/K_D \times V_D$$

$$= 1/K_A \times f_1[M_I(T_{H1}), M_I(T_{H2}), M_I(T_{H3}), T_I]$$

$$+ 1/K_B \times f_2[M_I(T_{H1}), M_I(T_{H2}), M_I(T_{H3}), T_I]$$

$$+ 1/K_C \times f_3[M_I(T_{H1}), M_I(T_{H2}), M_I(T_{H3}), T_I]$$

$$+ 1/K_D \times f_4[M_I(T_{H1}), M_I(T_{H2}), M_I(T_{H3}), T_I] \dots (21)$$

As is clear from Equation (21), above, the inverse $1/\alpha$ of the thermal diffusivity of the mixed gas is obtained from an equation having, as variables, the radiation coefficients $M_I(T_{H1})$, $M_I(T_{H2})$, and $M_I(T_{H3})$ of the mixed gas, and the temperature $T_I$ of the mixed gas, when the heat producing temperatures of the heater element 61A are $T_{H1}$, $T_{H2}$, and $T_{H3}$. Consequently, the inverse $1/\alpha$ of the thermal diffusivity of the mixed gas is given by Equation (22), below, where $g_1$ is a code indicating a function.

$$1/\alpha = g_1[M_I(T_{H1}), M_I(T_{H2}), M_I(T_{H3}), T_I] \dots (22)$$

Consequently, the inventors discovered that, for a mixed gas comprising a gas A, a gas D, a gas C, and a gas D, wherein the volume fraction $V_A$ of the gas A, the volume fraction $V_B$ of the gas B, the volume fraction $V_C$ of the gas C, and the volume fraction $V_D$ of the gas D, are unknown, it is possible to calculate easily the inverse $1/\alpha$ of the thermal diffusivity of the mixed gas to be measured if Equation (22) is obtained in advance. Specifically, the inverse $1/\alpha$ of the thermal diffusivity of the mixed gas being measured can be obtained uniquely by measuring the radiation coefficients $M_I(T_{H1})$, $M_I(T_{H2})$, and $M_I(T_{H3})$ of the mixed gas when the heat producing temperatures of the heater element 61A are $T_{H1}$, $T_{H2}$, and $T_{H3}$, and then substituting into Equation (22). Note that if the temperature $T_I$ of the mixed gas previous to the heater element 61A being caused to produce heat is stable, then Equation (22) need not include the variable for the temperature $T_I$ of the mixed gas.

Note that the gas components of the mixed gas are not limited to four different components. For example, if the mixed gas comprises n types of gas components, then first an equation having, as variables, the radiation coefficients $M_I(T_{H1})$, $M_I(T_{H2})$, $M_I(T_{H3})$, ... $M_I(T_{Hn-1})$ of the mixed gas when the heat producing temperatures of the heater element 61 A are at at least n-1 different temperatures $T_{H1}$, $T_{H2}$, $T_{H3}$... $T_{Hn-1}$, as given in Equation (23), below, is obtained. Then, the inverse $1/\alpha$ of the thermal diffusivity of the mixed gas being measured is obtained uniquely by measuring the radiation coefficients $M_I(T_{H1})$, $M_I(T_{H2})$, $M_I(T_{H3})$, ..., $M_I(T_{Hn-1})$ of the mixed gas wherein the volume fractions of each of the n types of gas components is unknown when the heat producing temperatures of the heater element 61 A are n -1 different temperatures of $T_{H1}$, $T_{H2}$, $T_{H3}$, ..., $T_{Hn-1}$, and then substituting into Equation (23).

$$1/\alpha = g_1[M_I(T_{H1}), M_I(T_{H2}), M_I(T_{H3}), \dots, M_I(T_{Hn-1}), T_I] \dots (23)$$

Note that if the mixed gas includes an alkane ($C_jH_{2j+2}$) other than methane ($CH_4$) and propane ($C_3H_8$), where j is a natural number, in addition to methane ($CH_4$) and propane ($C_3H_8$), then the alkane ($C_jH_{2j+2}$) other than methane ($CH_4$) and propane ($C_3H_8$) will be seen as a mixture of methane ($CH_4$) and propane ($C_3H_8$), and there will be no effect on the calculation in Equation (23). For example, as indicated in Equations (24) through (27), below, the calculation may be performed using Equation (23) by viewing ethane ($C_2H_6$), butane ($C_4H_{10}$), pentane ($C_5H_{12}$), and hexane ($C_6H_{14}$) as a mixture of methane ($CH_4$) and propane ($C_3H_8$), with each multiplied by the respective specific factors.

$$C_2H_6 = 0.5\ CH_4 + 0.5\ C_3H_8 \dots (24)$$

$$C_4H_{10} = -0.5\ CH_4 + 1.5\ C_3H_8 \dots (25)$$

$$C_5H_{12} = -1.0 \ CH_4 + 2.0 \ C_3H_8 \ldots (26)$$

$$C_6H_{14} = -1.5 \ CH_4 + 2.5 \ C_3H_8 \ldots (27)$$

Consequently, with z as a natural number, if a mixed gas comprising n types of gas components includes, as gas components, z types of alkanes ($C_jH_{2j+2}$) other than methane (($CH_4$) and propane ($C_3H_8$), in addition to methane ($CH4$) and propane ($C_3H_8$), an equation may be calculated having, as variables, the radiation coefficients $M_l$ of the mixed gas at, at least, n - z-1 different heat producing temperatures.

Note that if the types of gas components in the mixed gas used in the calculation in Equation (23) are the same as the types of gas components of the mixed gas to be measured, wherein the inverse $1/\alpha$ of the thermal diffusivity is unknown, then, of course, Equation (23) can be used in calculating the inverse $1/\alpha$ of the thermal diffusivity of gas to be measured. Furthermore, Equation (23) can also be used when the mixed gas to be measured comprises a number of gas components that is less than n, where the gas components of the less than n different types are included in the mixed gas that was used for calculating Equation (3). If, for example, the mixed gas used in calculating Equation (23) included four types of gas components, namely methane ($CH_4$), propane ($C_3H_8$), nitrogen ($N_2$) and carbon dioxide ($CO_2$), then even if the mixed gas to be measured includes only three different components, namely methane ($CH_4$), propane ($C_3H_8$), and carbon dioxide ($CO_2$), without containing the nitrogen ($N_2$), still Equation (23) can be used in calculating the inverse $1/\alpha$ of the thermal diffusivity of the mixed gas to be measured.

Furthermore, if the mixed gas used in calculating Equation (23) included methane ($CH_4$) and propane ($C_3H_8$) as gas components, Equation (23) could still be used even when the mixed gas being measured includes an alkane ($C_jH_{2j+2}$) that was not included in the mixed gas that was used in calculating Equation (23). This is because, as described above, even if the alkane ($C_jH_{2j+2}$) other than methane ($CH_4$) and propane ($C_3H_8$) is viewed as a mixture of methane ($CH_4$) and propane ($C_3H_8$) there is no effect on calculating the inverse $1/\alpha$ of the thermal diffusivity using Equation (23).

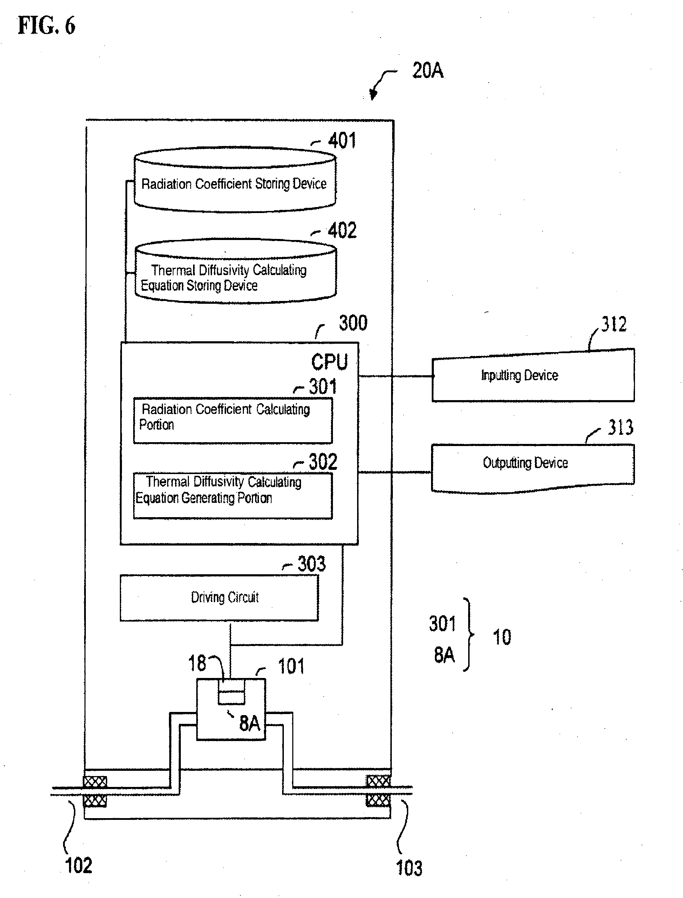

Here the thermal diffusivity calculating equation generating system 20A according to FIG. 6 having a chamber 101 that is filled with a sample mixed gas for which the inverse $1/\alpha$ of the thermal diffusivity is known; and a measuring mechanism 10, illustrated in FIG. 6, for measuring the values of a plurality of radiation coefficients $M_l$ of the sample mixed gas and the temperature $T_l$ of the sample mixed gas, using the heater element 61A, the first temperature measuring element 62A, and the temperature measuring element 63A that are illustrated in FIG. 1 and FIG. 2. Moreover, a gas physical property value measuring system includes a thermal diffusivity calculating equation generating portion 302 for generating a thermal diffusivity calculating equation using the radiation coefficients $M_l$ and the gas temperatures $T_l$ for a plurality of heat producing temperatures of the heater element 61 A as independent variables and the inverse $1/\alpha$ of the thermal diffusivity of the gas as the dependent variable, based on the values of the inverses $1/\alpha$ of known thermal diffusivities of a plurality of sample mixed gases, a plurality of measured values for the plurality of radiation coefficients $M_l$ of the sample mixed gases, and a plurality of measured values for the temperatures $T_l$ of the sample mixed gases. Note that the sample mixed gasses include a plurality of types of gases.

The measuring mechanism 10 comprises the microchip 8A that has been explained using FIG. 1 and FIG. 2, disposed within the chamber 101, into which the sample mixed gasses are introduced. The microchip 8A is disposed within the chamber 101, by means of a thermally insulating member 18. A flow path 102, for feeding the sample mixed gasses into the chamber 101, and a flow path 103, for discharging the sample mixed gasses from the chamber 101, are connected to the chamber 101.

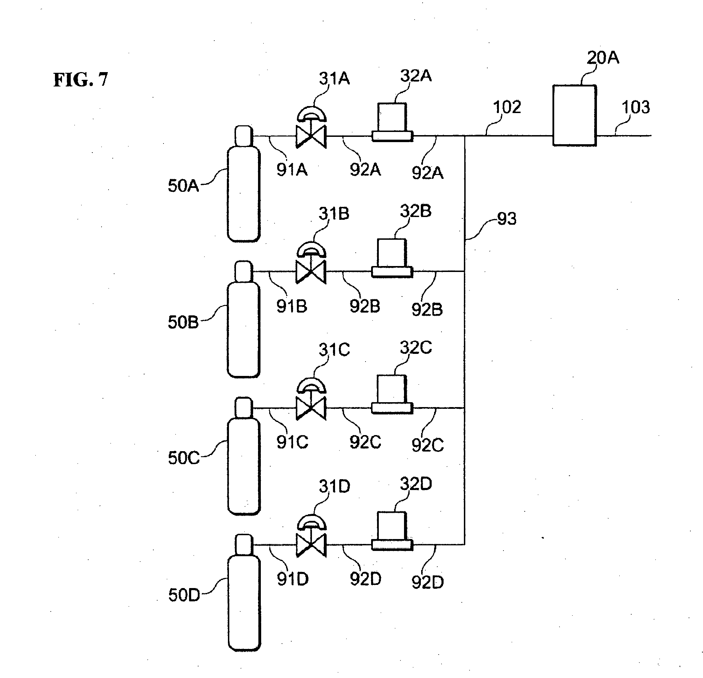

When a four types of sample mixed gases, each having a thermal diffusivity with a different inverse $1/\alpha$, are used, then, as illustrated in FIG. 7, a first gas canister 50A for storing a first sample mixed gas, a second gas canister 50B for storing a second sample mixed gas, a third gas canister 50C for storing a third sample mixed gas, and a fourth gas canister 50D for storing a fourth sample mixed gas are prepared. The first gas canister 50A is connected, through a flow path 91A to a first gas pressure regulating device 31A for providing the first sample mixed gas from the first gas canister 50A, regulated to a low-pressure such as, for example, 0.2 MPa. Additionally, a first flow rate controlling device 32A is connected through a flow path 92A to the first gas pressure regulating device 31A. The first flow rate controlling device 32A controls the rate of flow of the first sample mixed gas that is fed into the thermal diffusivity calculating equation generating system 20A through the flow path 92A and the flow path 102.

A second flow gas pressure regulating device 31 B is connected through a flow path 91B to the second gas canister 50B. Additionally, a second flow rate controlling device 32B is connected through a flow path 92B to the second gas pressure regulating device 31 B. The second flow rate controlling device 32B controls the rate of flow of the second sample mixed gas that is fed into the thermal diffusivity calculating equation generating system 20A through the flow paths 92B, 93, and 102.

A third flow gas pressure regulating device 31C is connected through a flow path 91C to the third gas canister 50C. Additionally, a third flow rate controlling device 32C is connected through a flow path 92C to the third gas pressure regulating device 31C. The third flow rate controlling device 32C controls the rate of flow of the third sample mixed gas that is fed into the thermal diffusivity calculating equation generating system 20A through the flow paths 92C, 93, and 102.

A fourth flow gas pressure regulating device 31 D is connected through a flow path 91 D to the fourth gas canister 50D. Additionally, a fourth flow rate controlling device 32D is connected through a flow path 92D to the fourth gas pressure regulating device 31D. The fourth flow rate controlling device 32D controls the rate of flow of the fourth sample mixed gas that is fed into the thermal diffusivity calculating equation generating system 20A through the flow paths 92D, 93, and 102.

The first through fourth at sample mixed gases are each, for example, natural gas. The first through fourth sample mixed gases each include four different gas components of, for example, methane ($CH_4$), propane ($C_3H_8$), nitrogen ($N_2$), and carbon dioxide ($CO_2$).

After the first sample mixed gas is filled into the chamber 101, the first temperature measuring element 62A and the second temperature measuring element 63A, illustrated in FIG. 1 and FIG. 2, of the microchip 8A detect the temperature $T_I$ of the first sample mixed gas prior to the production of heat by the heater element 61 A. Thereafter, the heater element 61 A applies a driving power $P_H$ from the driving circuit 303 illustrated in FIG. 6. The application of the driving power $P_H$ causes the heater element 61 A, illustrated in FIG. 1 and FIG. 2, to produce heat at, for example, 100°C, 150°C, and 200°C.

After the removal of the first sample mixed gas from the chamber 101 illustrated in FIG. 6, the second through fourth sample mixed gases are filled sequentially into the chamber 101. After the second through fourth sample mixed gases, respectively, are filled into the chamber 101, the microchip 8A detects the respective temperatures of the second through fourth sample mixed gases. Additionally, the heater element 61A, illustrated in FIG. 1 and FIG. 2, to which the driving power $P_H$ is applied, produces heat at 100°C, 150°C, and 200°C.

Note that if there are n types of gas components in each of the sample mixed gases, the heater element 61A, illustrated in FIG. 1 and FIG. 2, is caused to reduce heat at at least n-1 different heat producing temperatures. However, as described above, alkane ($C_jH_{2j+2}$) other than methane (CH4) and propane ($C_3H_8$) can be viewed as a mixture of methane ($CH_4$) and propane ($C_3H_8$). Consequently, with z as a natural number, if a sample mixed gas comprising n types of gas components includes, as gas components, z types of alkanes ($C_jH_{2j+2}$) in addition to methane ($CH_4$) and propane ($C_3H_8$), the heater element 61A is caused to produce heat at n-z-1 different heat producing temperatures.

Moreover, the measuring mechanism 10 illustrated in FIG. 6 is provided with a central calculation processing device (CPU) 300 that includes a radiation coefficient calculating portion 301 that is connected to the microchip 8A. The radiation coefficient calculating portion 301, as indicated in Equation (4), above, divides a first driving power $P_{H1}$ of the heater element 61A of the microchip 8A that is illustrated in FIG. 1 and FIG. 2 by the difference between a first heat producing temperature $T_H$ of the heater element 61 A (for example, 100°C) and the temperature $T_I$ for each of the first through fourth sample mixed gases. Doing so calculates the value for the radiation coefficient $M_I$ for each of the first through fourth sample mixed gases in thermal equilibrium with the heater element 61 A with the heat producing temperature of 100°C.

Additionally, the radiation coefficient calculating portion 301 illustrated in FIG. 6 divides a second driving power $P_{H2}$ of the heater element 61 A of the microchip 8A that is illustrated in FIG. 1 and FIG. 2 by the difference between a second heat producing temperature $T_H$ of the heater element 61 A (for example, 150°C) and the temperature $T_I$ for each of the first through fourth sample mixed gases. Doing so calculates the value for the radiation coefficient $M_I$ for each of the first through fourth sample mixed gases in thermal equilibrium with the heater element 61A with the heat producing temperature of 150°C.

Furthermore, the radiation coefficient calculating portion 301 illustrated in FIG. 6 divides a third driving power $P_{H3}$ of the heater element 61A of the microchip 8A that is illustrated in FIG. 1 and FIG. 2 by the difference between a third heat producing temperature $T_H$ of the heater element 61A (for example, 200°C) and the temperature $T_I$ for each of the first through fourth sample mixed gases. Doing so calculates the value for the radiation coefficient $M_I$ for each of the first through fourth sample mixed gases in thermal equilibrium with the heater element 61A with the heat producing temperature of 200°C.

The thermal diffusivity calculating equation generating system 20 illustrated in FIG. 6 is further provided with a radiation coefficient storing device 401, connected to the CPU 300. The radiation coefficient calculating portion 301 stores, in the radiation coefficient storing device 401, the measured gas temperature values $T_I$ and the calculated values for the radiation coefficients $M_I$.

The thermal diffusivity calculating equation generating portion 302 collects the respective known inverse $1/\alpha$ values for the thermal diffusivities for the first through fourth sample mixed gases, for example, the plurality of measured values for the radiation coefficients $M_I$ for when the heat producing temperature of the heater element 61A was 100°C, the plurality of measured values for the radiation coefficients $M_I$ for when the heat producing temperature of the heater element 61 A was 150°C, and the plurality of measured values for the radiation coefficients $M_I$ for when the heat producing temperature of the heater element 61 A was 200°C. Based on the inverse $1/\alpha$ values for the thermal diffusivities and the plurality of radiation coefficients $M_I$ that have been collected, the thermal diffusivity calculating equation generating portion 302 then, through multivariate analysis, calculates a thermal diffusivity calculating equation having, as independent variables, the radiation coefficient $M_I$ when the heat producing temperature of the heater element 61A is 100°C, the radiation coefficient $M_I$ when the heat producing temperature of the heater element 61A is 150°C, the radiation coefficient $M_I$ when the heat producing temperature of the heater element 61 A is 200°C, and the gas temperature $T_I$, and having, as the dependent variable, the inverse $1/\alpha$ of the thermal diffusivity.

Note that "multivariate analysis" includes support vector analysis disclosed in A. J. Smola and B. Scholkopf (eds.), "A Tutorial on Support Vector Regression" (NeuroCOLT Technical Report NC-TR-98-030), multiple linear regression analysis, the Fuzzy Quantification Theory Type II, disclosed in Japanese Unexamined Patent Application Publication H5-141999, and the like. Additionally, the radiation coefficient calculating portion 301 and the thermal diffusivity calculating equation generating portion 302 are included in the CPU 300.

The thermal diffusivity calculating equation generating system 20A is further provided with a thermal diffusivity calculating equation storing device 402, connected to the CPU 300. The thermal diffusivity calculating equation storing device 402 stores the thermal diffusivity calculating equation generated by the thermal diffusivity calculating equation generating portion 302. An inputting device 312 and an outputting device 313 are also connected to the CPU 300. A keyboard, a pointing device such as a mouse, or the like, may be used as the inputting device 312. An image displaying device such as a liquid crystal display or a monitor, or a printer, or the like, may be used as the outputting device 313.

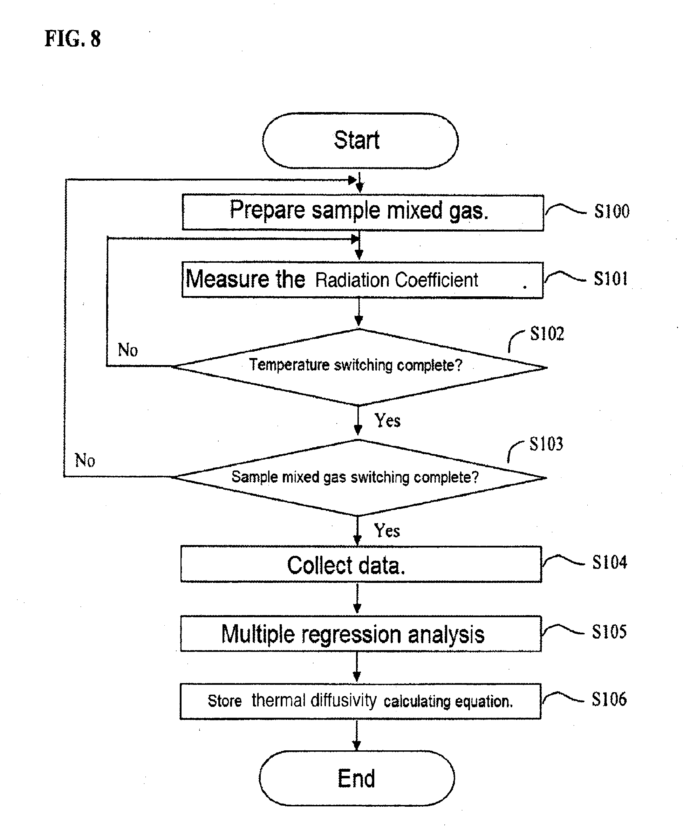

The flowchart in FIG. 8 will be used next to explain a method for generating a thermal diffusivity calculating equation. Note that in the example below a case will be explained wherein the first through fourth sample mixed gases are prepared and the heater element 61 A of the microchip 8A illustrated in FIG. 6 is caused to produce heat at 100°C, 150°C, and 200°C.

(a) In Step S100, the valve for the first flow rate controlling device 32A is opened while leaving the second through fourth flow rate controlling devices 32B through 32D, illustrated in FIG. 7, closed, to introduce the first sample mixed gas into the chamber 101 illustrated in FIG. 6. In Step S101, the first temperature measuring element 62A and the second temperature measuring element 63A detect the temperature $T_I$ of the first sample mixed gas. Thereafter, the driving circuit 303 illustrated in FIG. 6 applies a first driving power $P_{H1}$ to the heater element 61A, illustrated in FIG. 1 and FIG. 2, of the microchip 8A, to cause the heater element 61A to produce heat at 100°C. Moreover, the radiation coefficient calculating portion 301, illustrated in FIG. 6, calculates the value of the radiation coefficient $M_I$ of the first sample mixed gas when the heat producing temperature of the heater element 61A is 100°C. Thereafter, the radiation coefficient calculating portion 301 stores, in the radiation coefficient storing device 401, the value for the temperature $T_I$ of the first sample mixed gas and the value for the radiation coefficient $M_I$ for when the heat producing temperature of the heater element 61 A is 100°C. Thereafter, the driving circuit 303 stops the provision of the first driving power $P_{H1}$ to the heater element 61 A.

(b) In Step S102, the driving circuit 303 evaluates whether or not the switching of the heat producing temperatures of the heater element 61A, illustrated in FIG. 1 and FIG. 2, has been completed. If the switching to the heat producing temperature of 150°C and to the heat producing temperature of 200°C has not been completed, then processing returns to Step S101, and the driving circuit 303, illustrated in FIG. 6, causes the heater element 61A, illustrated in FIG. 1 and FIG. 2, to produce heat at 150°C. The radiation coefficient calculating portion 301, illustrated in FIG. 6, calculates, and stores in the radiation coefficient storing device 401, the value of the radiation coefficient $M_I$ of the first sample mixed gas when the heat producing temperature of the heater element 61A is 150°C. Thereafter, the driving circuit 303 stops the provision of the driving power to the heater element 61A.

(c) In Step S102, whether or not the switching of the heat producing temperatures of the heater element 61A, illustrated in FIG. 1 and FIG. 2, has been completed is evaluated again. If the switching to the heat producing temperature of 200°C has not been completed, then processing returns to Step S101, and the driving circuit 303, illustrated in FIG. 6, causes the heater element 61A, illustrated in FIG. 1 and FIG. 2, to produce heat at 200°C. The radiation coefficient calculating portion 301, illustrated in FIG. 6, calculates, and stores in the radiation coefficient storing device 401, the value of the radiation coefficient $M_I$ of the first sample mixed gas when the heat producing temperature of the heater element 61A is 200°C. Thereafter, the driving circuit 303 stops the provision of the driving power to the heater element 61 A.

(d) If the switching of the heat producing temperature of the heater element 61 A has been completed, then processing advances from Step S102 to Step S103. In Step S103, an evaluation is performed as to whether or not the switching of the sample mixed gases has been completed. If the switching to the second through fourth sample mixed gases has not been completed, processing returns to Step S100. In Step S100, the valve for the first flow rate controlling device 32A is closed and the valve for the second flow rate controlling device 32B is opened while leaving the third and fourth flow rate controlling devices 32C through 32D, illustrated in FIG. 7, closed, to introduce the second sample mixed gas into the chamber 101 illustrated in FIG. 6.

(e) The loop of Step S101 through Step S102 is repeated in the same manner as for the first sample mixed gas. The value for the temperature $T_I$ of the second sample mixed gas is measured first. Additionally, the radiation coefficient calculating portion 301 calculates the value for the radiation coefficient $M_I$ for the second sample mixed gas when the heat producing temperature of the heater element 61 A is 100°C, the value for the radiation coefficient $M_I$ for the second sample mixed gas when the heat producing temperature of the heater element 61 A is 150°C, and the value for the radiation coefficient $M_I$ for the second sample mixed gas when the heat producing temperature of the heater element 61 A is 200°C. Moreover, the radiation coefficient calculating portion 301 stores, in the radiation coefficient storing device 401, the value for the temperature $T_I$ measured for the second sample mixed gas and the calculated values for the radiation coefficients $M_I$.

(f) Thereafter, the loop of Step S100 through Step S103 is repeated. Doing so stores, in the radiation coefficient storing device 401, the value $T_I$ for the temperature of the third sample mixed gas, the values of the respective radiation coefficients $M_I$ for the third sample mixed gas when the heat producing temperatures of the heater element 61A are 100°C, 150°C, and 200°C, the value $T_I$ for the temperature of the fourth sample mixed gas, and the values of the respective radiation coefficients $M_I$ for the fourth sample mixed gas when the heat producing temperatures of the heater element 61A are 100°C, 150°C, and 200°C.

(g) In Step S104, the known value for the inverse $1/\alpha$ of the thermal diffusivity of the first sample mixed gas, the known value for the inverse $1/\alpha$ of the thermal diffusivity of the second sample mixed gas, the known value for the inverse $1/\alpha$ of the thermal diffusivity of the third sample mixed gas, and the known value for the inverse $1/\alpha$ of the thermal diffusivity of the fourth sample mixed gas are inputted from the inputting device 312 into the thermal diffusivity calculating equation generating portion 302. Additionally, the thermal diffusivity calculating equation generating portion 302 reads in, from the radiation coefficient storing device 401, the values for the temperatures $T_I$ of the first through fourth sample mixed gases and the values for the radiation coefficients $M_I$ for the first through fourth sample mixed gases when the heat producing temperatures of the heater element 61A were 100°C, 150°C, and 200°C.

(h) In Step S105, the thermal diffusivity calculating equation generating portion 302 performs multiple linear regression analysis based on the values for the inverses $1/\alpha$ of the thermal diffusivities of the first through fourth sample mixed gases, the values for the temperatures $T_I$ of the first through fourth sample mixed gases, and the values for the radiation coefficients $M_I$ for the first through fourth sample mixed gases when the heat producing temperatures of the heater element 61A were 100°C, 150°C, and 200°C. Based on the multiple linear analysis, the thermal diffusivity calculating equation generating portion 302 calculates a thermal diffusivity calculating equation having, as independent variables, the radiation coefficient $M_I$ when the heat producing temperature of the heater element 61 A is 100°C, the radiation coefficient $M_I$ when the heat producing temperature of the heater element 61 A is 150°C, the radiation coefficient $M_I$ when the heat producing temperature of the heater element 61 A is 200°C, and the gas temperature $T_I$, and having, as the dependent variable, the inverse $1/\alpha$ of the thermal diffusivity. Thereafter, in Step S106, the thermal diffusivity calculating equation generating portion 302 stores, into the thermal diffusivity calculating equation storing device 402, the thermal diffusivity calculating equation that has been generated, to complete the method for generating the thermal diffusivity calculating equation.

As described above, the method for generating a thermal diffusivity calculating equation as set forth enables the generation of a thermal diffusivity calculating equation that calculates a unique value for the thermal diffusivity $\alpha$ of a mixed gas being measured.

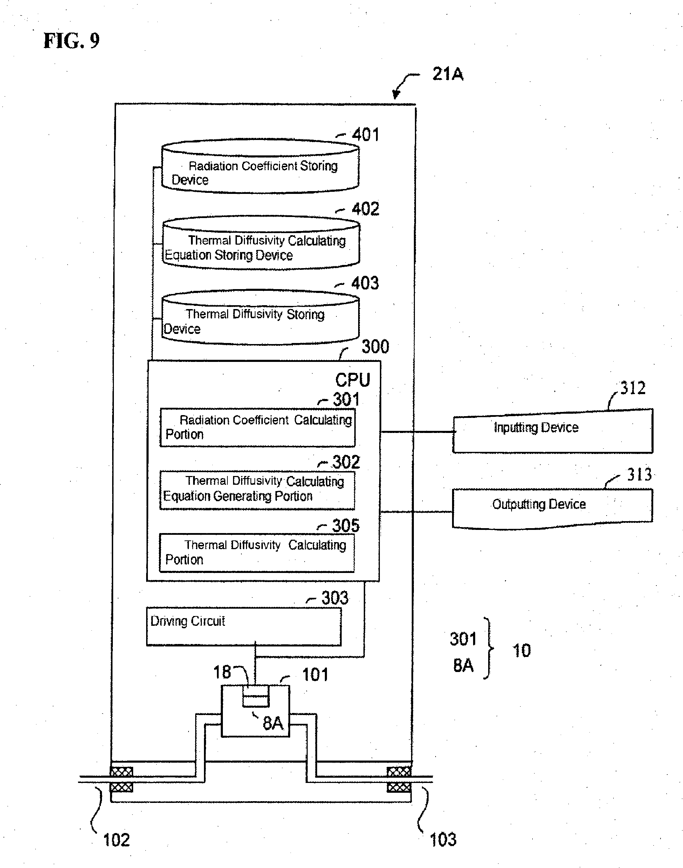

As illustrated in FIG. 9, a thermal diffusivity measuring system 21A includes a chamber 101 that is filled with a mixed gas to be measured for which the inverse $1/\alpha$ of the thermal diffusivity is unknown; and a measuring mechanism 10, illustrated in FIG. 9, for measuring the values of a plurality of radiation coefficients $M_I$ of the mixed gas being measured and the temperature TI of the mixed gas being measured, using the heater element 61 A, the first temperature measuring element 62A, and the second temperature measuring element 63A that are illustrated in FIG. 1 and FIG. 2. The thermal diffusivity measuring system 21A further has a thermal diffusivity calculating equation storing device 402 for storing a thermal diffusivity calculating equation having, as independent variables, the temperature $T_I$ of the gas and the radiation coefficients $M_I$ for the gas at a plurality of heat producing temperatures of the heater element 61 A, and having, as the independent variable, the inverse $1/\alpha$ of the thermal diffusivity; and a thermal diffusivity calculating portion 305 for calculating the value of the inverse $1/\alpha$ of the thermal diffusivity of the mixed gas being measured, by substituting the value for the temperature $T_I$ of the mixed gas being measured and the radiation coefficients $M_I$, for the mixed gas being measured, at a plurality of heat producing temperatures of the heater element 61 A into the independent variables of the temperature $T_I$ of the gas and the radiation coefficients $M_I$ for the gas at a plurality of heat producing temperatures of the heater element 61 A in the thermal diffusivity calculating equation.

The thermal diffusivity calculating equation storing device 402 stores the thermal diffusivity calculating equation. As an example, a case will be explained here wherein natural gases, including methane ($CH_4$), propane ($C_3H_8$), nitrogen

($N_2$), and carbon dioxide ($CO_2$) were used as the sample mixed gases for generating the thermal diffusivity calculating equation. Additionally, the thermal diffusivity calculating equation uses, as independent variables, the radiation coefficient $M_I$ of the gas when the heat producing temperature of the heater element 61A is 100°C, the radiation coefficient $M_I$ of the gas when the heat producing temperature of the heater element 61 A is 150°C, the radiation coefficient $M_I$ of the gas when the heat producing temperature of the heater element 61A is 200°C, and the temperature $T_I$ of the gas.

In this example, a natural gas that includes, in unknown volume fractions, methane ($CH_4$), propane ($C_3H_8$), nitrogen ($N_2$), and carbon dioxide ($CO_2$) and for which the inverse $1/\alpha$ of the thermal diffusivity is unknown, is introduced into the chamber 101 as the mixed gas to be measured. The first temperature measuring element 62A and the second temperature measuring element 63A, illustrated in FIG. 1 and FIG. 2, of the microchip 8A detect the temperature $T_I$ of the mixed gas to be measured, prior to the production of heat by the heater element 61A. Thereafter, the heater element 61A applies a driving power $P_H$ from the driving circuit 303 illustrated in FIG. 9. The application of the driving power $P_H$ causes the heater element 61A, illustrated in FIG. 1 and FIG. 2, to produce heat at 100°C, 150°C, and 200°C.

The radiation coefficient calculating portion 301, illustrated in FIG. 9, follows the method explained by Equations (1) to (4), above, to calculate the value of the radiation coefficient $M_I$ of the mixed gas being measured when at thermal equilibrium with the heater element 61A producing heat at the heat producing temperature of 100°C. Moreover, the radiation coefficient calculating portion 301 calculates the value of the radiation coefficient $M_I$ of the mixed gas being measured when at thermal equilibrium with the heater element 61A producing heat at the heat producing temperature of 150°C and the value of the radiation coefficient $M_I$ of the mixed gas being measured when at thermal equilibrium with the heater element 61A producing heat at the heat producing temperature of 200°C. The radiation coefficient calculating portion 301 stores, in the radiation coefficient storing device 401, the gas temperature value $T_I$ of the mixed gas being measured and the calculated values for the radiation coefficients $M_I$.

The thermal diffusivity calculating portion 305 substitutes the values of the radiation coefficients $M_I$ and the temperature $T_I$ of the mixed gas being measured into the independent variables of the radiation coefficients $M_I$ for the gas and the temperature $T_I$ of the gas in the thermal diffusivity calculating equation, to calculate the value of the inverse $1/\alpha$ of the thermal diffusivity of the mixed gas being measured. The thermal diffusivity calculating portion 305 may further calculate the value of the thermal diffusivity $\alpha$ from the value of the inverse $1/\alpha$ of the thermal diffusivity. A thermal diffusivity storing device 403 is also connected to the CPU 300. The thermal diffusivity storing device 403 stores the value of the inverse $1/\alpha$ of the thermal diffusivity of the mixed gas being measured, calculated by the thermal diffusivity calculating portion 305. The requirements for the other structural elements in the thermal diffusivity measuring system 21 A as set forth here are identical to those in the thermal diffusivity calculating equation generating system 20A set forth above, so explanations thereof are omitted.

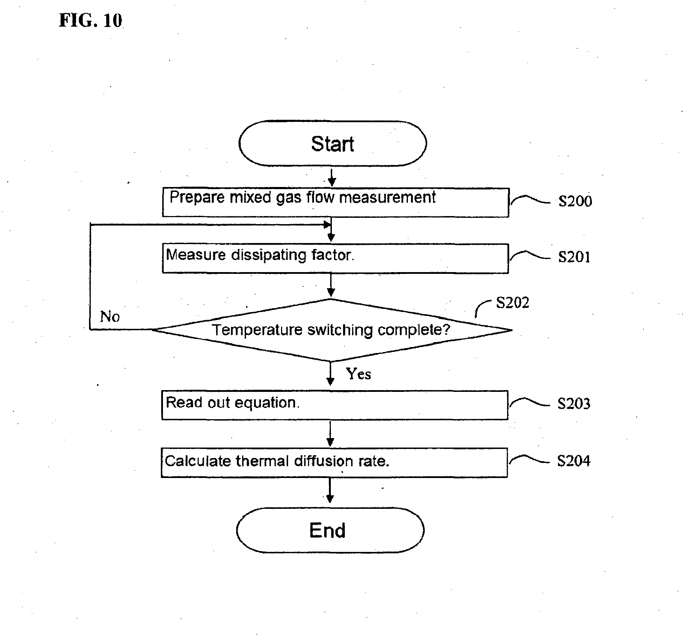

The flowchart in FIG. 10 will be used next to explain a method for measuring a thermal diffusivity. Note that in the example below a case will be explained the heater element 61A of the microchip 8A illustrated in FIG. 9 is caused to produce heat at 100°C, 150°C, and 200°C.

(a) In Step S200, the mixed gas to be measured is introduced into the chamber 101 illustrated in FIG. 9. Next, in Step S201, The first temperature measuring element 62a and the second temperature measuring element 63A, illustrated in FIG. 1 and FIG. 2, of the microchip 8A detect the temperature $T_I$ of the mixed gas to be measured, prior to the production of heat by the heater element 61 A. Thereafter, the driving circuit 303 illustrated in FIG. 9 applies a first driving power $P_{H1}$ to the heater element 61 A, illustrated in FIG. 1 and FIG. 2, of the microchip 8A, to cause the heater element 61 A to produce heat at 100°C. The radiation coefficient calculating portion 301 illustrated in FIG. 9 calculates the radiation coefficient $M_I$ of the mixed gas being measured, at the heat producing temperature of 100°C. Moreover, the radiation coefficient calculating portion 301 stores, in the radiation coefficient storing device 401, the value for the temperature $T_I$ of the mixed gas being measured and the value for the radiation coefficient $M_I$ of the mixed gas being measured for when the heat producing temperature of the heater element 61A is 100°C. Thereafter, the driving circuit 303 stops the provision of the first driving power $P_{H1}$ to the heater element 61 A.

(b) In Step S202, the driving circuit 303, illustrated in FIG. 9, evaluates whether or not the switching of the heat producing temperatures of the heater element 61A, illustrated in FIG. 1 and FIG. 2, has been completed. If the switching to the heat producing temperature of 150°C and to the heat producing temperature of 200°C has not been completed, then processing returns to Step S201, and the driving circuit 303, illustrated in FIG. 9, causes the heater element 61A, illustrated in FIG. 1 and FIG. 2, to produce heat at 150°C. The radiation coefficient calculating portion 301, illustrated in FIG. 9, calculates, and stores in the radiation coefficient storing device 401, the value of the radiation coefficient $M_I$ of the first sample mixed gas being measured when the heat producing temperature of the heater element 61 A is 150°C. Thereafter, the driving circuit 303 stops the provision of the driving power to the heater element 61 A.

(c) In Step S202, whether or not the switching of the heat producing temperatures of the heater element 61 A, illustrated in FIG. 1 and FIG. 2, has been completed is evaluated again. If the switching to the heat producing temperature of 200°C has not been completed, then processing returns to Step S201, and the driving circuit 303,

illustrated in FIG. 9, causes the heater element 61 A, illustrated in FIG. 1 and FIG. 2, to produce heat at 200°C. The radiation coefficient calculating portion 301, illustrated in FIG. 9, calculates, and stores in the radiation coefficient storing device 401, the value of the radiation coefficient $M_I$ of the first sample mixed gas being measured when the heat producing temperature of the heater element 61 A is 200°C. Thereafter, the driving circuit 303 stops the provision of the driving power to the heater element 61A.

(d) If the switching of the heat producing temperature of the heater element 61A has been completed, then processing advances from Step S202 to Step S203. In Step S203, the thermal diffusivity calculating portion 305 reads in, from the thermal diffusivity calculating equation storing device 402, the thermal diffusivity calculating equation that uses, as independent variables, the value for the temperature $T_I$ of the gas and the values for the radiation coefficients $M_I$ when the heat producing temperatures of the heater element 61 A are 100°C, 150°C, and 200°C. In addition, the thermal diffusivity calculating portion 305 region, from the radiation coefficient storing device 401, the value for the temperature $T_I$ of the mixed gas being measured and the values for the radiation coefficients $M_I$ of the mixed gas being measured for when the heat producing temperatures of the heater element 61A are 100°C, 150°C, and 200°C.

(e) In Step S204, the thermal diffusivity calculating portion 305 substitutes the value of the temperature $T_I$ of the mixed gas being measured into the independent variable of the temperature $T_I$ in the thermal diffusivity calculating equation, and substitutes the value of the radiation coefficients $M_I$ of the mixed gas being measured into the independent variable of the radiation coefficients $M_I$ in the thermal diffusivity calculating equation, to calculate the value of the inverse $1/\alpha$ of the thermal diffusivity of the mixed gas being measured. Thereafter, the thermal diffusivity calculating portion 305 stores, into the thermal diffusivity storing device 403, the value calculated for the thermal diffusivity $\alpha$, to complete the method for measuring the thermal diffusivity as set forth herein.

The method for measuring the thermal diffusivity as set forth in the example described above enables the measurement of the thermal diffusivity $\alpha$ of a mixed gas that is a mixed gas to be measured, from measured values for the radiation coefficients $M_I$ of the mixed gas to be measured, without using costly gas chromatography equipment or speed-of-sound sensors.

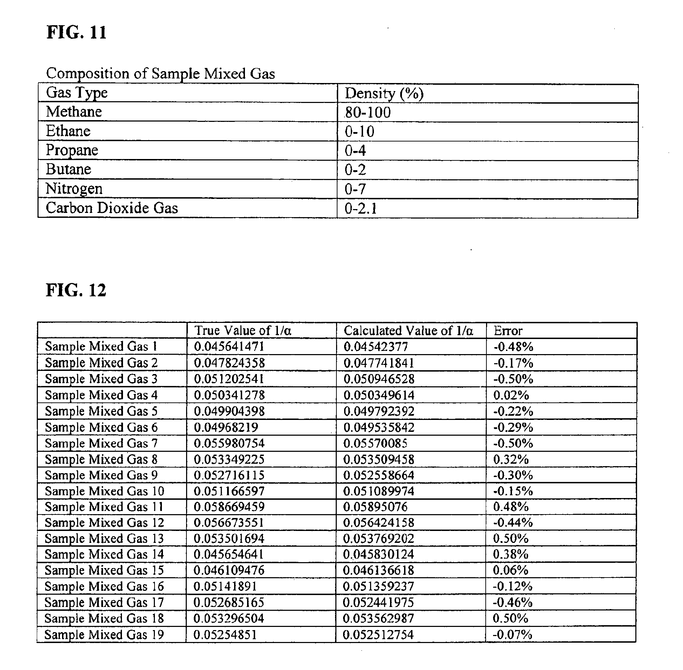

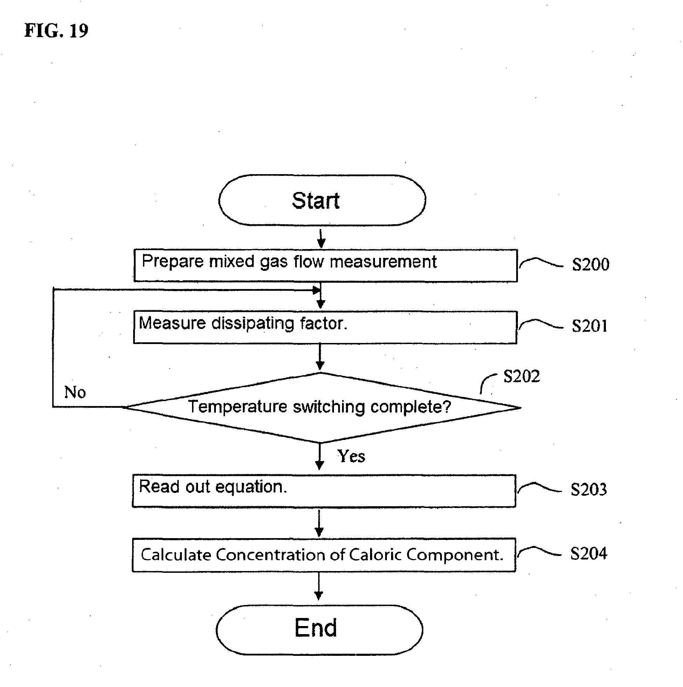

First, as illustrated in FIG. 11, 19 different sample mixed gases, having mutually differing volume densities of ethane, propane, butane, nitrogen, and carbon dioxide, were prepared. Following this, the values of the radiation coefficient $M_I$ for each of the 19 mixed gas samples are measured when the heater element has been caused to produce heat at a plurality of temperatures. Thereafter, support vector regression, based on the known values for the inverses $1/\alpha$ of the thermal diffusivities of the 19 sample mixed gases and the plurality of measured values for the radiation coefficients $M_I$, was used to generate an equation for calculating the inverse $1/\alpha$ of the thermal diffusivity using the radiation coefficients $M_I$ as independent variables and the inverse $1/\alpha$ of the thermal diffusivity as the dependent variable.

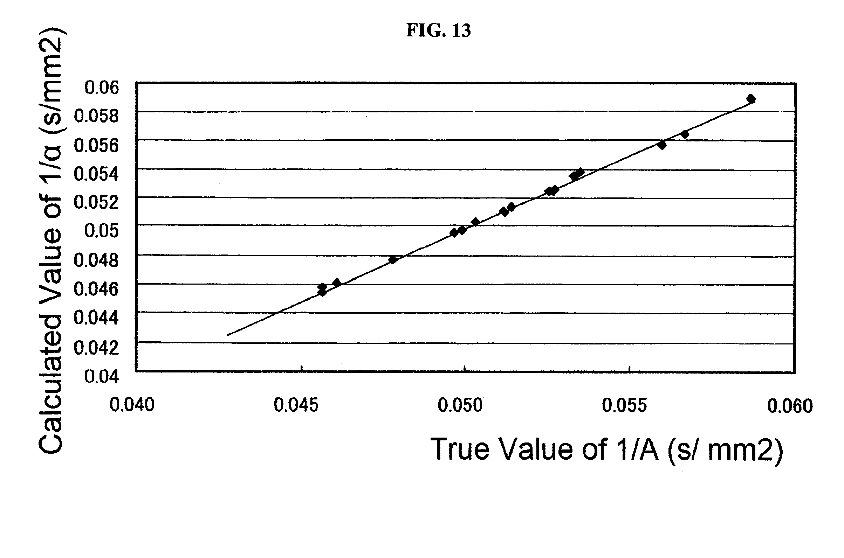

Following this, the equation for calculating the inverse $1/\alpha$ of the thermal diffusivity was used to calculate calculated values for the inverses $1I\alpha$ of the thermal diffusivities for the 19 sample mixed gases, and the true values for the inverses $1/\alpha$ of the thermal diffusivities for the 19 sample mixed gases were compared. When this was done, the error in the calculated values, relative to the true values for the inverses $1/\alpha$ of the thermal diffusivities, as illustrated in FIG. 12 and FIG. 13, where within -0.5% and +0.5%. The ability to calculate accurately the inverse $1/\alpha$ of a thermal diffusivity from measured values for radiation coefficients $M_I$, through the use of a thermal diffusivity calculating equation that has the radiation coefficients $M_I$ as the independent variables and the inverse $1/\alpha$ of a thermal diffusivity as the dependent variable was thus demonstrated.

Through Equation (1), above, the temperature $T_H$ of the heater element 61A, illustrated in FIG. 1 and FIG. 2, is given by Equation (28), below:

$$T_H = (1 / 2\beta) \text{ x } [-\alpha + [\alpha^2 - 4\beta (1-R_H/R_{H\_STD})]^{1/2}] + T_{H\_STD} \dots (28)$$

Consequently, the difference $\Delta T_H$ between the heat producing temperature $T_H$ of the heater element 61A and the temperature $T_I$ of the ambient gas is given by Equation (29), below:

$$\Delta T_H = (1 / 2\beta) \text{ x } [-\alpha + [\alpha^2 - 4\beta (1-R_H/R_{H\_STD})]^{1/2}] + T_{H\_STD} - T_I \dots (29)$$

The temperature of the first temperature measuring element 62A, when power is applied to the extent that it does not produce heat itself, will approximate the ambient temperature $T_I$. The relationship between the temperature $T_I$ of the first temperature measuring element 62A and the resistance value $R_I$ of the first temperature measuring element 62A is given by Equation (30), below:

$$R_I = R_{I\_STD} \times [1 + \alpha(T_I - T_{I\_STD}) + \beta(T_I - T_{I\_STD})^2] \dots (30)$$

Here $T_{I\_STD}$ indicates a standard temperature for the first temperature measuring element 62A of, for example, 20°C. $R_{I\_STD}$ indicates a resistance value that is measured in advance for the first temperature measuring element 62A at the standard temperature of $T_{I\_STD}$. Through Equation (30), above, the temperature $T_I$ of the first temperature measuring element 62A is given by Equation (31), below:

$$T_I = (1/2\beta) \times [-\alpha + [\alpha^2 - 4\beta_I (1 - R_I/R_{I\_STD})]^{1/2}] + T_{I\_STD} \dots (31)$$

Consequently, the radiation coefficient $M_I$ of the ambient gas is also given by Equation (32), below.

$$M_I = P_H / \Delta T_H$$
$$= P_H / [(1/2\beta)[-\alpha + [\alpha^2 - 4\beta(1 - R_H/R_{H\_STD})]^{1/2}]$$
$$+ T_{H\_STD} - (1/2\beta) [-\alpha + [\alpha^2 - 4\beta(1 - R_I/R_{I\_STD})]^{1/2}] - T_{I\_STD}] \dots (32)$$

Because the current $I_H$ flowing in the heater element 61A and the driving power $P_H$ or the voltage $V_H$ can be measured, the resistance $R_H$ of the heater element 61A can be calculated from Equation (2) through Equation (3), above. Similarly, it is also possible to calculate the resistance value $R_I$ of the first temperature measuring element 62A.

As is illustrated in Equation (22), above, the inverse $1/\alpha$ of the thermal diffusivity of the mixed gas that comprises the four types of gas components is obtained from an equation having, as variables, the radiation coefficients $M_I(T_{H1})$, $M_I(T_{H2})$, and $M_I(T_{H3})$ of the mixed gas when the heat producing temperatures of the heater element 61A are $T_{H1}$, $T_{H2}$, and $T_{H3}$. Additionally, the radiation coefficient $M_I$ of the mixed gas, as indicated in Equation (32), above, depends on the resistance value $R_H$ of the heater element 61A and on the resistance value $R_I$ of the first temperature measuring element 62A. Given this, the inventors discovered that the inverse $1/\alpha$ of the thermal diffusivity of a mixed gas can also be obtained from an equation having, as variables, the resistances $R_{H1}(T_{H1})$, $R_{H2}(T_{H2})$, and $R_{H3}(T_{H3})$ of the heater element 61 A when the temperatures of the heater element 61A are $T_{H1}$, $T_{H2}$, and $T_{H3}$, and the resistance value $R_I$ of the first temperature measuring element 62A that is in contact with the mixed gas, as shown in Equation (33), below.

$$1/\alpha = g_2[R_{H1}(T_{H1}), R_{H2}(T_{H2}), R_{H3}(T_{H3}), R_I] \dots (33)$$

Given this, the inverse $1/\alpha$ of the thermal diffusivity of a mixed gas can be calculated uniquely by measuring the resistances $R_{H1}(T_{H1})$, $R_{H2}(T_{H2})$, and $R_{H3}(T_{H3})$ of the heater element 61 A when the heat producing temperatures of the heater element 61 A, which is in contact with the mixed gas, are $T_{H1}$, $T_{H2}$, and $T_{H3}$, and the resistance value $R_I$ of the first temperature measuring element 62A that is in contact with the mixed gas prior to the heat production by the heater element 61A, for example, and then substituting into Equation (33).

Furthermore, the inverse $1/\alpha$ of the thermal diffusivity of a mixed gas can also be obtained from an equation having, as variables, the currents $I_{H1}(T_{H1})$, $I_{H2}(T_{H2})$, and $I_{H3}(T_{H3})$ flowing in the heater element 61A when the temperatures of the heater element 61A are $T_{H1}$, $T_{H2}$, and $T_{H3}$, and the current $I_I$ flowing in the first temperature measuring element 62A that is in contact with the mixed gas, as shown in Equation (34), below.

$$1/\alpha = g_3[I_{H1}(T_{H1}), I_{H2}(T_{H2}), I_{H3}(T_{H3}), I_I] \dots (34)$$

Conversely, the inverse $1/\alpha$ of the thermal diffusivity of a mixed gas can also be obtained from an equation having, as variables, the voltages $V_{H1}(T_{H1})$, $V_{H2}(T_{H2})$, and $V_{H3}(T_{H3})$ of the heater element 61 A when the temperatures of the heater element 61A are $T_{H1}$, $T_{H2}$, and $T_{H3}$, and the voltage $V_I$ of the first temperature measuring element 62A that is in contact with the mixed gas, as shown in Equation (35), below.

$$1/\alpha = g_4[V_{H1}(T_{H1}), V_{H2}(T_{H2}), V_{H3}(T_{H3}), V_I] \dots (35)$$

Conversely, the inverse $1/\alpha$ of the thermal diffusivity of a mixed gas can also be obtained from an equation having, as variables, the output voltages $AD_{H1}(T_{H1})$, $AD_{H2}(T_{H2})$, and $AD_{H3}(T_{H3})$ of analog-digital converting circuits (hereinafter termed "A/D converting circuits") that are connected to the heater element 61A when the temperatures of the heater element 61A are $T_{H1}$, $T_{H2}$, and $T_{H3}$, and the output voltage $AD_I$ of an A/D converting circuit that is connected to the first temperature measuring element 62A that is in contact with the mixed gas, as shown in Equation (36), below.

$$1/\alpha = g_5[AD_{H1}(T_{H1}), AD_{H2}(T_{H2}), AD_{H3}(T_{H3}), AD_I] \ \dots (36)$$

Consequently, the inverse $1/\alpha$ of the thermal diffusivity of a mixed gas can also be obtained from an equation having, as variables, electric signals $S_{H1}(T_{H1})$, $S_{H2}(T_{H2})$, and $S_{H3}(T_{H3})$ from the heater element 61 A when the heat producing temperatures of the heater element 61 A are $T_{H1}$, $T_{H2}$, and $T_{H3}$, and an electric signal $S_I$ from the first temperature measuring element 62A that is in contact with the mixed gas, as shown in Equation (37), below.

$$1/\alpha = g_6[S_{H1}(T_{H1}), S_{H2}(T_{H2}), S_{H3}(T_{H3}), S_I] \dots (37)$$

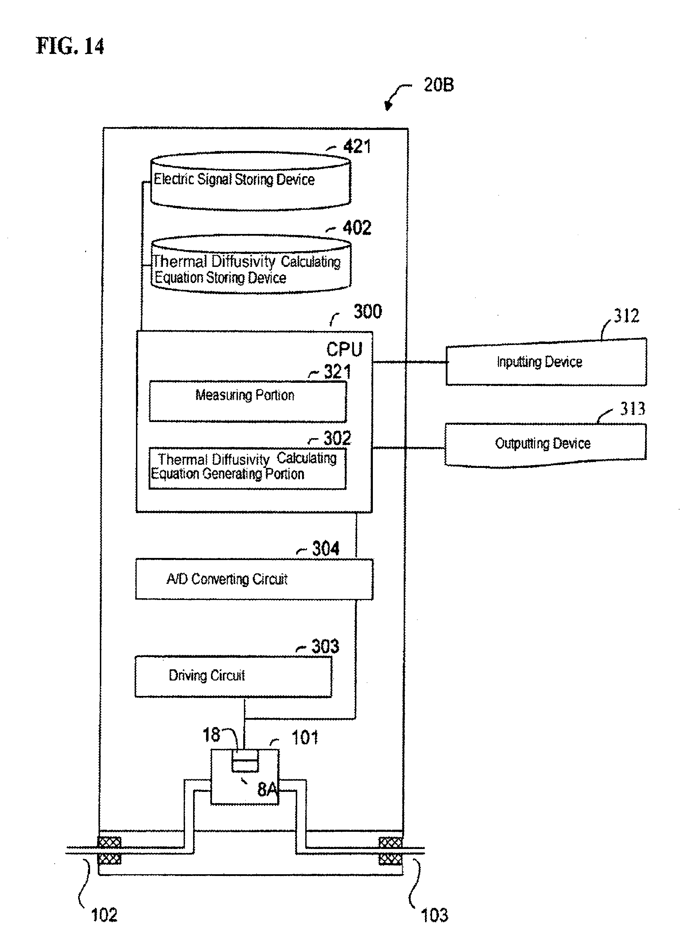

Here a thermal diffusivity calculating equation generating system 20B as illustrated in FIG. 14 includes a measuring portion 321, illustrated in FIG. 14, for measuring values of electric signals $S_I$ from the first temperature measuring element 62A, illustrated in FIG. 1 and FIG. 2, that are dependent on the respective temperatures $T_I$ of the plurality of sample mixed gases, and the values of electric signals $S_H$ from the heater element 61A at each of the plurality of heat producing temperatures $T_H$; and a thermal diffusivity calculating equation generating portion 302 for generating a thermal diffusivity calculating equation based on known values for inverses $1/\alpha$ of thermal diffusivities of a plurality of sample mixed gases, the plurality of measured values for the electric signals $S_I$ from the first temperature measuring element 62A, and the plurality of measured values for the electric signals from the heater element 61 A at the plurality of heat producing temperatures, having an electric signal $S_I$ from the first temperature measuring element 62A and the electric signals $S_H$ from the heater element 61 A at the plurality of heat producing temperatures $T_H$ as independent variables, and having the inverse $1/\alpha$ of the thermal diffusivity as the dependent variable.

After a first sample mixed gas is filled into the chamber 101, the first temperature measuring element 62A of the microchip 8A, illustrated in FIG. 1 and FIG. 2, outputs an electric signal $S_I$ that is dependent on the temperature of the first sample mixed gas. Following this, the heater element 61 A applies driving powers $P_{H1}$, $P_{H2}$, and $P_{H3}$ from the driving circuit 303 illustrated in FIG. 14. When the driving powers $P_{H1}$, $P_{H2}$, and $P_{H3}$ are applied, the heater element 61A that is in contact with the first sample mixed gas produces heat at a temperature $T_{H1}$ of 100°C, a temperature $T_{H2}$ of 150°C, and a temperature $T_{H3}$ of 200°C, for example, to output an electric signal $S_{H1}$ $(T_{H1})$ at the heat producing temperature $T_{H1}$, an electric signal $S_{H2}$ $(T_{H2})$ at the heat producing temperature $T_{H2}$, and an electric signal $S_{H3}$ $(T_{H3})$ at the heat producing temperature $T_{H3}$.

After the removal of the first sample mixed gas from the chamber 101, the second through fourth sample mixed gases are filled sequentially into the chamber 101. After the second sample mixed gas is filled into the chamber 101, the first temperature measuring element 62A of the microchip 8A, illustrated in FIG. 1 and FIG. 2, outputs an electric signal $S_I$ that is dependent on the temperature of the second sample mixed gas. Following this, the heater element 61A, which is in contact with the second sample mixed gas, outputs an electric signal $S_{H1}$ $(T_{H1})$ at a heat producing temperature $T_{H1}$, an electric signal $S_{H2}$ $(T_{H2})$ at a heat producing temperature $T_{H2}$, and an electric signal $S_{H3}$ $(T_{H3})$ at a heat producing temperature $T_{H3}$.

After the third sample mixed gas is filled into the chamber 101, illustrated in FIG. 14, the first temperature measuring element 62A of the microchip 8A, illustrated in FIG. 1 and FIG. 2, outputs an electric signal $S_I$ that is dependent on the temperature of the third sample mixed gas. Following this, the heater element 61A, which is in contact with the third sample mixed gas, outputs an electric signal $S_{H1}$ $(T_{H1})$ at a heat producing temperature $T_{H1}$, an electric signal $S_{H2}$ $(T_{H2})$ at a heat producing temperature $T_{H2}$, and an electric signal $S_{H3}$ $(T_{H3})$ at a heat producing temperature $T_{H3}$.

After the fourth sample mixed gas is filled into the chamber 101, illustrated in FIG. 14, the first temperature measuring element 62A of the microchip 8A, illustrated in FIG. 1 and FIG. 2, outputs an electric signal $S_I$ that is dependent on the temperature of the fourth sample mixed gas. Following this, the heater element 61A, which is in contact with the fourth sample mixed gas, outputs an electric signal $S_{H1}$ $(T_{H1})$ at a heat producing temperature $T_{H1}$, an electric signal $S_{H2}$ $(T_{H2})$ at a heat producing temperature $T_{H2}$, and an electric signal $S_{H3}$ $(T_{H3})$ at a heat producing temperature $T_{H3}$.

Note that if there are n types of gas components in each of the sample mixed gases, the heater element 61A, illustrated in FIG. 1 and FIG. 2, is caused to reduce heat at at least n-1 different temperatures. However, as described above, alkane ($C_jH_{2j+2}$) other than methane ($CH_4$) and propane ($C_3H_8$) can be viewed as a mixture of methane ($CH_4$) and propane ($C_3H_8$). Consequently, with z as a natural number, if a sample mixed gas comprising n types of gas components includes, as gas components, z types of alkanes ($C_jH_{2j+2}$) in addition to methane ($CH_4$) and propane ($C_3H_8$),

the heater element 61A is caused to produce heat at n-z-1 different temperatures.

As illustrated in FIG. 14, the microchip 8A is connected to a CPU that includes the measuring portion 321. An electric signal storing device 421 is also connected to the CPU 300. The measuring portion 321 measures the value of the electric signal $S_I$ from the first temperature measuring element 62A, and, from the heater element 61 A, the values of the electric signal $S_{H1}$ ($T_{H1}$) at the heat producing temperature $T_{H1}$, the electric signal $S_{H2}$ ($T_{H2}$) at the heat producing temperature $T_{H2}$, and the electric signal $S_{H3}$ ($T_{H3}$) at the heat producing temperature $T_{H3}$, and stores the measured values in the electric signal storing device 421.

Note that the electric signal $S_I$ from the first temperature measuring element 62A may be the resistance value $R_I$ of the first temperature measuring element 62A, the current $I_I$ flowing in the first temperature measuring element 62A, the voltage $V_I$ applied to the first temperature measuring element 62A, or the output signal $AD_I$ from the A/D converting circuit 304 that is connected to the first temperature measuring element 62A. Similarly, the electric signal SH from the heater element 61A may be the resistance value $R_H$ of the heater element 61 A, the current $I_H$ flowing in the heater element 61 A, the voltage $V_H$ applied to the heater element 61A, or the output signal $AD_H$ from the A/D converting circuit 304 that is connected to the heater element 61A.

The thermal diffusivity calculating equation generating portion 302 that is included in the CPU 300 collection the respective known values for the inverses $1/\alpha$ of the thermal diffusivities for, for example, each of the first through fourth sample mixed gases, the plurality of measured values for the electric signals $S_1$ from the first temperature measuring element 62A, and the plurality of measured values for the electric signals $S_{H1}$ ($T_{H1}$), $S_{H2}$ ($T_{H2}$), and $S_{H3}$ ($T_{H3}$) from the heater element 61A. Furthermore, the thermal diffusivity calculating equation generating portion 302 uses multivariate analysis based on the collected values for the inverses $1/\alpha$ of the thermal diffusivities, the electric signals $S_1$, and the electric signals $S_H$, to generate a thermal diffusivity calculating equation having the electric signal $S_I$ from the first temperature measuring element 62A and the electric signals $S_{H1}$ ($T_{H1}$), $S_{H2}$ ($T_{H2}$), and $S_{H3}$ ($T_{H3}$) from the heater element 61A as the independent variables, and the inverse $1/\alpha$ of the thermal diffusivity as the dependent variable. The other structural elements of the thermal diffusivity calculating equation generating system 20B illustrated in FIG. 14 are identical to those of the thermal diffusivity calculating equation generating system 20A that is illustrated in FIG. 6, so explanations thereof are omitted.

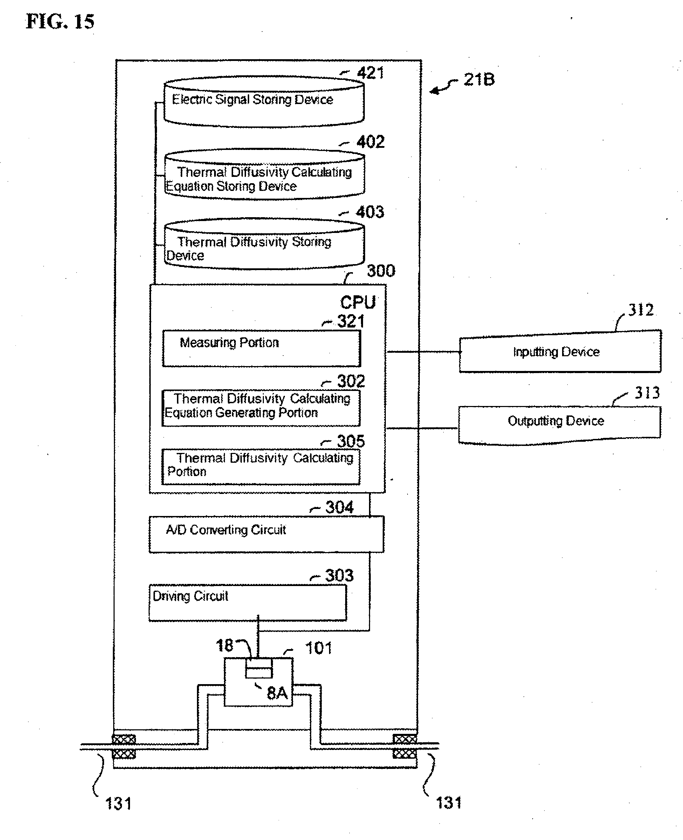

As illustrated in FIG. 15, a thermal diffusivity measuring system 21 B as set forth has a measuring portion 321 for measuring the value of an electric signal $S_I$ from the first temperature measuring element 62A, which is dependent on the temperature $T_I$ of the gas being measured, and values of the electric signals $S_H$ from the heater element 61 A at each of the plurality of heat producing temperatures $T_H$; a thermal diffusivity calculating equation storing device 402 for storing a thermal diffusivity calculating equation that has the electric signal $S_I$ from the first temperature measuring element 62A and the electric signals $S_H$ from the heater element 61A at the plurality of heat producing temperatures $T_H$ as independent variables and the inverse $1/\alpha$ of the thermal diffusivity as the dependent variable; and a thermal diffusivity calculating portion 305 for calculating the value of the inverse $1/\alpha$ of the thermal diffusivity of the mixed gas being measured, by substituting the measured value of the electric signal $S_I$ from the first temperature measuring element 62A and the measured values of the electric signals $S_H$ from the heater element 61 A into the independent variable that is the electric signal $S_I$ from the first temperature measuring element 62A and the independent variables that are the electric signals $S_H$ from the heater element 61A in the thermal diffusivity calculating equation.

The thermal diffusivity calculating equation includes, for example, as independent variables, the electric signal $S_I$ from the first temperature measuring element 62A, the electric signal $S_{H1}$ ($T_{H1}$) from the heater element 61A at a heat producing temperature $T_{H1}$ of 100°C, the electric signal $S_{H2}$ ($T_{H2}$) from the heater element 61A at a heat producing temperature $T_{H2}$ of 150°C, and the electric signal $S_{H3}$ ($T_{H3}$) from the heater element 61A at a heat producing temperature $T_{H3}$ of 200°C.

The first temperature measuring element 62A of the microchip 8A illustrated in FIG. 1 and FIG. 2 outputs an electric signal $S_I$ that is dependent on the temperature of the gas that is measured. Following this, the heater element 61A applies driving powers $P_{H1}$, $P_{H2}$, and $P_{H3}$, from the driving circuit 303 illustrated in FIG. 15. When the driving powers $P_{H1}$, $P_{H2}$, and $P_{H3}$ are applied, the heater element 61A that is in contact with the mixed gas being measured produces heat at a temperature $T_{H1}$ of 100°C, a temperature $T_{H2}$ of 150°C, and a temperature $T_{H3}$ of 200°C, for example, to output an electric signal $S_{H1}$ ($T_{H1}$) at the heat producing temperature $T_{H1}$, an electric signal $S_{H2}$ ($T_{H2}$) at the heat producing temperature $T_{H2}$, and an electric signal $S_{H3}$ ($T_{H3}$) at the heat producing temperature $T_{H3}$.

The measuring portion 321, illustrated in FIG. 15, measures the value of the electric signal $S_I$ from the first temperature measuring element 62A, which is in contact with the mixed gas being measured, and, from the heater element 61A, which is in contact with the mixed gas being measured, the values of the electric signal $S_{H1}$ ($T_{H1}$) at the heat producing temperature $T_{H1}$, the electric signal $S_{H2}$ ($T_{H2}$) at the heat producing temperature $T_{H2}$, and the electric signal $S_{H3}$ ($T_{H3}$) at the heat producing temperature $T_{H3}$, and stores the measured values in the electric signal storing device 421.

The thermal diffusivity calculating portion 305 substitutes the respected respective measured values into the independent variables of the electric signal $S_I$ from the first temperature measuring element 62A and the electric signals

$S_{H1}$ ($T_{H1}$), $S_{H2}$ ($T_{H2}$), and $S_{H3}$ ($T_{H3}$) from the heater element 61A in the thermal diffusivity calculating equation that is stored in the thermal diffusivity calculating equation storing device 402, to calculate the value of the inverse $1/\alpha$ of the thermal diffusivity of the mixed gas. The other structural elements of the thermal diffusivity measuring system 21 B illustrated in FIG. 15 are identical to those of the thermal diffusivity measuring system 21 A that is illustrated in FIG. 9, so explanations thereof are omitted.

The natural gas includes caloric components such as methane ($CH_4$) and propane ($C_3H_8$), and non-caloric components such as nitrogen ($N_2$) and carbon dioxide ($CO_2$). The relationship between the concentration of caloric component $C_0$ of the caloric components such as alkanes ($C_nH_{2n+2}$) in the mixed gas and the radiation coefficient of the mixed gas will be explained next. The mixed gas comprises four gas components, gas A, gas B, gas C, and gas D, and when the unit-volume calorific value of gas A is defined as $K_A$, the unit-volume calorific value of gas B is defined as $K_B$, the unit-volume calorific value of gas C is defined as $K_C$, and the unit-volume calorific value of gas D is defined as $K_D$, the unit-volume calorific value Q of the mixed gas is given by the sum of the products of the volume fractions of the individual gas components multiplied by the unit-volume calorific values of the individual gas components. Consequently, the unit-volume calorific value Q of the mixed gas is given by Equation (38), below. Note that the units for the unit-volume calorific values are, for example, $MJ/m^3$.

$$Q = K_A \times V_A + K_B \times V_B + K_C \times V_C + K_D \times V_D \dots (38)$$

Here Equation (39), below, is obtained through substituting Equations (17) through (20), above, into Equation (38), above.

$$\begin{aligned}
Q &= K_A \times V_A + K_B \times V_B + K_C \times V_C + K_D \times V_D \\
&= K_A \times f_1[M_I(T_{H1}), M_I(T_{H2}), M_I(T_{H3}), T_I] \\
&\quad + K_B \times f_2[M_I(T_{H1}), M_I(T_{H2}), M_I(T_{H3}), T_I] \\
&\quad + K_C \times f_3[M_I(T_{H1}), M_I(T_{H2}), M_I(T_{H3}), T_I] \\
&\quad + K_D \times f_4[M_I(T_{H1}), M_I(T_{H2}), M_I(T_{H3}), T_I] \dots (39)
\end{aligned}$$

As is clear from Equation (39), above, the unit-volume calorific value Q of the mixed gas is obtained from an equation having, as variables, the radiation coefficients $M_I(T_{H1})$, $M_I(T_{H2})$, and $M_I(T_{H3})$ of the mixed gas, and the temperature $T_I$ of the mixed gas, when the heat producing temperatures of the heater element 61 A are $T_{H1}$, $T_{H2}$, and $T_{H3}$. Consequently, the calorific value Q of the mixed gas is given by Equation (40), below, where $h_1$ is a code indicating a function.

$$Q = h_1[M_I(T_{H1}), M_I(T_{H2}), M_I(T_{H3}), T_I] \dots (40)$$

Consequently, the inventors discovered that, for a mixed gas comprising a gas A, a gas B, a gas C, and a gas D, wherein the volume fraction $V_A$ of the gas A, the volume fraction $V_B$ of the gas B, the volume fraction $V_C$ of the gas C, and the volume fraction $V_D$ of the gas D, are unknown, it is possible to calculate easily the unit-volume calorific value of the mixed gas to be measured if Equation (40) is obtained in advance. Specifically, the calorific value Q of the mixed gas being measured can be obtained uniquely by measuring the radiation coefficients $M_I(T_{H1})$, $M_I(T_{H2})$, and $M_I(T_{H3})$ of the mixed gas when the heat producing temperatures of the heater element 61 A are $T_{H1}$, $T_{H2}$, and $T_{H3}$, and then substituting into Equation (40).

Additionally, the calorific value Q of the mixed gas is proportional to the concentration of caloric component Co of the alkanes, and the like, in the mixed gas. Consequently, the concentration of caloric component Co in the mixed gas is given by Equation (41), below, where $h_2$ is a code indicating a function.

$$C_0 = h_2[M_I(T_{H1}), M_I(T_{H2}), M_I(T_{H3}), T_I] \dots (41)$$

Furthermore, if the mixed gas comprises n types of gas components, then the concentration of caloric component $C_0$ in the mixed gas is given by Equation (42), below.

$$C_0 = h_2 [M_I(T_{H1}), M_I(T_{H2}), M_I(T_{H3}), \ldots, M_I(T_{Hn-1}), T_I] \quad \ldots \text{(42)}$$

Note that, as with Equation (23), if the mixed gas includes an alkane ($C_jH_{2j+2}$) other than methane ($CH_4$) and propane ($C_3H_8$), where j is a natural number, in addition to methane ($CH_4$) and propane ($C_3H_8$), then the alkane ($C_jH_{2j+2}$) other than methane ($CH_4$) and propane ($C_3H_8$) will be seen as a mixture of methane ($CH_4$) and propane ($C_3H_8$), so there will be no effect on the calculation in Equation (42). Also, if the temperature $T_I$ of the mixed gas previous to the heater element 61 A, illustrated in FIG. 1 and FIG. 2, being caused to produce heat is stable, then Equation (42) need not include the variable for the temperature $T_I$ of the mixed gas.

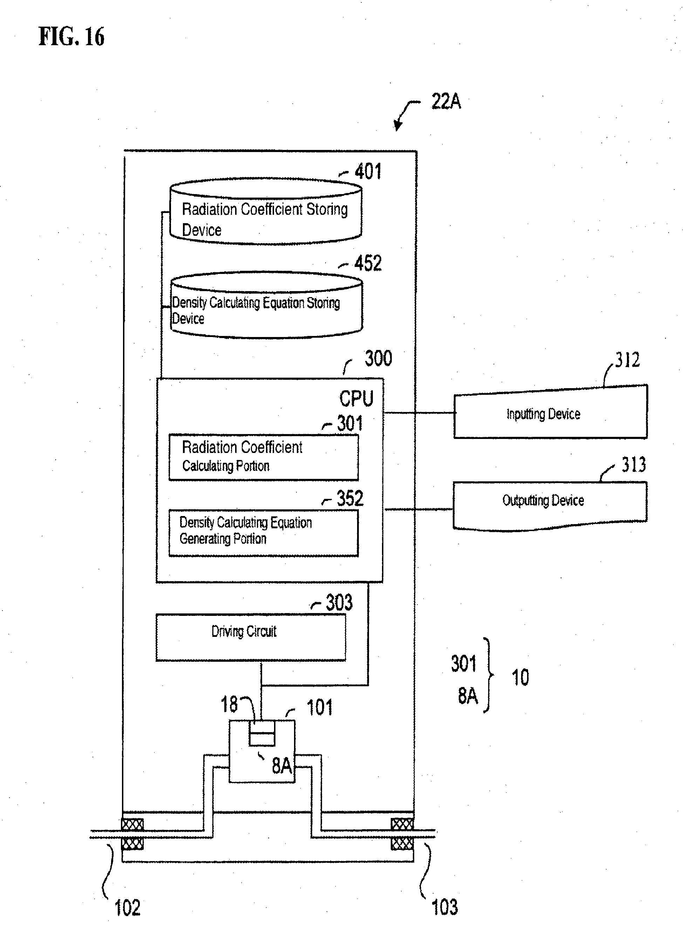

The concentration of caloric component calculating equation generating system 22A according to the example illustrated in FIG. 16 includes a chamber 101 that is filled with sample mixed gases for which the caloric component densities Co are known in advance, and a measuring mechanism 10 for measuring the values of a plurality of radiation coefficients $M_I$ of the sample mixed gases and the values of the temperatures $T_I$ of the sample mixed gases. Moreover, the concentration of caloric component calculating equation generating system 22A has a density calculating equation generating portion 352 for generating a concentration of caloric component calculating equation using the radiation coefficients $M_I$ and the gas temperatures $T_I$ for a plurality of heat producing temperatures of the heater element 61 A as independent variables and the concentration of caloric component $C_0$ of the gas as the dependent variable, based on the values of the caloric component densities $C_0$ of a plurality of sample mixed gases, a plurality of measured values for the plurality of radiation coefficients $M_I$ of the sample mixed gases, and a plurality of measured values for the temperatures $T_I$ of the sample mixed gases.

The measuring mechanism 10 and heat dissipation factor storing device 401 are the same as in the above examples, so the explanations thereof are omitted. The density calculating equation generating portion 352 collects the respective known caloric component densities $C_0$ of the first through fourth sample mixed gases, for example, the plurality of measured values for the radiation coefficients $M_I$ for the gas when the heat producing temperature of the heater element 61 A was 100°C, the plurality of measured values for the radiation coefficients $M_I$ for the gas when the heat producing temperature of the heater element 61A was 150°C, and the plurality of measured values for the gas the radiation coefficients $M_I$ for when the heat producing temperature of the heater element 61A was 200°C. Based on the caloric component densities $C_0$ and the plurality of radiation coefficients $M_I$ that have been collected, the density calculating equation generating portion 352 then, through multivariate analysis, calculates a concentration of caloric component calculating equation having, as independent variables, the radiation coefficient $M_I$ when the heat producing temperature of the heater element 61A is 100°C, the radiation coefficient $M_I$ when the heat producing temperature of the heater element 61A is 150°C, the radiation coefficient $M_I$ when the heat producing temperature of the heater element 61A is 200°C, and the gas temperature $T_I$, and having, as the dependent variable, the concentration of caloric component $C_0$.

The concentration of caloric component calculating equation generating system 22A is further provided with a density calculating equation storing device 452, connected to the CPU 300. The density calculating equation storing device 452 stores the concentration of caloric component calculating equation generated by the density calculating equation generating portion 352.

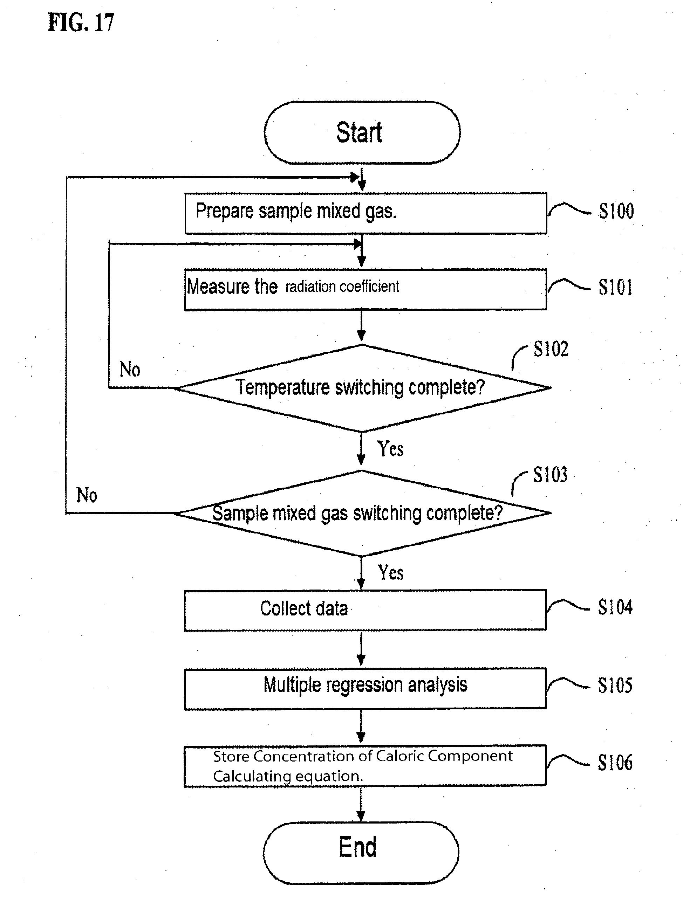

The flowchart in FIG. 17 is used next to explain a method for generating a concentration of caloric component calculating equation. Note that in the example below a case is explained wherein the first through fourth sample mixed gases are prepared and the heater element 61 A of the microchip 8A illustrated in FIG. 16 is caused to produce heat at 100°C, 150°C, and 200°C.

(a) First, Step S100 through Step S103 are performed in the same way as above. Next, in Step S104, the known value for the concentration of caloric component $C_0$ of the first sample mixed gas, the known value for the concentration of caloric component $C_0$ of the second sample mixed gas, the known value for the concentration of caloric component $C_0$ of the third sample mixed gas, and the known value for the concentration of caloric component $C_0$ of the fourth sample mixed gas are inputted from the inputting device 312 into the density calculating equation generating portion 352. Additionally, the density calculating equation generating portion 352 reads in, from the radiation coefficient storing device 401, the values for the temperatures $T_I$ of the first through fourth sample mixed gases and the values for the radiation coefficients $M_I$ for the first through fourth sample mixed gases when the heat producing temperatures of the heater element 61A were 100°C, 150°C, and 200°C.

(b) In Step S105, the density calculating equation generating portion 352 performs multiple linear regression analysis based on the values for the caloric component densities $C_0$ of the first through fourth sample mixed gases, the values for the temperatures $T_I$ of the first through fourth sample mixed gases, and the values for the radiation coefficients $M_I$ for the first through fourth sample mixed gases when the heat producing temperatures of the heater element 61A were 100°C, 150°C, and 200°C. Based on the multiple linear analysis, the density calculating equation generating portion 352 calculates a concentration of caloric component calculating equation having, as independent variables, the radiation coefficient $M_l$ when the heat producing temperature of the heater element 61A is 100°C, the radiation coefficient $M_l$ when the heat producing temperature of the heater element 61A is 150°C, the radiation coefficient $M_l$ when the heat producing temperature of the heater element 61A is 200°C, and the gas temperature $T_l$, and having, as the dependent variable, the concentration of caloric component $C_0$. Thereafter, in Step S106, the density calculating equation generating portion 352 stores, into the density calculating equation storing device 452, the concentration of caloric component calculating equation that has been generated, to complete the method for generating the concentration of caloric component calculating equation as above.

As described above, the method for generating a concentration of caloric component calculating equation as set forth enables the generation of a concentration of caloric component calculating equation that calculates a unique value for the concentration of caloric component $C_0$ of a mixed gas being measured.

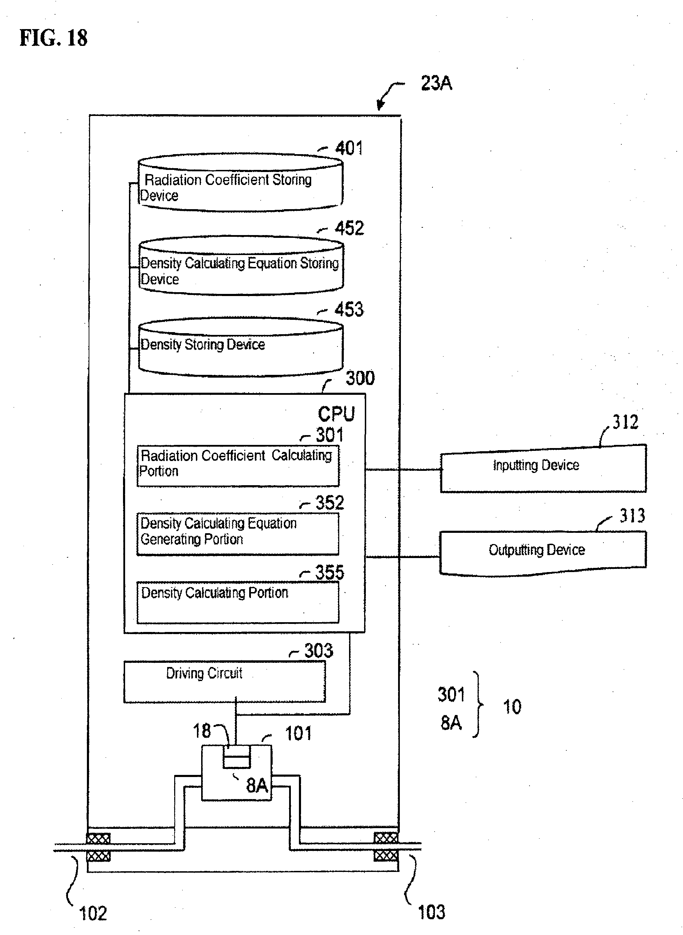

A concentration of caloric component measuring system 23A according to a further example illustrated in FIG. 18 has a chamber 101 that is filled with a mixed gas to be measured for which the concentration of caloric component $C_0$ is unknown, and a measuring mechanism 10 for measuring the value of the temperature $T_l$ of the mixed gas to be measured and the values of a plurality of radiation coefficients $M_l$ of the mixed gas to be measured. The concentration of caloric component measuring system 23A further has a density calculating equation storing device 452 for storing a concentration of caloric component calculating equation having, as independent variables, the temperature $T_l$ of the gas and the radiation coefficients $M_l$ for the gas at a plurality of heat producing temperatures of the heater element 61 A, and having, as the independent variable, the concentration of caloric component Co; and a density calculating portion 355 for calculating the value of the concentration of caloric component $C_0$ of the mixed gas being measured, by substituting the value for the temperature $T_l$ of the mixed gas being measured and the radiation coefficients $M_l$, for the mixed gas being measured, at a plurality of heat producing temperatures of the heater element 61A into the independent variables of the temperature $T_l$ of the gas and the radiation coefficients $M_l$ for the gas at a plurality of heat producing temperatures of the heater element 61A in the thermal diffusivity calculating equation.

The density calculating equation storing device 452 stores the concentration of caloric component calculating equation as described above. As an example, a case is explained here wherein natural gases, including methane ($CH_4$), propane ($C_3H_8$), nitrogen ($N_2$), and carbon dioxide ($CO_2$), were used as the sample mixed gases for generating the concentration of caloric component calculating equation. Additionally, the concentration of caloric component calculating equation uses, as independent variables, the radiation coefficient $M_l$ of the gas when the heat producing temperature of the heater element 61A is 100°C, the radiation coefficient $M_l$ of the gas when the heat producing temperature of the heater element 61A is 150°C, the radiation coefficient $M_l$ of the gas when the heat producing temperature of the heater element 61A is 200°C, and the temperature $T_l$ of the gas.

In yet another example, a natural gas that includes, in unknown volume fractions, methane ($CH_4$), propane ($C_3H_8$), nitrogen ($N_2$), and carbon dioxide ($CO_2$), and for which the concentration of caloric component $C_0$ is unknown, is introduced into the chamber 101 as the mixed gas to be measured. The measuring mechanism 10 and heat dissipation factor storing device 401 are the same as above, so the explanations thereof are omitted.

The density calculating portion 355 substitutes the values of the radiation coefficients $M_l$ and the temperature $T_l$ of the mixed gas being measured into the independent variables of the radiation coefficients $M_l$ for the gas and the temperature $T_l$ of the gas in the concentration of caloric component calculating equation, to calculate the value of the concentration of caloric component $C_0$ of the mixed gas being measured. A density storing device 453 is also connected to the CPU 300. The density storing device 453 stores the value of concentration of caloric component $C_0$ of the mixed gas being measured, calculated by the density calculating portion 355. The requirements for the other structural elements in the concentration of caloric component measuring system 23A as set forth therein are identical to those in the concentration of caloric component calculating equation generating system 22A set forth above, so explanations thereof are omitted.

The flowchart in FIG. 19 is used next to explain a method for measuring a concentration of caloric component. Note that in the example below a case is explained the heater element 61A of the microchip 8A illustrated in FIG. 18 is caused to produce heat at 100°C, 150°C, and 200°C.

(a) First, Step S200 through Step S202 are performed in the same way as above. Next, in Step S203, the density calculating portion 355 reads in, from the density calculating equation storing device 452, the concentration of caloric component calculating equation that uses, as independent variables, the value for the temperature $T_l$ of the gas and the values for the radiation coefficients $M_l$ when the heat producing temperatures of the heater element 61A are 100°C, 150°C, and 200°C. In addition, the density calculating portion 355 region, from the radiation coefficient storing device 401, the value for the temperature $T_l$ of the mixed gas being measured and the values for the radiation coefficients $M_l$ of the mixed gas being measured for when the heat producing temperatures of the heater element 61 A are 100°C, 150°C, and 200°C.

(c) In Step S204, the density calculating portion 355 substitutes the value of the temperature $T_I$ of the mixed gas being measured into the independent variable of the temperature $T_I$ in the concentration of caloric component calculating equation, and substitutes the value of the radiation coefficients $M_I$ of the mixed gas being measured into the independent variable of the radiation coefficients $M_I$ in the concentration of caloric component calculating equation, to calculate the value of the concentration of caloric component $C_0$ of the mixed gas being measured. Thereafter, the density calculating portion 355 stores, into the density storing device 453, the value calculated for the concentration of caloric component $C_0$, to complete the method for measuring the concentration of caloric component.

The method for measuring the concentration of caloric component as described above, enables the measurement of the concentration of caloric component $C_0$ in a mixed gas that is a mixed gas to be measured, from measured values for the radiation coefficients $M_I$ of the mixed gas to be measured, without using costly gas chromatography equipment or speed-of-sound sensors.

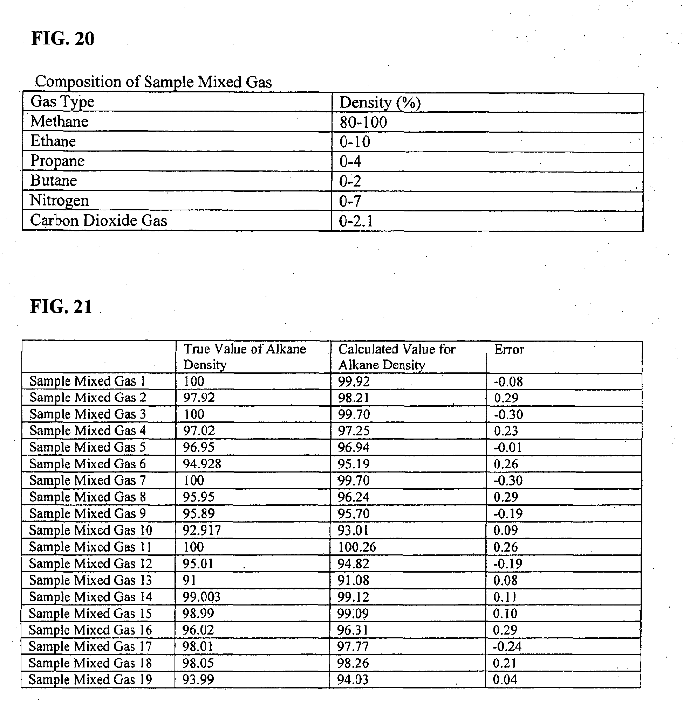

First, as illustrated in FIG. 20, 19 different sample mixed gases, having mutually differing volume densities of ethane, propane, butane, nitrogen, and carbon dioxide, were prepared. Following this, the values of the radiation coefficient $M_I$ for each of the 19 mixed gas samples are measured when the heater element has been caused to produce heat at a plurality of temperatures. Thereafter, support vector regression, based on the known values for the alkane densities $C_0$ of the 19 sample mixed gases and the plurality of measured values for the radiation coefficients $M_I$, was used to generate an equation for calculating the alkane density $C_0$ using the radiation coefficients $M_I$ as independent variables and the alkane density $C_0$ as the dependent variable.

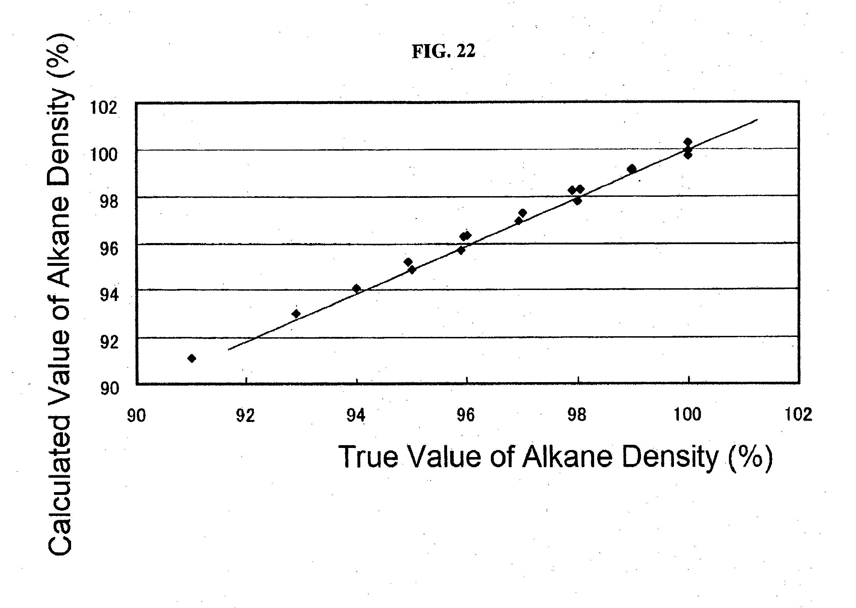

Following this, the equation for calculating the alkane density $C_0$ was used to calculate calculated values for the alkane densities $C_0$ for the 19 sample mixed gases, and the true values for the alkane densities $C_0$ for the 19 sample mixed gases were compared. When this was done, the error in the calculated values, relative to the true values for the alkane densities $C_0$, as illustrated in FIG. 21 and FIG. 22, where within -0.3% and +0.3%. The ability to calculate accurately alkane density $C_0$ from measured values for radiation coefficients $M_I$, through the use of an alkane density $C_0$ calculating equation that has the radiation coefficients $M_I$ as the independent variables and the alkane density $C_0$ as the dependent variable was thus demonstrated.

As is illustrated in Equation (41), above, the concentration of caloric component $C_0$ of the mixed gas that comprises the four types of gas components is obtained as an equation having, as variables, the radiation coefficients $M_I(T_{H1})$, $M_I(T_{H2})$, and $M_I(T_{H3})$ of the mixed gas when the heat producing temperatures of the heater element 61A are $T_{H1}$, $T_{H2}$, and $T_{H3}$. Additionally, the radiation coefficient $M_I$ of the mixed gas, as indicated in Equation (32), above, depends on the resistance value $R_H$ of the heater element 61A and on the resistance value $R_I$ of the first temperature measuring element 62A. Given this, the inventors discovered that the concentration of caloric component $C_0$ of a mixed gas can also be obtained as an equation having, as variables, the resistances $R_{H1}(T_{H1})$, $R_{H2}(T_{H2})$, and $R_{H3}(T_{H3})$ of the heater element 61A when the temperatures of the heater element 61 A are $T_{H1}$, $T_{H2}$, and $T_{H3}$, and the resistance value $R_I$ of the first temperature measuring element 62A that is in contact with the mixed gas, as shown in Equation (43), below.

$$C_0 = h_3 \left[ R_{H1}(T_{H1}), R_{H2}(T_{H2}), R_{H3}(T_{H3}), R_I \right] \ldots (43)$$

Given this, the concentration of caloric component $C_0$ of a mixed gas can be calculated uniquely by measuring the resistances $R_{H1}(T_{H1})$, $R_{H2}(T_{H2})$, and $R_{H3}(T_{H3})$ of the heater element 61A when the heat producing temperatures of the heater element 61A, which is in contact with the mixed gas, are $T_{H1}$, $T_{H2}$, and $T_{H3}$, and the resistance value $R_I$ of the first temperature measuring element 62A that is in contact with the mixed gas prior to the heat production by the heater element 61A, for example, and then substituting into Equation (43).

Furthermore, the concentration of caloric component $C_0$ of a mixed gas can also be obtained as an equation having, as variables, the currents $I_{H1}(T_{H1})$, $I_{H2}(T_{H2})$, and $I_{H3}(T_{H3})$ flowing in the heater element 61 A when the temperatures of the heater element 61 A are $T_{H1}$, $T_{H2}$, and $T_{H3}$, and the current $I_I$ flowing in the first temperature measuring element 62A that is in contact with the mixed gas, as shown in Equation (44), below.

$$C_0 = h_4 \left[ I_{H1}(T_{H1}), I_{H2}(T_{H2}), I_{H3}(T_{H3}), I_I \right] \ldots (44)$$

Conversely, the concentration of caloric component $C_0$ of a mixed gas can also be obtained from an equation having, as variables, the voltages $V_{H1}(T_{H1})$, $V_{H2}(T_{H2})$, and $V_{H3}(T_{H3})$ of the heater element 61A when the temperatures of the heater element 61 A are $T_{H1}$, $T_{H2}$, and $T_{H3}$, and the voltage $V_I$ of the first temperature measuring element 62A that is in contact with the mixed gas, as shown in Equation (45), below.

$$C_0 = h_5 \left[ V_{H1}(T_{H1}),\ V_{H2}(T_{H2}),\ V_{H3}(T_{H3}),\ V_I \right]\ \dots\ (45)$$

Conversely, the concentration of caloric component $C_0$ of a mixed gas can also be obtained as an equation having, as variables, the output voltages $AD_{H1}(T_{H1})$, $AD_{H2}(T_{H2})$, and $AD_{H3}(T_{H3})$ of analog-digital converting circuits that are connected to the heater element 61 A when the temperatures of the heater element 61 A are $T_{H1}$, $T_{H2}$, and $T_{H3}$, and the output voltage $AD_I$ of an A/D converting circuit that is connected to the first temperature measuring element 62A that is in contact with the mixed gas, as shown in Equation (46), below.

$$C_0 = h_6 \left[ AD_{H1}(T_{H1}),\ AD_{H2}(T_{H2}),\ AD_{H3}(T_{H3}),\ AD_I \right]\ \dots\ (46)$$

Consequently, the concentration of caloric component $C_0$ of a mixed gas can also be obtained from an equation having, as variables, electric signals $S_{H1}(T_{H1})$, $S_{H2}(T_{H2})$, and $S_{H3}(T_{H3})$ from the heater element 61A when the heat producing temperatures of the heater element 61 A are $T_{H1}$, $T_{H2,}$ and $T_{H3}$, and an electric signal $S_I$ from the first temperature measuring element 62A that is in contact with the mixed gas, as shown in Equation (47), below.

$$C_0 = h_7 \left[ S_{H1}(T_{H1}),\ S_{H2}(T_{H2}),\ S_{H3}(T_{H3}),\ S_I \right]\ \dots\ (47)$$

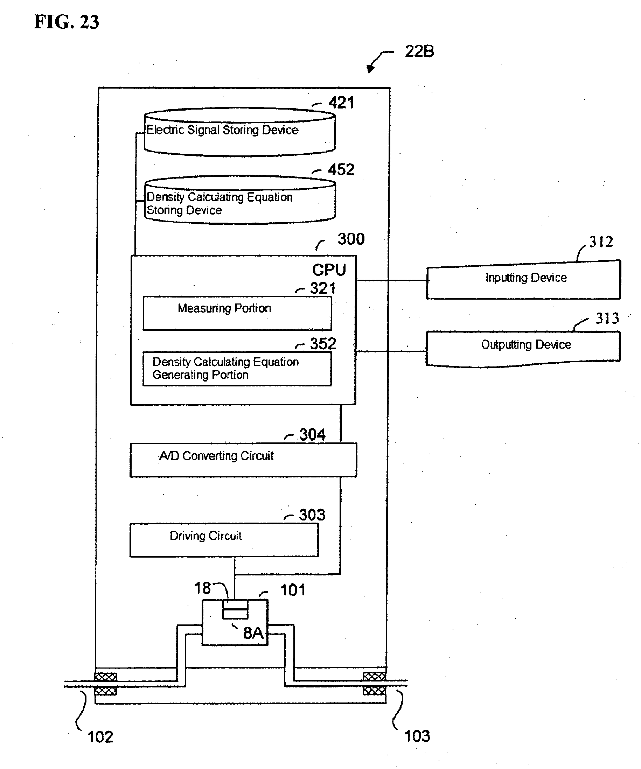

Here a concentration of caloric component calculating equation generating system 22B as illustrated in FIG. 23 has a measuring portion 321, illustrated in FIG. 23, for measuring values of electric signals $S_I$ from the first temperature measuring element 62A, illustrated in FIG. 1 and FIG. 2, that are dependent on the respective temperatures $T_I$ of the plurality of sample mixed gases, and the values of electric signals $S_H$ from the heater element 61A at each of the plurality of heat producing temperatures $T_H$; and a concentration of caloric component calculating equation generating portion 352 for generating a concentration of caloric component calculating equation based on known values for caloric component densities of a plurality of sample mixed gases, the measured value for the electric signal $S_I$ from the first temperature measuring element 62A, and the plurality of measured values for the electric signals from the heater element 61A at the plurality of heat producing temperatures, having an electric signal $S_I$ from the first temperature measuring element 62A and the electric signals $S_H$ from the heater element 61A at the plurality of heat producing temperatures $T_H$ as independent variables, and having the concentration of caloric component as the dependent variable.

As with the above examples, the measuring portion 321 measures the value of the electric signal $S_I$ from the first temperature measuring element 62A, and, from the heater element 61 A, the values of the electric signal $S_{H1}$ $(T_{H1})$ at the heat producing temperature $T_{H1}$, the electric signal $S_{H2}$ $(T_{H2})$ at the heat producing temperature $T_{H2}$, and the electric signal $S_{H3}$ $(T_{H3})$ at the heat producing temperature $T_{H3}$, and stores the measured values in the electric signal storing device 421.

The concentration of caloric component calculating equation generating portion 352 that is included in the CPU 300 collection the respective known values for the caloric component densities $C_0$ of, for example, each of the first through fourth sample mixed gases, the plurality of measured values for the electric signals $S_I$ from the first temperature measuring element 62A, and the plurality of measured values for the electric signals $S_{H1}$ $(T_{H1})$, $S_{H2}$ $(T_{H2})$, and $S_{H3}$ $(T_{H3})$ from the heater element 61 A. Furthermore, the concentration of caloric component calculating equation generating portion 352 uses multivariate analysis based on the collected values for the caloric component densities $C_0$, the electric signals $S_I$, and the electric signals $S_H$, to generate a concentration of caloric component calculating equation having the electric signal S, from the: first temperature measuring element 62A and the electric signals $S_{H1}$ $(T_{H1})$, $S_{H2}$ $(T_{H2})$, and $S_{H3}$ $(T_{H3})$ from the heater element 61 A as the independent variables, and the concentration of caloric component $C_0$ as the dependent variable. The other structural elements of the concentration of caloric component calculating equation generating system 22B illustrated in FIG. 23 are identical to those of the concentration of caloric component calculating equation generating system 22A that is illustrated in FIG. 16, so explanations thereof are omitted.

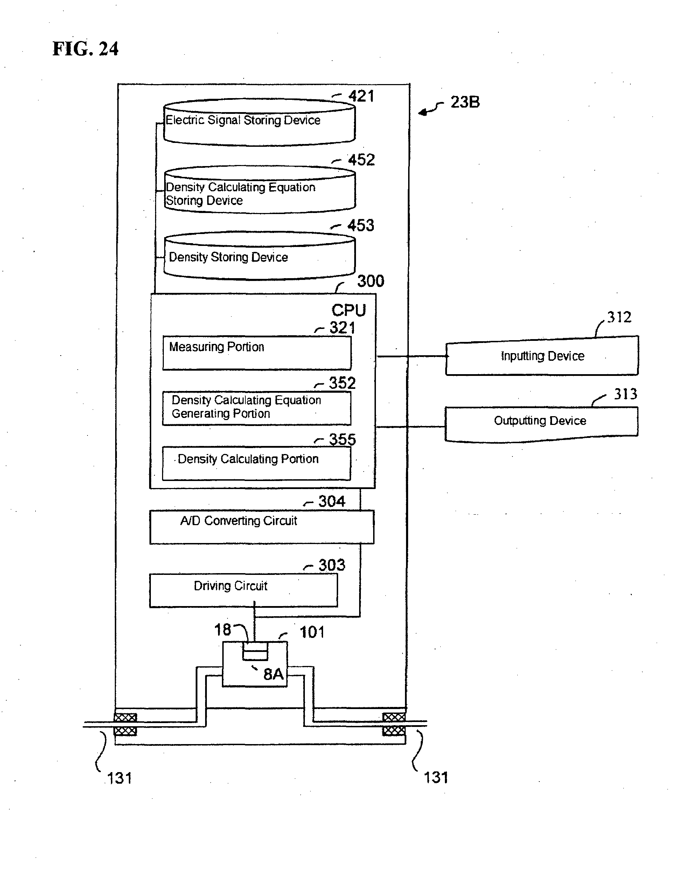

As illustrated in FIG. 24, a concentration of caloric component measuring system 23B as set forth below includes a measuring portion 321 for measuring the value of an electric signal $S_I$ from the first temperature measuring element 62A, which is dependent on the temperature $T_I$ of the gas being measured, and values of the electric signals $S_H$ from the heater element 61A at each of the plurality of heat producing temperatures $T_H$; a density calculating equation storing device 452 for storing a concentration of caloric component calculating equation that has the electric signal $S_I$ from the first temperature measuring element 62A and the electric signals $S_H$ from the heater element 61 A at the plurality of heat producing temperatures $T_H$ as independent variables and the concentration of caloric component $C_0$ as the dependent

variable; and a density calculating portion 355 for calculating the value of the concentration of caloric component $C_0$ of the mixed gas being measured, by substituting the measured value of the electric signal $S_I$ from the first temperature measuring element 62A and the measured values of the electric signals $S_H$ from the heater element 61 A into the independent variable that is the electric signal $S_I$ from the first temperature measuring element 62A and the independent variables that are the electric signals $S_H$ from the heater element 61A in the concentration of caloric component calculating equation.

The concentration of caloric component calculating equation includes, for example, as independent variables, the electric signal $S_I$ from the first temperature measuring element 62A, the electric signal $S_{H1}$ ($T_{H1}$) from the heater element 61A at a heat producing temperature $T_{H1}$ of 100°C, the electric signal $S_{H2}$ ($T_{H2}$) from the heater element 61A at a heat producing temperature $T_{H2}$ of 150°C, and the electric signal $S_{H3}$ ($T_{H3}$) from the heater element 61 A at a heat producing temperature $T_{H3}$ of 200°C.

The first temperature measuring element 62A of the microchip 8A illustrated in FIG. 1 and FIG. 2 outputs an electric signal $S_I$ that is dependent on the temperature of the gas that is measured. Following this, the heater element 61A applies driving powers $P_{H1}$, $P_{H2}$, and $P_{H3}$ from the driving circuit 303 illustrated in FIG. 24. When the driving powers $P_{H1}$, $P_{H2}$, and $P_{H3}$ are applied, the heater element 61A that is in contact with the mixed gas being measured produces heat at a temperature $T_{H1}$ of 100°C, a temperature $T_{H2}$ of 150°C, and a temperature $T_{H3}$ of 200°C, for example, to output an electric signal $S_{H1}$ ($T_{H1}$) at the heat producing temperature $T_{H1}$, an electric signal $S_{H2}$ ($T_{H2}$) at the heat producing temperature $T_{H2}$, and an electric signal $S_{H3}$ ($T_{H3}$) at the heat producing temperature $T_{H3}$.

The measuring portion 321 measures the value of the electric signal $S_I$ from the first temperature measuring element 62A, which is in contact with the mixed gas being measured, and, from the heater element 61A, which is in contact with the mixed gas being measured, the values of the electric signal $S_{H1}$ ($T_{H1}$) at the heat producing temperature $T_{H1}$, the electric signal $S_{H2}$ ($T_{H2}$) at the heat producing temperature $T_{H2}$, and the electric signal $S_{H3}$ ($T_{H3}$) at the heat producing temperature $T_{H3}$, and stores the measured values in the electric signal storing device 421.

The density calculating portion 355 substitutes the respected respective measured values into the independent variables of the electric signal $S_1$ from the first temperature measuring element 62A and the electric signals $S_{H1}$ ($T_{H1}$), $S_{H2}$ ($T_{H2}$), and $S_{H3}$, ($T_{H3}$) from the heater element 61A in the concentration of caloric component calculating equation that is stored in the density calculating equation storing device 452, to calculate the value of the concentration of caloric component $C_0$ of the mixed gas being measured. The other structural elements of the concentration of caloric component measuring system 23B illustrated in FIG. 24 are identical to those of the concentration of caloric component measuring system 23A that is illustrated in FIG. 18, so explanations thereof are omitted.

As is clear from Equation (7), above, the inverse $1/\alpha$ of the thermal diffusivity is proportional to the system the heat capacity Cp divided by the thermal conductivity k. Consequently, Equation (22), above, can be modified with so that the specific heat capacity Cp divided by the thermal conductivity k can be obtained, as shown in Equation (48), below, from an equation having, as variables, the radiation coefficients $M_I(T_{H1})$, $M_I(T_{H2})$, and $M_I(T_{H3})$ of the mixed gas, and the temperature $T_I$ of the mixed gas, when the heat producing temperatures of the heater element 61A are $T_{H1}$, $T_{H2}$, and $T_{H3}$.

$$Cp/k = g_7[M_I(T_{H1}), M_I(T_{H2}), M_I(T_{H3}), T_I] \ldots (48)$$

Consequently, the inventors discovered that, for a mixed gas comprising a gas A, a gas B, a gas C, and a gas D, wherein the volume fraction $V_A$ of the gas A, the volume fraction $V_B$ of the gas B, the volume fraction $V_C$ of the gas C, and the volume fraction $V_D$ of the gas D, are unknown, it is possible to calculate easily the specific heat capacity Cp divided by the thermal conductivity k in the mixed gas to be measured if Equation (48) is obtained in advance. Specifically, the specific heat capacity Cp divided by the thermal conductivity k in the mixed gas being measured can be obtained uniquely by measuring the radiation coefficients $M_I(T_{H1})$, $M_I(T_{H2})$, and $M_I(T_{H3})$ of the mixed gas when the heat producing temperatures of the heater element 61 A are $T_{H1}$, $T_{H2}$, and $T_{H3}$, and then substituting into Equation (48).

Note that if the mixed gas comprises n types of gas components, then the specific heat capacity Cp divided by the thermal conductivity k in the mixed gas is given by Equation (49), below.

$$Cp/k = g_7[M_I(T_{H1}), M_I(T_{H2}), M_I(T_{H3}), \ldots, M_I(T_{Hn-1}), T_I] \ldots (49)$$

Note that, as with Equation (23), if the mixed gas includes an alkane ($C_jH_{2j}+2$) other than methane (CH4) and propane ($C_3H_8$), where j is a natural number, in addition to methane ($CH_4$) and propane ($C_3H_8$), then the alkane ($C_jH_{2j+2}$) other than methane ($CH_4$) and propane ($C_3H_8$) will be seen as a mixture of methane ($CH_4$) and propane ($C_3H_8$), so there will be no effect on the calculation in Equation (49). Also, if the temperature $T_1$ of the mixed gas previous to the heater element 61 A, illustrated in FIG. 1 and FIG. 2, being caused to produce heat is stable, then Equation (49) need not include the variable for the temperature $T_I$ of the mixed gas.

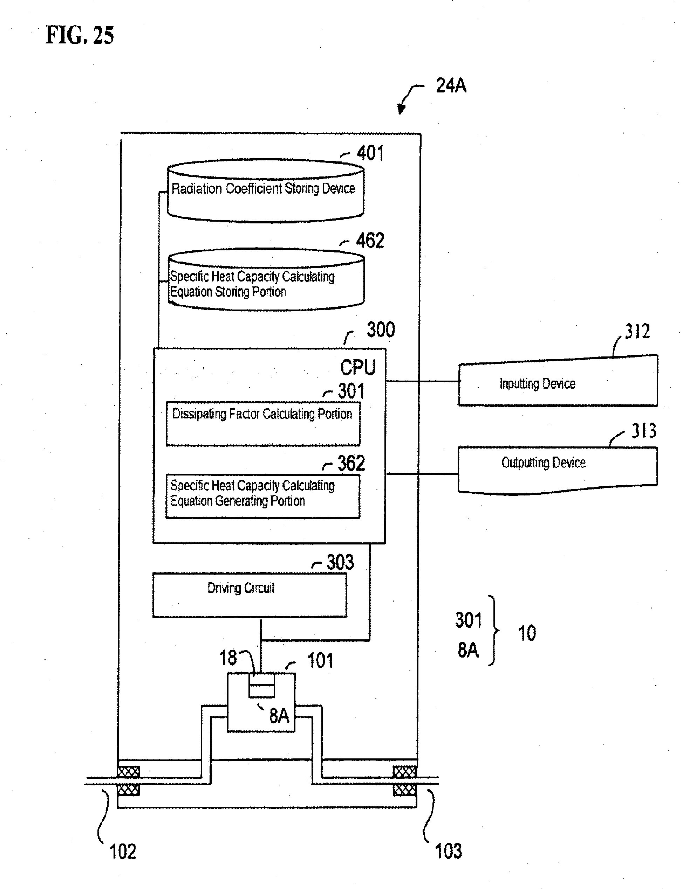

The specific heat capacity calculating equation generating system 24A according to FIG. 25 comprises a chamber 101 that is filled with sample mixed gases for which the specif heat capacities Cp divided by the thermal conductivities k are known in advance, and a measuring mechanism 10 for measuring the values of a plurality of radiation coefficients $M_I$ of the sample mixed gases and the values of the temperatures $T_I$ of the sample mixed gases. Moreover, the specific heat capacity calculating equation generating system 24A comprises a specific heat capacity calculating equation generating portion 362 for generating a specific heat capacity calculating equation using the radiation coefficients $M_I$ and the gas temperatures $T_I$ for a plurality of heat producing temperatures of the heater element 61 A as independent variables and the specific heat capacity Cp divided by the thermal conductivity k in the gas as the dependent variable, based on the values of the specific heat capacities Cp divided by the thermal conductivities k in a plurality of sample mixed gases, a plurality of measured values for the plurality of radiation coefficients $M_I$ of the sample mixed gases, and a plurality of measured values for the temperatures $T_I$ of the sample mixed gases.

The measuring mechanism 10 and heat dissipation factor storing device 401 are the same as above, so the explanations thereof are omitted. The specific heat capacity calculating equation generating portion 362 collects the respective known specific heat capacities Cp divided by the thermal conductivities k in the first through fourth sample mixed gases, for example, the plurality of measured values for the radiation coefficients $M_I$ for the gas when the heat producing temperature of the heater element 61 A was 100°C, the plurality of measured values for the radiation coefficients $M_I$ for the gas when the heat producing temperature of the heater element 61A was 150°C, and the plurality of measured values for the gas the radiation coefficients $M_I$ for when the heat producing temperature of the heater element 61A was 200°C. Based on the specific heat capacities Cp divided by the thermal conductivities k and the plurality of radiation coefficients $M_I$ that have been collected, the specific heat capacity calculating equation generating portion 362 then, through multivariate analysis, calculates a specific heat capacity calculating equation having, as independent variables, the radiation coefficient $M_I$ when the heat producing temperature of the heater element 61A is 100°C, the radiation coefficient $M_I$ when the heat producing temperature of the heater element 61 A is 150°C, the radiation coefficient $M_I$ when the heat producing temperature of the heater element 61A is 200°C, and the gas temperature $T_I$, and having, as the dependent variable, the specific heat capacity Cp divided by the thermal conductivity k.

The specific heat capacity calculating equation generating system 24A is further provided with a specific heat capacity calculating equation storing device 462, connected to the CPU 300. The specific heat capacity calculating equation storing device 462 stores the specific heat capacity calculating equation generated by the specific heat capacity calculating equation generating portion 362.

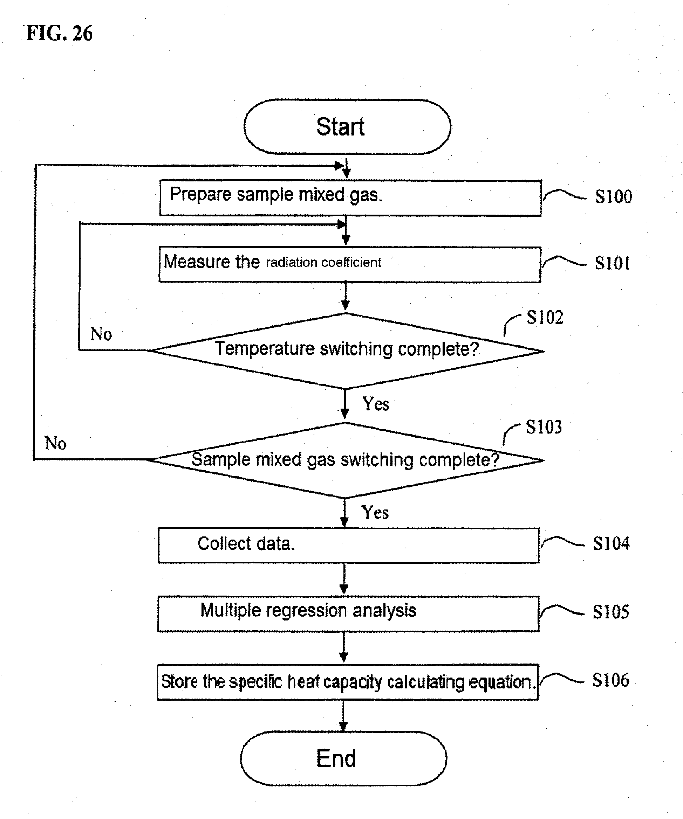

The flowchart in FIG. 26 is used next to explain a method for generating a specific heat capacity calculating equation. Note that in the example below a case is explained wherein the first through fourth sample mixed gases are prepared and the heater element 61A of the microchip 8A illustrated in FIG. 25 is caused to produce heat at 100°C, 150°C, and 200°C.

    (a) First, Step S100 through Step S103 are performed in the same way as above. Next, in Step S104, the known value for the specific heat capacity Cp divided by the thermal conductivity k in the first sample mixed gas, the known value for the specific heat capacity Cp divided by the thermal conductivity k in the second sample mixed gas, the known value for the specific heat capacity Cp divided by the thermal conductivity k in the third sample mixed gas, and the known value for the specific heat capacity Cp divided by the thermal conductivity k in the fourth sample mixed gas are inputted from the inputting device 312 into the specific heat capacity calculating equation generating portion 362. Additionally, the specific heat capacity calculating equation generating portion 362 reads in, from the radiation coefficient storing device 401, the values for the temperatures $T_I$ of the first through fourth sample mixed gases and the values for the radiation coefficients $M_I$ for the first through fourth sample mixed gases when the heat producing temperatures of the heater element 61 A were 100°C, 150°C, and 200°C.

    (b) In Step S105, the specific heat capacity calculating equation generating portion 362 performs multiple linear regression analysis based on the values for the specific heat capacities Cp divided by the thermal conductivities k in the first through fourth sample mixed gases, the values for the temperatures $T_I$ of the first through fourth sample mixed gases, and the values for the radiation coefficients $M_I$ for the first through fourth sample mixed gases when the heat producing temperatures of the heater element 61 A were 100°C, 150°C, and 200°C. Based on the multiple linear analysis, the specific heat capacity calculating equation generating portion 362 calculates a specific heat capacity calculating equation having, as independent variables, the radiation coefficient $M_I$ when the heat producing temperature of the heater element 61A is 100°C, the radiation coefficient $M_I$ when the heat producing temperature of the heater element 61 A is 150°C, the radiation coefficient $M_I$ when the heat producing temperature of the heater element 61A is 200°C, and the gas temperature $T_I$, and having, as the dependent variable, the specific heat capacity Cp divided by the thermal conductivity k. Thereafter, in Step S106, the specific heat capacity calculating equation generating portion 362 stores, into the specific heat capacity calculating equation storing device 462, the specific heat capacity calculating equation that has been generated, to complete the method for generating the specific heat capacity calculating equation.

As described above, the method for generating a specific heat capacity calculating equation enables the generation of a specific heat capacity calculating equation that calculates a unique value for the specific heat capacity Cp divided by the thermal conductivity k in a mixed gas being measure.

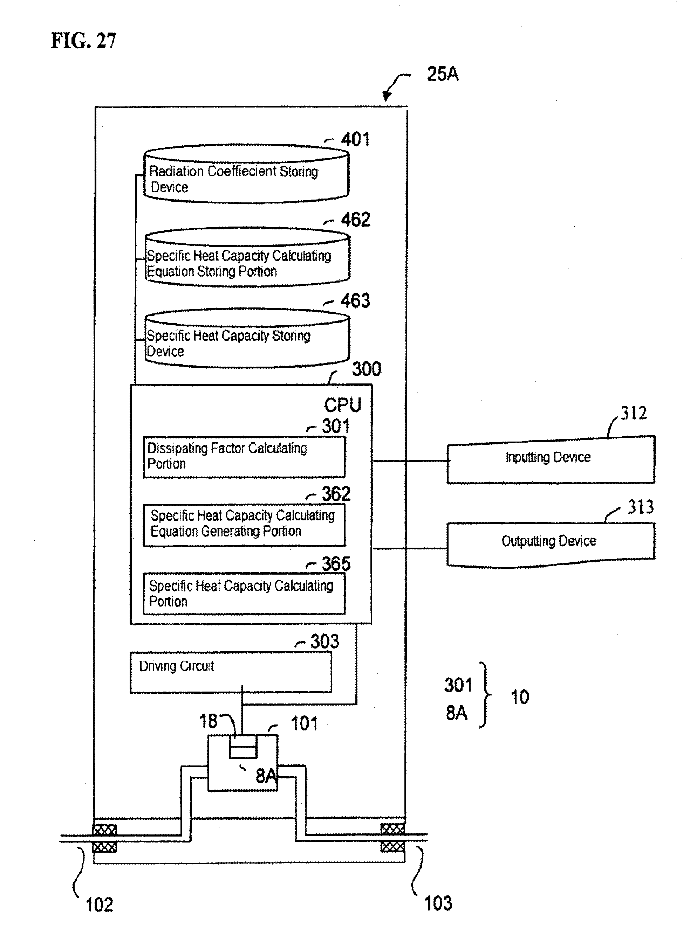

A specific heat capacity measuring system 25A according to FIG. 27 includes a chamber 101 that is filled with a mixed gas to be measured for which the specific heat capacity Cp divided by the thermal conductivity k is unknown, and a measuring mechanism 10 for measuring the value of the temperature $T_I$ of the mixed gas to be measured and the values of a plurality of radiation coefficients $M_I$ of the mixed gas to be measured. The specific heat capacity measuring system 25A further has a specific heat capacity calculating equation storing device 462 for storing a specific heat capacity calculating equation having, as independent variables, the temperature $T_I$ of the gas and the radiation coefficients $M_I$ for the gas at a plurality of heat producing temperatures of the heater element 61A, and having, as the independent variable, the specific heat capacity Cp divided by the thermal conductivity k; and a specific heat capacity calculating portion 365 for calculating the value of the specific heat capacity Cp divided by the thermal conductivity k of the mixed gas being measured, by substituting the value for the temperature $T_I$ of the mixed gas being measured and the radiation coefficients $M_I$, for the mixed gas being measured, at a plurality of heat producing temperatures of the heater element 61 A into the independent variables of the temperature $T_I$ of the gas and the radiation coefficients $M_I$ for the gas at a plurality of heat producing temperatures of the heater element 61 A in the specific heat capacity calculating equation.

The specific heat capacity calculating equation storing device 462 stores the specific heat capacity calculating equation. As an example, a case is explained here wherein natural gases, including methane ($CH_4$), propane ($C_3H_8$), nitrogen ($N_2$), and carbon dioxide ($CO_2$), were used as the sample mixed gases for generating the specific heat capacity calculating equation. Additionally, the specific heat capacity calculating equation uses, as independent variables, the radiation coefficient $M_I$ of the gas when the heat producing temperature of the heater element 61 A is 100°C, the radiation coefficient $M_I$ of the gas when the heat producing temperature of the heater element 61A is 150°C, the radiation coefficient $M_I$ of the gas when the heat producing temperature of the heater element 61A is 200°C, and the temperature $T_I$ of the gas.

In a yet further example, a natural gas that includes, in unknown volume fractions, methane ($CH_4$), propane ($C_3H_8$), nitrogen ($N_2$), and carbon dioxide ($CO_2$), and for which the value of the specific heat capacity Cp divided by the thermal conductivity k is unknown, is introduced into the chamber 101 as the mixed gas to be measured. The measuring mechanism 10 and heat dissipation factor storing device 401 are the same as above so the explanations thereof are omitted.

The specific heat capacity calculating portion 365 substitutes the values of the radiation coefficients $M_I$ and the temperature $T_I$ of the mixed gas being measured into the independent variables of the radiation coefficients $M_I$ for the gas and the temperature $T_I$ of the gas in the specific heat capacity calculating equation, to calculate the value of the specific heat capacity Cp divided by the thermal conductivity k of the mixed gas being measured. A specific heat capacity storing device 463 is also connected to the CPU 300. The specific heat capacity storing device 463 stores the value of the specific heat capacity Cp divided by the thermal conductivity k of the mixed gas being measured, calculated by the specific heat pass the calculating portion 365. The requirements for the other structural elements in the specific heat capacity measuring system 25A are identical to those in the specific heat capacity calculating equation generating system 24A set forth above, so explanations thereof are omitted.

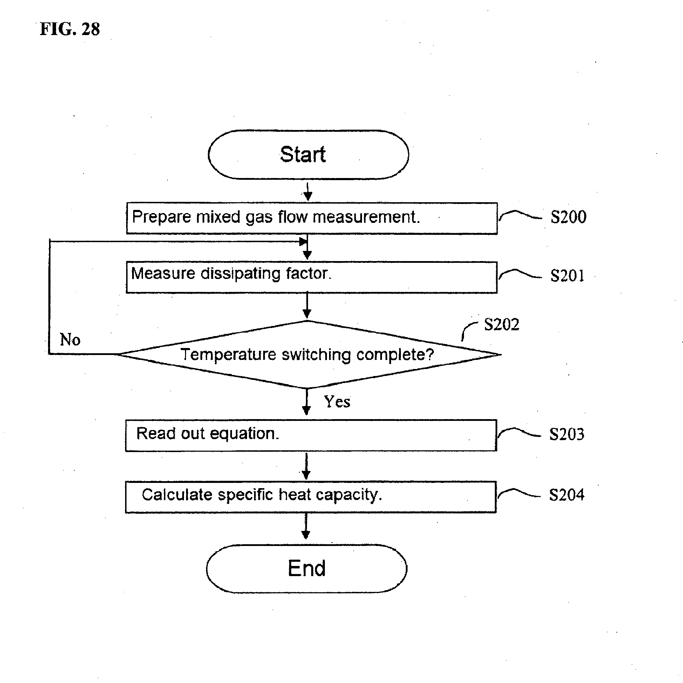

The flowchart in FIG. 28 is used next to explain a method for measuring a specific heat capacity. Note that in the example below a case is explained the heater element 61 A of the microchip 8A illustrated in FIG. 27 is caused to produce heat at 100°C, 150°C, and 200°C.

(a) First, Step S200 through Step S202 are performed in the same way as above. Next, in Step S203, the specif heat capacity calculating portion 365 reads in, from the specific heat capacity calculating equation storing device 462, the specific heat capacity calculating equation that uses, as independent variables, the value for the temperature $T_I$ of the gas and the values for the radiation coefficients $M_I$ when the heat producing temperatures of the heater element 61A are 100°C, 150°C, and 200°C. In addition, the specific heat capacity calculating portion 365 region, from the radiation coefficient storing device 401, the value for the temperature $T_I$ of the mixed gas being measured and the values for the radiation coefficients $M_I$ of the mixed gas being measured for when the heat producing temperatures of the heater element 61A are 100°C, 150°C, and 200°C.

In Step S204, the specific heat capacity calculating portion 365 substitutes the value of the temperature $T_I$ of the mixed gas being measured into the independent variable of the temperature $T_I$ in the specific heat capacity calculating equation, and substitutes the value of the radiation coefficients $M_I$ of the mixed gas being measured into the independent variable of the radiation coefficients $M_I$ in the specific heat capacity calculating equation, to calculate the value of the specific heat capacity Cp divided by the thermal conductivity k of the mixed gas being measured. Thereafter, the specific heat capacity calculating portion 365 stores, into the specific heat capacity storing device 463, the value calculated for the specific heat capacity Cp divided by the thermal conductivity k, to complete the method for measuring the specific heat capacity.

The method for measuring the specific heat capacity described above, enables the measurement of the specific heat capacity Cp divided by the thermal conductivity k in a mixed gas that is a mixed gas to be measured, from measured values for the radiation coefficients $M_I$ of the mixed gas to be measured, without using costly gas chromatography equipment or speed-of-sound sensors.

First, as illustrated in FIG. 20, 19 different sample mixed gases, having mutually differing volume densities of ethane, propane, butane, nitrogen, and carbon dioxide, were prepared. Following this, the values of the radiation coefficient $M_I$ for each of the 19 mixed gas samples are measured when the heater element has been caused to produce heat at a plurality of temperatures. Thereafter, support vector regression, based on the known values for the specific heat capacities Cp divided by the thermal conductivities k in the 19 sample mixed gases and the plurality of measured values for the radiation coefficients $M_I$, was used to generate an equation for calculating the specific heat capacity Cp divided by the thermal conductivity k using the radiation coefficients $M_I$ as independent variables and the specific heat capacity Cp divided by the thermal conductivity k as the dependent variable.

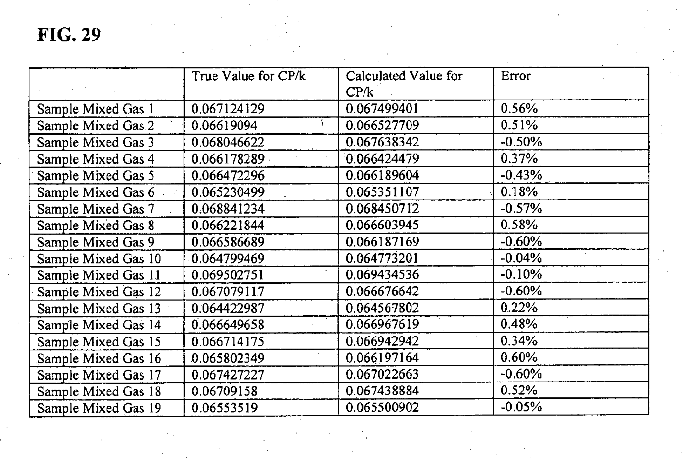

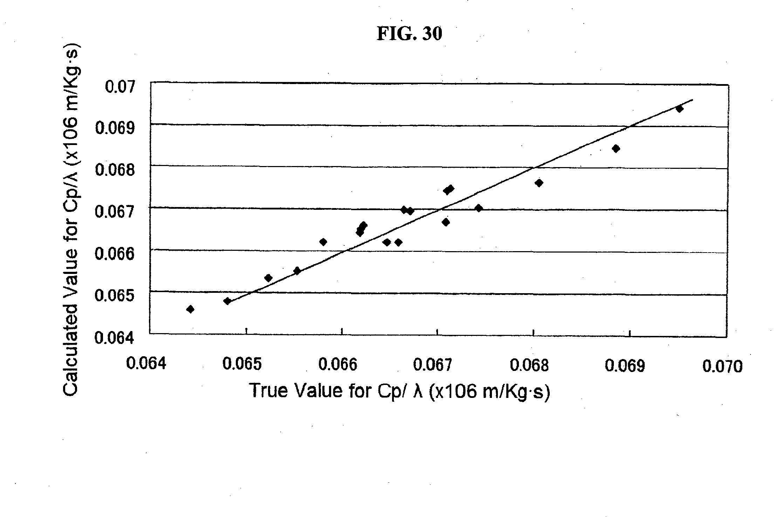

Following this, the equation for calculating the specific heat capacity Cp divided by the thermal conductivity k was used to calculate calculated values for the specific heat capacities Cp divided by the thermal conductivities k in the 19 sample mixed gases, and the true values for the specific heat capacities Cp divided by the thermal conductivities k in the 19 sample mixed gases were compared. When this was done, the error in the calculated values, relative to the true values for the specific heat capacities Cp divided by the thermal conductivities k, as illustrated in FIG. 29 and FIG. 30, where within -0.6% and +0.6%. The ability to calculate accurately the specific heat capacity Cp divided by the thermal conductivity k from measured values for radiation coefficients $M_I$, through the use of a calculating equation for the specific heat capacity Cp divided by the thermal conductivity k that has the radiation coefficients $M_I$ as the independent variables and the specific heat capacity Cp divided by the thermal conductivity k as the dependent variable was thus demonstrated.

As is illustrated in Equation (48), above, the specific heat capacity Cp divided by the thermal conductivity k in the mixed gas that has the four types of gas components is obtained as an equation having, as variables, the radiation coefficients $M_I(T_{H1})$, $M_I(T_{H2})$, and $M_I(T_{H3})$ of the mixed gas when the heat producing temperatures of the heater element 61A are $T_{H1}$, $T_{H2}$, and $T_{H3}$. Additionally, the radiation coefficient $M_I$ of the mixed gas, as indicated in Equation (32), above, depends on the resistance value $R_H$ of the heater element 61A and on the resistance value $R_I$ of the first temperature measuring element 62A. Given this, the inventors discovered that the specific heat capacity Cp divided by the thermal conductivity k in a mixed gas can also be obtained as an equation having, as variables, the resistances $R_{H1}(T_{H1})$, $R_{H2}(T_{H2})$, and $R_{H3}(T_{H3})$ of the heater element 61A when the temperatures of the heater element 61A are $T_{H1}$, $T_{H2}$, and $T_{H3}$, and the resistance value $R_I$ of the first temperature measuring element 62A that is in contact with the mixed gas, as shown in Equation (50), below.

$$Cp/k = g_8[R_{H1}(T_{H1}), R_{H2}(T_{H2}), R_{H3}(T_{H3}), R_I] \ldots (50)$$

Given this, the specific heat capacity Cp divided by the thermal conductivity k in a mixed gas can be calculated uniquely by measuring the resistances $R_{H1}(T_{H1})$, $R_{H2}(T_{H2})$, and $R_{H3}(T_{H3})$ of the heater element 61A when the heat producing temperatures of the heater element 61 A, which is in contact with the mixed gas, are $T_{H1}$, $T_{H2}$, and $T_{H3}$, and the resistance value $R_I$ of the first temperature measuring element 62A that is in contact with the mixed gas prior to the heat production by the heater element 61 A, for example, and then substituting into Equation (50).

Furthermore, the specific heat capacity Cp divided by the thermal conductivity k in a mixed gas can also be obtained as an equation having, as variables, the currents $I_{H1}(T_{H1})$, $I_{H2}(T_{H2})$, and $I_{H3}(T_{H3})$ flowing in the heater element 61A when the temperatures of the heater element 61A are $T_{H1}$, $T_{H2}$, and $T_{H3}$, and the current $I_I$ flowing in the first temperature measuring element 62A that is in contact with the mixed gas, as shown in Equation (51), below.

$$Cp/k = g_9[I_{H1}(T_{H1}), I_{H2}(T_{H2}), I_{H3}(T_{H3}), I_I] \ldots (51)$$

Conversely, the specific heat capacity Cp divided by the thermal conductivity k in a mixed gas can also be obtained from an equation having, as variables, the voltages $V_{H1}(T_{H1})$, $V_{H2}(T_{H2})$, and $V_{H3}(T_{H3})$ of the heater element 61A when the temperatures of the heater element 61A are $T_{H1}$, $T_{H2}$, and $T_{H3}$, and the voltage $V_I$ of the first temperature measuring element 62A that is in contact with the mixed gas, as shown in Equation (52), below.

$$Cp/k = g_{10}[V_{H1}(T_{H1}), V_{H2}(T_{H2}), V_{H3}(T_{H3}), V_I] \ldots (52)$$

Conversely, the specific heat capacity Cp divided by the thermal conductivity k in a mixed gas can also be obtained as an equation having, as variables, the output voltages $AD_{H1}(T_{H1})$, $AD_{H2}(T_{H2})$, and $AD_{H3}(T_{H3})$ of analog-digital converting circuits that are connected to the heater element 61A when the temperatures of the heater element 61A are $T_{H1}$, $T_{H2}$, and $T_{H3}$, and the output voltage $AD_I$ of an A/D converting circuit that is connected to the first temperature measuring element 62A that is in contact with the mixed gas, as shown in Equation (53), below.

$$Cp/k = g_{11}[AD_{H1}(T_{H1}), AD_{H2}(T_{H2}), AD_{H3}(T_{H3}), AD_I] \ldots (53)$$

Consequently, specific heat capacity Cp divided by the thermal conductivity k in a mixed gas can also be obtained from an equation having, as variables, electric signals $S_{H1}(T_{H1})$, $S_{H2}(T_{H2})$, and $S_{H3}(T_{H3})$ from the heater element 61 A when the heat producing temperatures of the heater element 61 A are $T_{H1}$, $T_{H2}$, and $T_{H3}$, and an electric signal $S_I$ from the first temperature measuring element 62A that is in contact with the mixed gas, as shown in Equation (54), below.

$$Cp/k = g_{12}[S_{H1}(T_{H1}), S_{H2}(T_{H2}), S_{H3}(T_{H3}), S_I] \ldots (54)$$

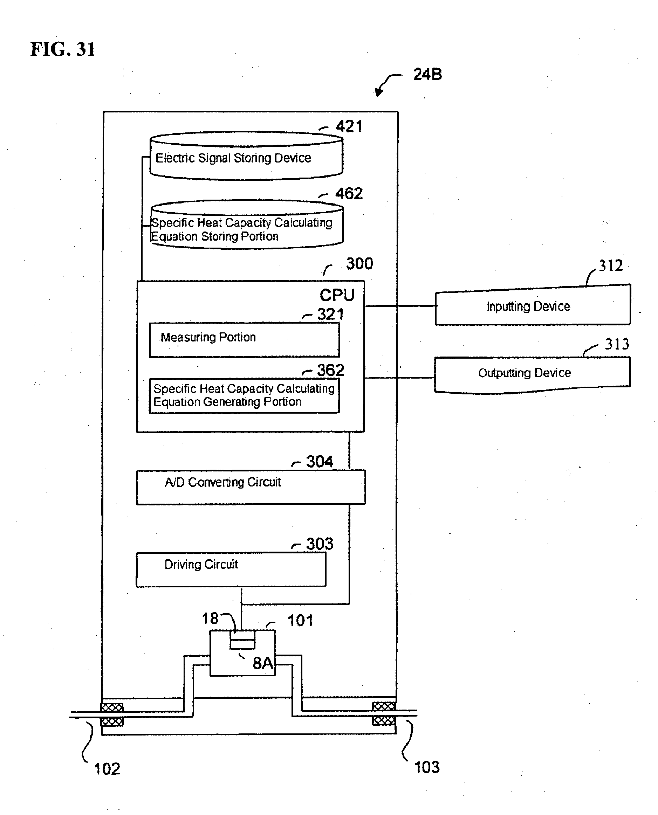

Here a specific heat capacity calculating equation generating system 24B as illustrated in FIG. 31 includes a measuring portion 321, illustrated in FIG. 31, for measuring values of electric signals $S_I$ from the first temperature measuring element 62A, illustrated in FIG. 1 and FIG. 2, that are dependent on the respective temperatures $T_I$ of the plurality of sample mixed gases, and the values of electric signals $S_H$ from the heater element 61 A at each of the plurality of heat producing temperatures $T_H$; and a specific heat capacity calculating equation generating portion 362 for generating a specific heat capacity calculating equation based on known values for specific heat capacities Cp divided by thermal conductivities k in a plurality of sample mixed gases, the measured value for the electric signal $S_I$ from the first temperature measuring element 62A, and the plurality of measured values for the electric signals from the heater element 61 A at the plurality of heat producing temperatures, having an electric signal $S_I$ from the first temperature measuring element 62A and the electric signals $S_H$ from the heater element 61A at the plurality of heat producing temperatures $T_H$ as independent variables, and having the specific heat capacity Cp divided by thermal conductivity k as the dependent variable.

As above, the measuring portion 321 measures the value of the electric signal $S_I$ from the first temperature measuring element 62A, and, from the heater element 61A, the values of the electric signal $S_{H1}$ ($T_{H1}$) at the heat producing temperature $T_{H1}$, the electric signal $S_{H2}$ ($T_{H2}$) at the heat producing temperature $T_{H2}$, and the electric signal $S_{H3}$ ($T_{H3}$) at the heat producing temperature $T_{H3}$, and stores the measured values in the electric signal storing device 421.

The specific heat capacity calculating equation generating portion 362 that is included in the CPU 300 collection the respective known values for the specific heat capacities Cp divided by the thermal conductivities k in, for example, each of the first through fourth sample mixed gases, the plurality of measured values for the electric signals $S_I$ from the first temperature measuring element 62A, and the plurality of measured values for the electric signals $S_{H1}$ ($T_{H1}$), $S_{H2}$ ($T_{H2}$), and $S_{H3}$ ($T_{H3}$) from the heater element 61A. Furthermore, the specific heat capacity calculating equation generating portion 362 uses multivariate analysis based on the collected values for the specific heat capacities Cp divided by the thermal conductivities k, the electric signals $S_I$, and the electric signals $S_H$, to generate a specific heat capacity calculating equation having the electric signal $S_I$ from the first temperature measuring element 62A and the electric signals $S_{H1}$ ($T_{H1}$), $S_{H2}$ ($T_{H2}$), and $S_{H3}$ ($T_{H3}$) from the heater element 61A as the independent variables, and the specific heat capacity Cp divided by the thermal conductivity k in as the dependent variable. The other structural elements of the specific heat capacity calculating equation generating system 24B illustrated in FIG. 31 are identical to those of the specific heat capacity calculating equation generating system 24A that is illustrated in FIG. 25, so explanations thereof are omitted.

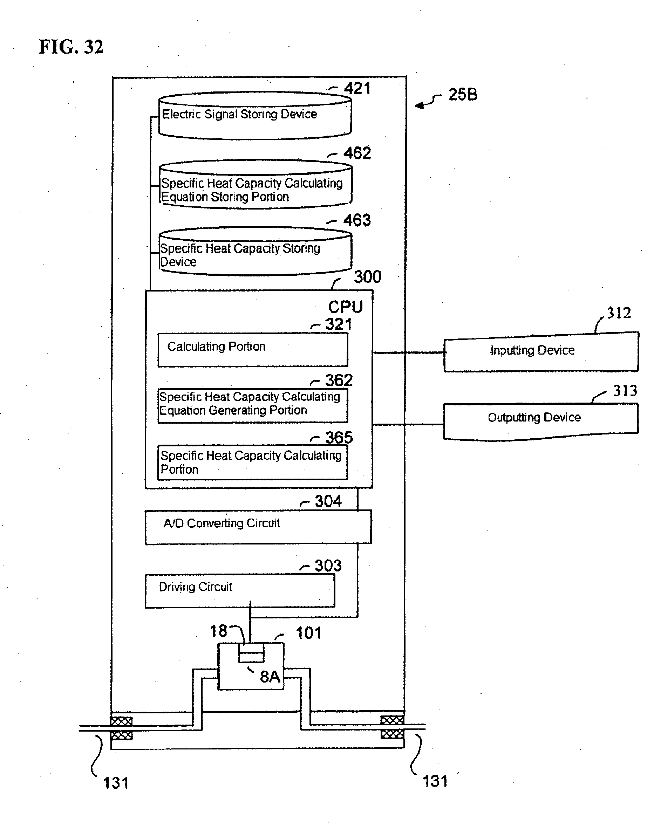

As illustrated in FIG. 32, a specific heat capacity measuring system 25B as set forth has a measuring portion 321 for measuring the value of an electric signal $S_I$ from the first temperature measuring element 62A, which is dependent on the temperature $T_I$ of the gas being measured, and values of the electric signals $S_H$ from the heater element 61A at each of the plurality of heat producing temperatures $T_H$; a specific heat capacity calculating equation storing device 462 for storing a specific heat capacity calculating equation that has the electric signal $S_I$ from the first temperature measuring element 62A and the electric signals $S_H$ from the heater element 61 A at the plurality of heat producing temperatures $T_H$ as independent variables and the specific heat capacity Cp divided by the thermal conductivity k as the dependent variable; and a specific heat capacity calculating portion 365 for calculating the value of the specific heat capacity Cp divided by the thermal conductivity k of the mixed gas being measured, by substituting the measured value of the electric signal $S_I$ from the first temperature measuring element 62A and the measured values of the electric signals $S_H$ from the heater element 61A into the independent variable that is the electric signal $S_I$ from the first temperature measuring element 62A and the independent variables that are the electric signals $S_H$ from the heater element 61 A in the specific heat capacity calculating equation.

The specific heat capacity calculating equation includes, for example, as independent variables, the electric signal $S_I$ from the first temperature measuring element 62A, the electric signal $S_{H1}$ ($T_{H1}$) from the heater element 61A at a heat producing temperature $T_{H1}$ of 100°C, the electric signal $S_{H2}$ ($T_{H2}$) from the heater element 61A at a heat producing temperature $T_{H2}$ of 150°C, and the electric signal $S_{H3}$ ($T_{H3}$) from the heater element 61A at a heat producing temperature $T_{H3}$ of 200°C.

The first temperature measuring element 62A of the microchip 8A illustrated in FIG. 1 and FIG. 2 outputs an electric signal $S_I$ that is dependent on the temperature of the gas that is measured. Following this, the heater element 61 A applies driving powers $P_{H1}$, $P_{H2}$, and $P_{H3}$ from the driving circuit 303 illustrated in FIG. 32. When the driving powers $P_{H1}$, $P_{H2}$, and $P_{H3}$ are applied, the heater element 61 A that is in contact with the mixed gas being measured produces heat at a temperature $T_{H1}$ of 100°C, a temperature $T_{H2}$ of 150°C, and a temperature $T_{H3}$ of 200°C, for example, to output an electric signal $S_{H1}$ ($T_{H1}$) at the heat producing temperature $T_{H1}$, an electric signal $S_{H2}$ ($T_{H2}$) at the heat producing temperature $T_{H2}$, and an electric signal $S_{H3}$ ($T_{H3}$) at the heat producing temperature $T_{H3}$.

The measuring portion 321 measures the value of the electric signal $S_I$ from the first temperature measuring element 62A, which is in contact with the mixed gas being measured, and, from the heater element 61A, which is in contact with the mixed gas being measured, the values of the electric signal $S_{H1}$ ($T_{H1}$) at the heat producing temperature $T_{H1}$, the electric signal $S_{H2}$ ($T_{H2}$) at the heat producing temperature $T_{H2}$, and the electric signal $S_{H3}$ ($T_{H3}$) at the heat producing temperature $T_{H3}$, and stores the measured values in the electric signal storing device 421.

The specific heat capacity calculating portion 365 substitutes the respected respective measured values into the independent variables of the electric signal $S_I$ from the first temperature measuring element 62A and the electric signals $S_{H1}$ ($T_{H1}$), $S_{H2}$ ($T_{H2}$), and $S_{H3}$ ($T_{H3}$) from the heater element 61 A in the specific heat capacity calculating equation that is stored in the specific heat capacity calculating equation storing device 462, to calculate the value of the specific heat capacity Cp divided by the thermal conductivity k of the mixed gas being measured. The other structural elements of the specific heat capacity measuring system 25B illustrated in FIG. 32 are identical to those of the specific heat capacity measuring system 25A that is illustrated in FIG. 27, so explanations thereof are omitted.

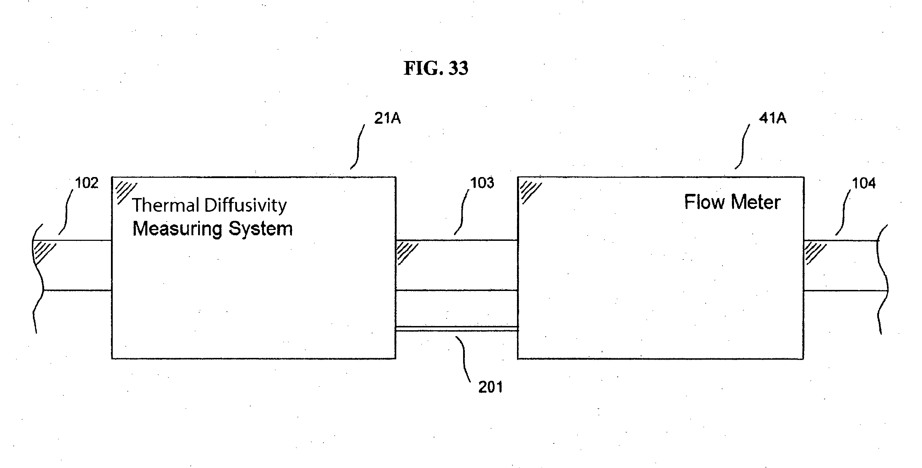

The flow rate measuring system according to the invention as set forth in FIG. 33, includes a thermal diffusivity measuring system 21 A; and a flow meter 41 A for measuring a flow rate Q of the mixed gas being measured, for which the thermal diffusivity was measured by the thermal diffusivity measuring system 21A. The thermal diffusivity measuring system 21A and the flow meter 41 A are connected by a flow path 103 wherein flows the mixed gas being measured. The thermal diffusivity measuring system 21A was explained above, and thus the description thereof will be omitted. The thermal diffusivity measuring system 21 A and the flow meter 41 A are connected electrically by an interconnection 201.

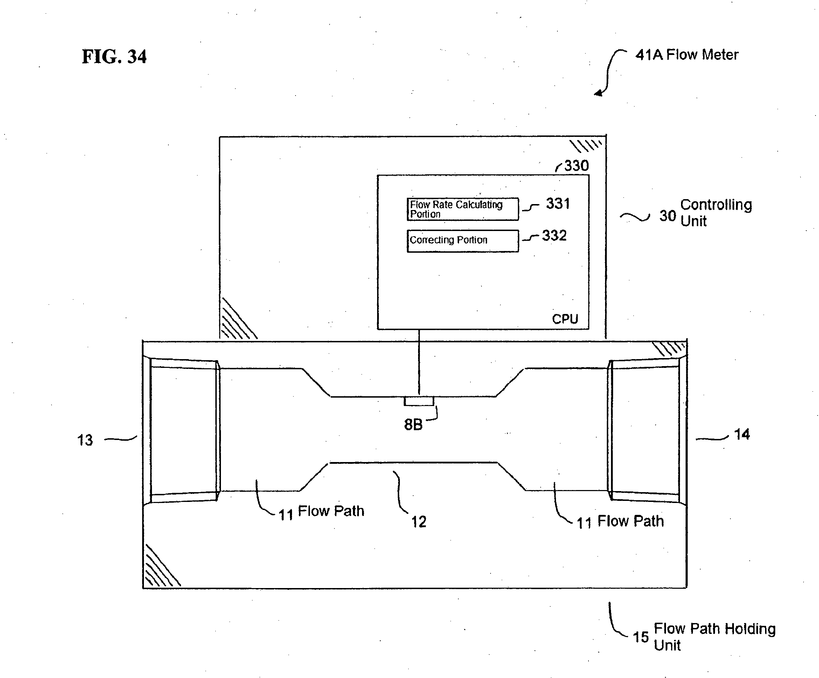

The flow meter 41 A, as illustrated in FIG. 34, which is a cross-sectional diagram, has a flow path holding unit 15 that is provided with a flow path 11 wherein flows the mixed gas being measured, and a controlling unit 30, disposed on the flow path holding unit 15. The controlling unit 30 comprises a CPU 330. Note that while FIG. 34 is a cross-sectional diagram, the interior of the controlling unit 30 is drawn schematically, and actually a microprocessor, a random access memory (RAM), a read-only memory (ROM), I/O circuitry, and the like, are disposed within the controlling unit 30.

A filling opening 13 and a discharge opening 14 are provided in the flow path holding unit 15, and a flow path 11 passes through the interior of the flow path holding unit 15 from the filling opening 13 to the discharge opening 14. A flow path 103, illustrated in FIG. 33, passes through the filling opening 13. The microchip 8B is disposed on an inner wall of the flow path 11.

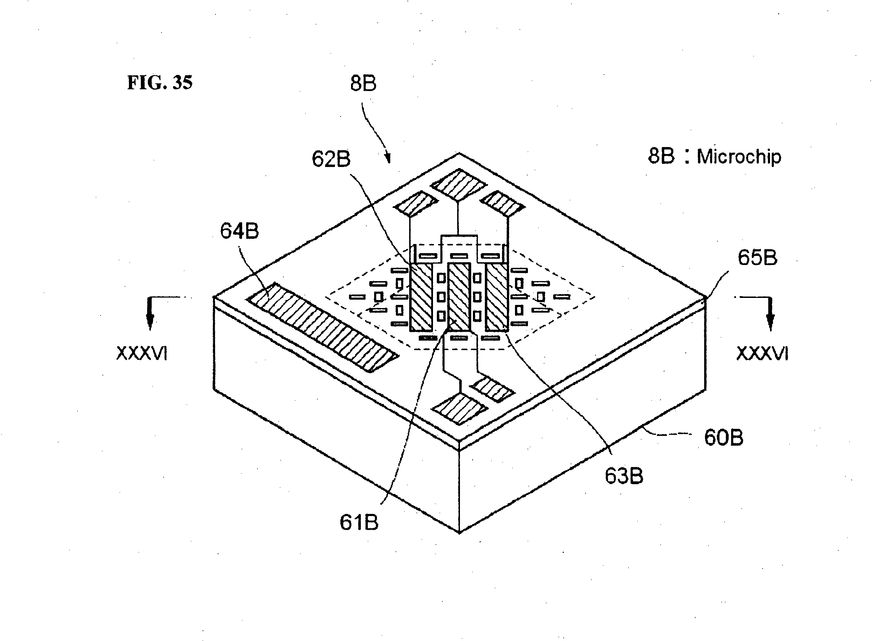

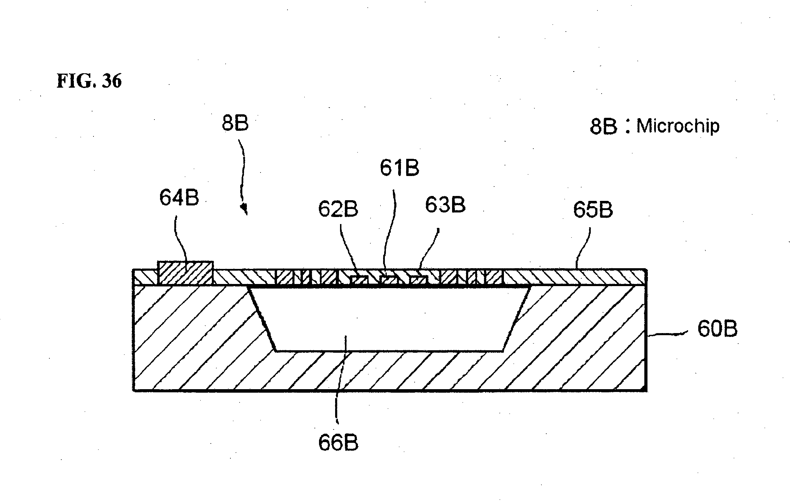

The microchip 8B, as illustrated in FIG. 35, which is a perspective view, and in FIG. 36, which is a cross-sectional diagram unit from the direction of section XXXVI-XXXVI, has a structure that is identical to that of the microchip 8A that was explained above. The microchip 8B has a substrate 60B, which is provided with a cavity 66B, a dielectric layer 65B, which is disposed so as to cover the cavity 66B on the substrate 60B, and a heater 61 B that is disposed on the dielectric layer 65B. Furthermore, the microchip 8B comprises an upstream temperature measuring resistive element 62B, illustrated in FIG. 35 and 36, that is positioned on the upstream side of the heater 61B in the flow path 11 that is illustrated in FIG. 4, a downstream temperature measuring resistive element 63B that is positioned on the downstream side of the heater 61B, and a peripheral temperature sensor 64B that is disposed on the upstream side of the upstream temperature measuring resistive element 62B.

The portion of the dielectric layer 65B that covers the cavity 66B forms a thermally insulating diaphragm. The peripheral temperature sensor 64B measures the temperature of the mixed gas being measured that has flowed into the flow path 11, illustrated in FIG. 34. The heater 61B, illustrated in FIG. 35 and 36, is disposed in the center of the dielectric layer 65B that covers the cavity 66B, and heats the mixed gas being measured, which flows in the flow path 11, so as to be constant temperature higher, such as, for example, 10°C higher, than the temperature measured by the peripheral temperature sensor 64B. The upstream temperature measuring resistive element 62B is used to detect the temperature on the upstream side of the heater 61B, and the downstream temperature measuring resistive element 63B is used to detect the temperature on the downstream side of the heater 61B.

Here, when the mixed gas being measured is stationary within the flow path 1 1 that is illustrated in FIG. 34, the heat that is added by the heater 61B, illustrated in FIG. 35 and FIG. 36, diffuses symmetrically to the upstream side and the downstream side. Consequently, the temperatures of the upstream temperature measuring resistive element 62B and the downstream temperature measuring resistive element 63B are be equal, and thus the electrical resistance of the upstream temperature measuring resistive element 62B and the downstream temperature measuring resistive element 63B are equal.

In contrast, when the mixed gas being measured flows from upstream to downstream within the flow path 11 that is illustrated in FIG. 34, the heat that is added by the heater 61B, illustrated in FIG. 35 and FIG. 36, is carried in the downstream direction. Consequently, the temperature of the downstream temperature measuring resistive element 63B is higher than that of the upstream temperature measuring resistive element 62B. Because of this, there is a difference between the electrical resistance of the upstream temperature measuring resistive element 62B and the electrical resistance of the downstream temperature measuring resistive element 63B. The difference between the electrical resistance of the downstream temperature measuring resistive element 63B and the electrical resistance of the upstream temperature measuring resistive element 62B has a correlation relationship with the flow rate Q of the mixed gas being measured within the flow path 11 illustrated in FIG. 34. Because of this, it is possible to calculate the flow rate Q of the mixed gas flowing within the flow path 11 illustrated in FIG. 34 from the difference between the electrical resistance of the downstream temperature measuring resistive element 63B, illustrated in FIG. 35 and FIG. 36, and the electrical resistance of the upstream temperature measuring resistive element 62B. Note that the units for the flow rate Q are, for example, $m^3/s$ or $m^3/h$.

An orifice 12 for narrowing the inner diameter of the flow path 11 is provided in a portion of the flow path 11. The cross-sectional area of the flow path 11 in the orifice 12 is set appropriately to cause the speed of flow of the mixed gas that is being measured in the flow path 11 to be within the measurement range of the microchip 8B. Additionally, the microchip 8B is connected electrically to the CPU 330 of the controlling unit 30.

The flow rate calculating portion 331 of the CPU 330 receives, from the microchip 8B, the value of the electrical resistance of the downstream temperature measuring resistive element 63B, illustrated in FIG. 35 and FIG. 36, and the value of the electrical resistance of the upstream temperature measuring resistive element 62B. Furthermore, the flow rate calculating portion 331, illustrated in FIG. 34, calculates the value of the flow rate Q of the mixed gas being measured, which flows in the flow path 11, illustrated in FIG. 34, based on the difference between the value of the electrical resistance of the downstream temperature measuring resistive element 63B, illustrated in FIG. 35 and FIG. 36, and the value of the electrical resistance of the upstream temperature measuring resistive element 62B. Note that it the correlation relationship between the flow rate Q of the mixed gas within the flow path 11 illustrated in FIG. 34 and the difference between the electrical resistance of the downstream temperature measuring resistive element 63B, illustrated in FIG. 35 and FIG. 36, and the electrical resistance of the upstream temperature measuring resistive element 62B is calibrated in advance using a calibration gas.

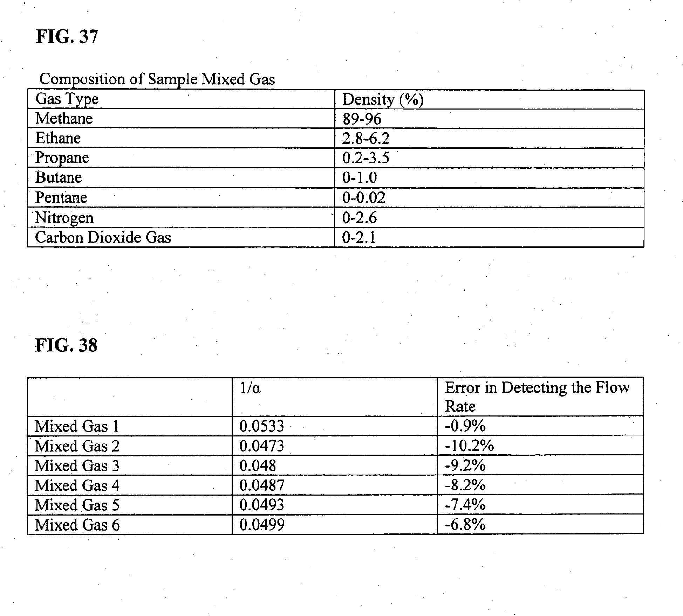

Here the flow rate Q of the gas, detected using the flow rate sensor that includes the microchip 8B and the flow rate calculating portion 331, tends to have error that increases with the inverse $1/\alpha$ of the thermal diffusivity of the gas. As an example, the flow rate sensor was first calibrated using, as the calibration gas, a public utility gas 13A wherein the calorific value was adjusted to 45 $MJ/m^3$. Following this, the first through sixth mixed gases, having the components presented in FIG. 37 were prepared. The first through sixth mixed gases, as illustrated in FIG. 38, had different inverse $1/\alpha$ thermal diffusivities. Following this, when the first through sixth mixed gases were caused to flow through the flow meter 41A at same flow rates as the flow rate of the calibration gas, error occurred proportional to the inverse $1/\alpha$ thermal diffusivities.

Consequently, if there is a difference between the inverse $1/\alpha_0$ of the thermal diffusivity of the calibration gas and the inverse $1/\alpha_1$ of the thermal diffusivity of the mixed gas being measured, then there may be error in the detected value for the flow rate Q of the mixed gas being measured. In this regard, the CPU 330, illustrated in FIG. 34, is provided with a correcting portion 332 to correct the error in the detected value for the flow rate Q of the mixed gas being measured, based on the difference between the inverse $1/\alpha_0$ of the thermal diffusivity of the calibration gas and the inverse $1/\alpha_1$ of the thermal diffusivity of the mixed gas being measured. The correcting portion 332 receives the detected value for the flow rate Q of the mixed gas being measured, calculated by the flow rate calculating portion 331. Moreover, the correcting portion 332 receives the measured value for the inverse $1/\alpha_1$ of the thermal diffusivity of the mixed gas being measured, from the thermal diffusivity measuring system 21 A, through the interconnection 201 illustrated in FIG. 33.

Furthermore, the correcting portion 332, illustrated in FIG. 34, divides the detected value for the flow rate Q for the mixed gas being measured by the inverse $1/\alpha_0$ of the thermal diffusivity of the calibration gas and then multiplies by the inverse $1/\alpha_1$ of the thermal diffusivity of the mixed gas being measured, as shown by Equation (55), below. An accurate flow rate Q of the mixed gas being measured, wherein the error is corrected based on difference between the

inverse $1/\alpha_0$ of the thermal diffusivity of the calibration gas and the inverse $1/\alpha_1$ of the thermal diffusivity of the mixed gas being measured, is thus calculated.

$$Q_C = Q \times (1/\alpha) / (1/\alpha_0) = Q \times \alpha_0 / \alpha \ldots (55)$$

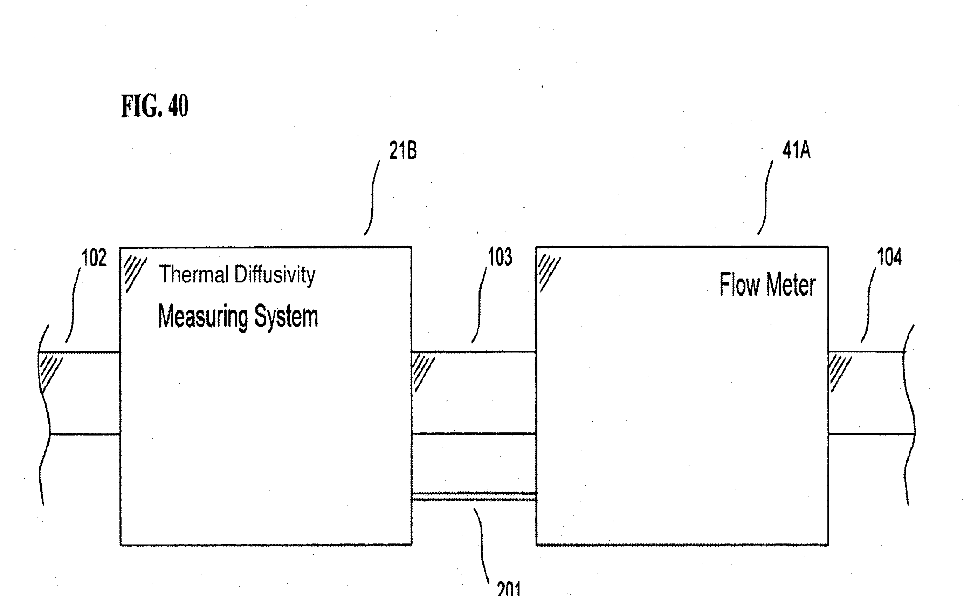

The flow rate measuring system as set forth and illustrated in FIG. 40 has a thermal diffusivity measuring system 21B; and a flow meter 41 A for measuring a flow rate Q of the mixed gas being measured, for which the thermal diffusivity was measured by the thermal diffusivity measuring system 21B. The thermal diffusivity measuring system 21B is identical to that above. Additionally, because, in the flow meter 41 A, the method for correcting the detected value for the flow rate Q of the mixed gas being measured using the measured value of the inverse $1/\alpha$ of the thermal diffusivity of the mixed gas being measured, measured by the thermal diffusivity measuring system 21B, is identical to that above as well, the explanation thereof will be omitted.

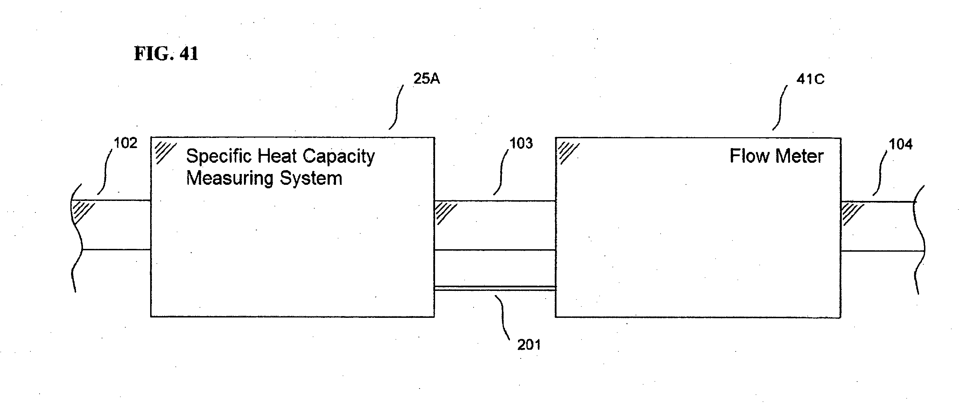

A flow rate measuring system as illustrated in FIG. 41, has a specific heat capacity measuring system 25A; and a flow meter 41C for measuring a flow rate Q of the mixed gas being measured, for which the specific heat capacity Cp divided by the thermal conductivity k was measured by the specific heat capacity measuring system 25A. The specific heat capacity measuring system 25A and the flow meter 41C are connected by a flow path 103 wherein flows the mixed gas being measured. The specific heat capacity measuring system 25A was explained above, and thus the description thereof will be omitted. The specific heat capacity measuring system 25A and the flow meter 41C are connected electrically by an interconnection 201.

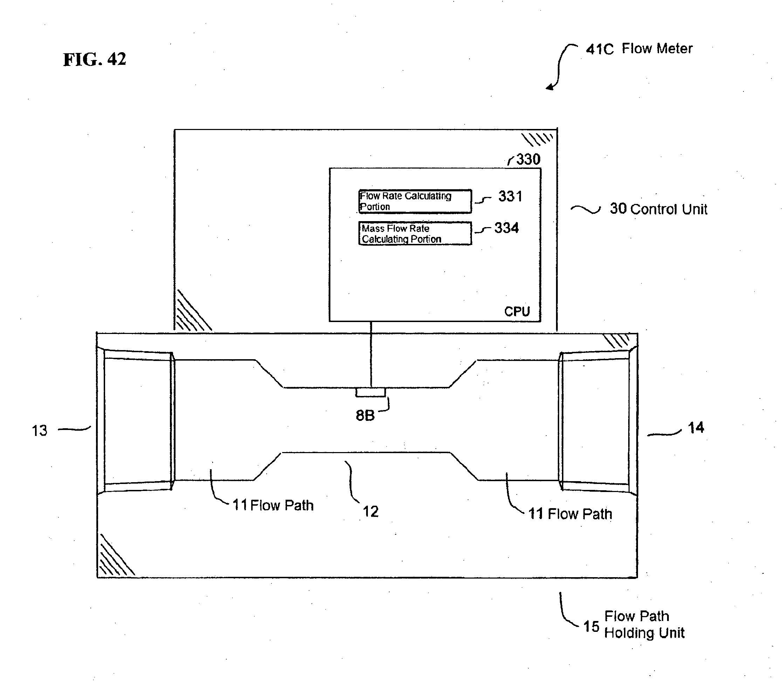

The CPU 330 of the flow meter 41C, as illustrated in FIG. 42, is provided with a mass flow rate calculating portion 334 for calculating the mass flow rate Qm of the mixed gas being measured, based on the detected value for the volumetric flow rate Q of the mixed gas being measured and the measured value for the specific heat capacity Cp divided by the thermal conductivity k of the mixed gas being measured. The mass flow rate calculating portion 334 receives the detected value for the volumetric flow rate Q of the mixed gas being measured, calculated by the flow rate calculating portion 331. Moreover, the mass flow rate calculating portion 334 receives the measured value for the specific heat capacity Cp divided by the thermal conductivity k of the mixed gas being measured, from the specific heat capacity measuring system 25A, through the interconnection 201 illustrated in FIG. 41.

Here the detected value for the volumetric flow rate Q of the mixed gas being measured, calculated by the flow rate calculating portion 331, as shown by Equation (56), below, is proportional to the product of the thermal diffusivity $\alpha$ and the flow speed d. Here A is a constant.

$$Q = A \times (1/\alpha) \times d = A \times \rho Cp / k \times d \ldots (56)$$

The mass flow rate calculating portion 334, illustrated in FIG. 42, obtains the product of the density $\rho$ and the flow speed d by dividing the detected value for the volumetric flow rate Q of the mixed gas being measured by the specific heat capacity Cp divided by the thermal conductivity k, and by the constant A, as shown in Equation (57), below.

$$Q / (A \, Cp / k) = \rho \times d \ldots (57)$$

Moreover, the mass flow rate calculating portion 334, as shown in Equation (58), below, calculate the mass flow rate Qm of the mixed gas being measured by multiplying the product of the density $\rho$ and the flow speed d, thus obtained, by the cross-sectional area u of the orifice 12. Note that the units for the mass flow rate Qm are, for example, kg/s or kg/h.

$$Qm = \rho \times d \times u \ldots (58)$$

The other structural elements of the flow meter 41C are identical to those of the flow meter 41 A that is illustrated in FIG. 34, so explanations thereof are omitted.

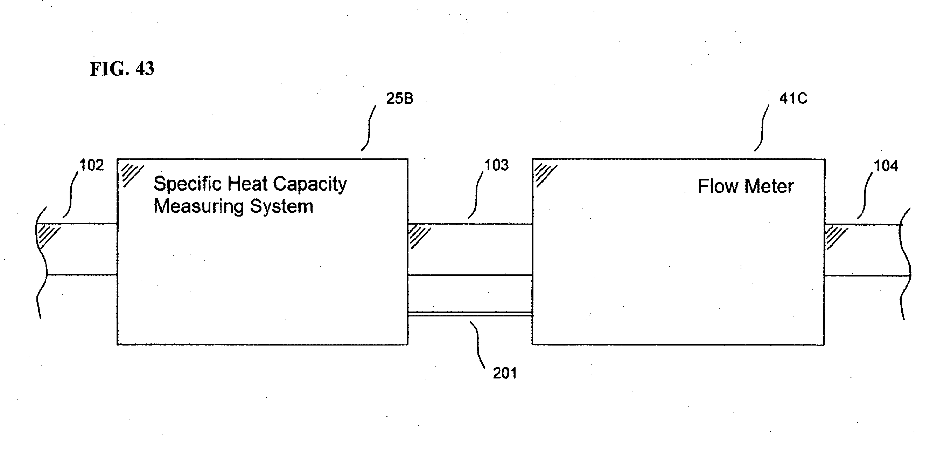

A flow rate measuring system as illustrated in FIG. 43, has a specific heat capacity measuring system 25B; and a flow meter 41C for measuring a flow rate Q of the mixed gas being measured, for which the specific heat capacity Cp divided by the thermal conductivity k was measured by the specific heat capacity measuring system 25B. The specific heat capacity measuring system 25B is identical to that above. In the flow meter 41C, the method for calculating the mass flow rate Qm is the same as other examples above, so the explanation thereof is omitted.

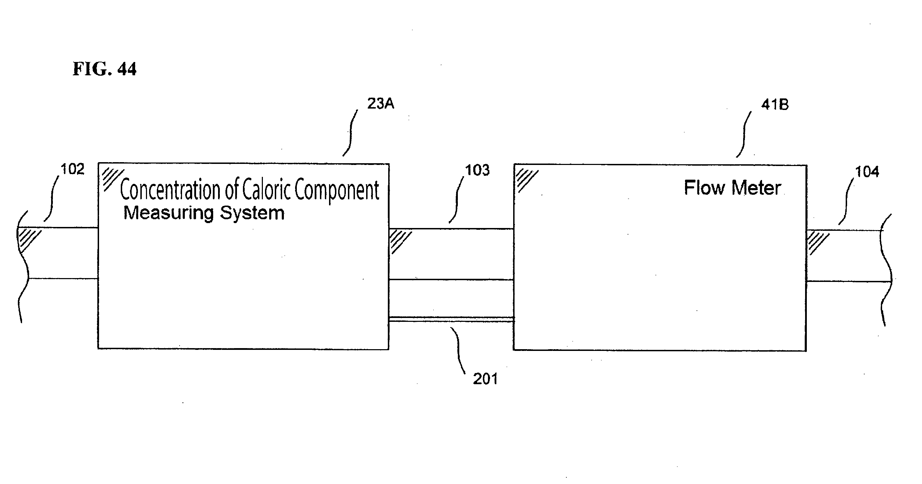

The flow rate measuring system as set forth and illustrated in FIG. 44, includes a concentration of caloric component measuring system 23A; and a flow meter 41B for measuring a flow rate Q of the mixed gas being measured, for which the concentration of caloric component $C_0$ was measured by the concentration of caloric component measuring system 23A. The concentration of caloric component measuring system 23A and the flow meter 41 B are connected by a flow path 103 wherein flows the mixed gas being measured. The concentration of caloric component measuring system 23A was explained, and thus the description thereof will be omitted. The concentration of caloric component measuring system 23A and the flow meter 41 B are connected electrically by an interconnection 201.

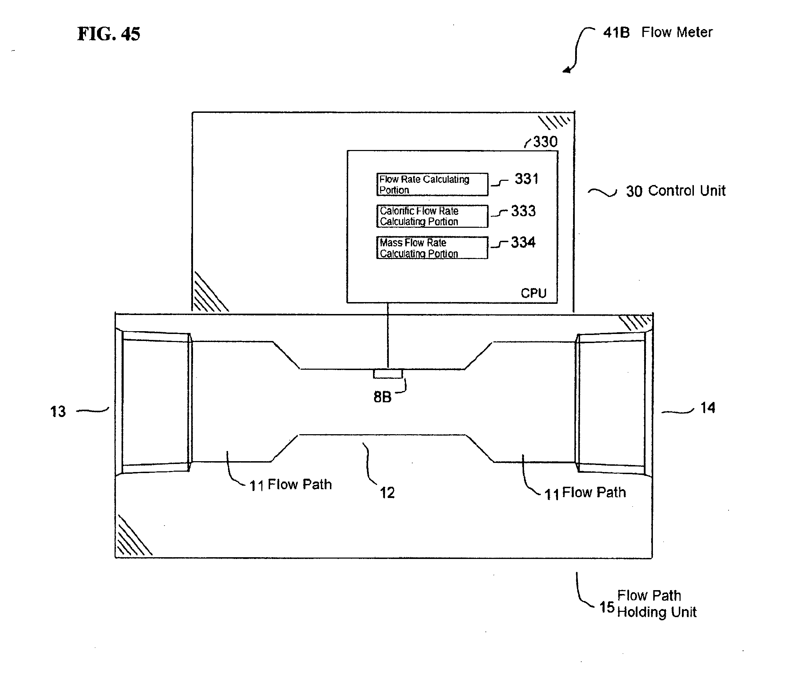

The CPU 330 of the flow meter 41B, as illustrated in FIG. 45, is provided with a calorific flow rate calculating portion 333 for calculating the calorific flow rate Qc of the caloric components of the mixed gas being measured, based on the detected value for the flow rate Q of the mixed gas being measured and the measured value for the concentration of caloric component $C_0$ of the mixed gas being measured. The calorific flow rate calculating portion 333 receives the value for the mass flow rate Qm of the mixed gas being measured, calculated by the mass flow rate calculating portion 334. Moreover, the calorific flow rate calculating portion 333 receives the measured value for the concentration of caloric component of the mixed gas being measured, from the concentration of caloric component measuring system 23A, through the interconnection 201 illustrated in FIG. 44.

Moreover, the calorific flow rate calculating portion 333, illustrated in FIG. 45 calculates the flow rate $Q_C$ of the caloric component within the mixed gas being measured, as shown in Equation (59), below, by multiplying the concentration of caloric component $C_0$ of the mixed gas being measured by the mass flow rate Qm of the mixed gas being measured.

$$Q_C = Qm \times C_O \dots (59)$$

When non-caloric components are included in a mixed gas being measured, such as natural gas, sometimes it is desirable to measure the flow rate of the caloric components, excluding the non-caloric components. In this regard, the flow rate measuring system enables the accurate measurement of the flow rate of the caloric components of the mixed gas being measured. The other structural elements of the flow meter 41B are identical to those of the flow meter 41A that is illustrated in FIG. 34, so explanations thereof are omitted.

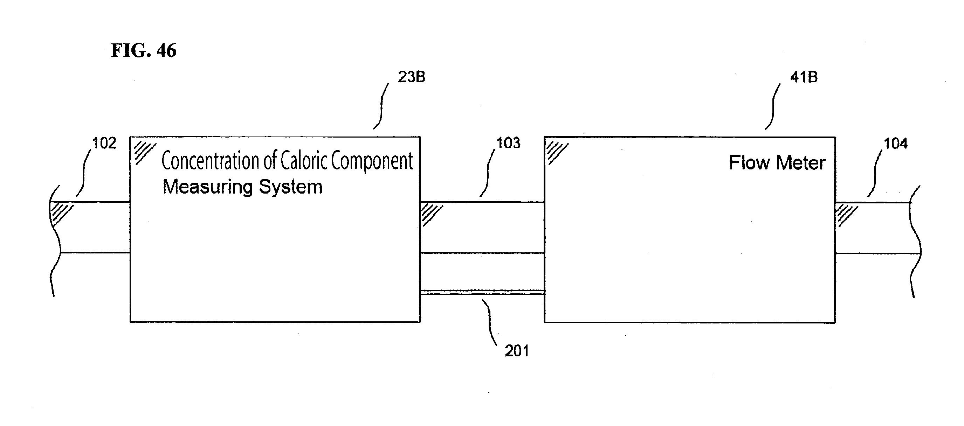

The flow rate measuring system of an embodiment of the invention, as illustrated in FIG. 46 has a concentration of caloric component measuring system 23B; and a flow meter 41B for measuring a flow rate Q of the mixed gas being measured, for which the concentration of caloric component $C_0$ was measured by the concentration of caloric component measuring system 23B. The concentration of caloric component measuring system 23B is identical to that above. Additionally, because, in the flow meter 41 B, the method for calculating the flow rate $Q_C$ of the caloric component of the mixed gas being measured using the detected values for the concentration of caloric component $C_0$ and for the flow rate Q of the mixed gas being measured is identical to that in other examples, the explanation thereof will be omitted.

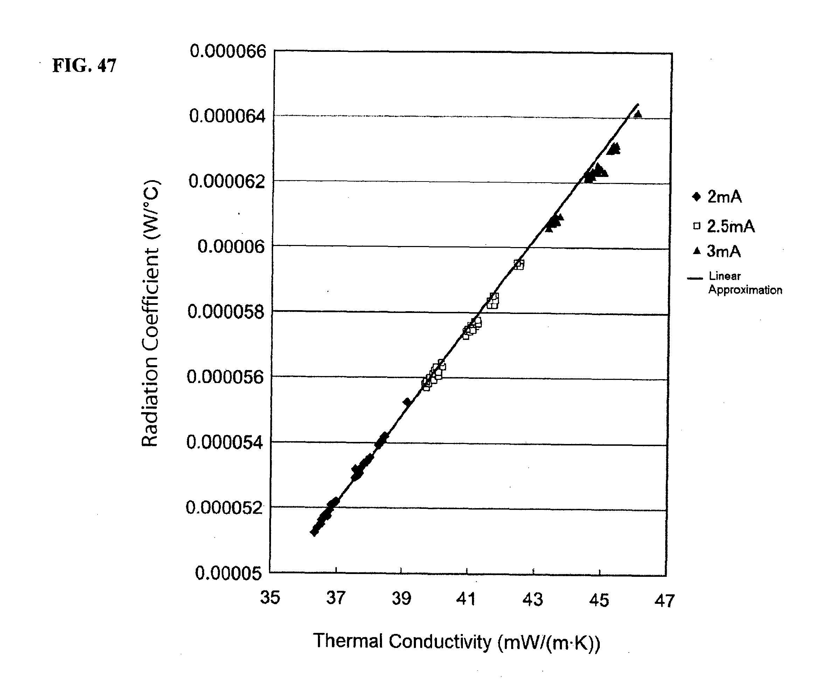

While there are descriptions of example as set forth above, the descriptions and drawings that form a portion of the disclosure are not to be understood to limit the present invention. A variety of alternate examples and operating technologies should be obvious to those skilled in the art. For example, FIG. 47 shows the relationship between the radiation coefficient and the thermal conductivity in a mixed gas when electric currents of 2 mA, 2.5 mA, and 3 mA are applied to the heat producing resistor. As illustrated in FIG. 47, typically there is a proportional relationship between the radiation coefficient and the thermal conductivity of the mixed gas. Consequently, while in certain example the values of the radiation coefficients of the mixed gasses at a plurality of heat producing temperatures of the heat producing resistor were used, instead the generation of the calorific value calculating equation and the calculation of the calorific value may be performed using the thermal conductivities at a plurality of measurement temperatures of the mixed gasse.

## Claims

1. A flow rate measuring system, comprising:

- a measuring mechanism (10) adapted to measure at least one of a radiation coefficient or a value for thermal conductivity for a measured mixed gas,
- a flow rate sensor adapted to detect a flow rate of the measured mixed gas, calibrated using a calibration gas, and
- a correcting portion (332) adapted to correct a detection error in the flow rate,
**characterized:**

- **in that** said measuring mechanism (10) is adapted to measure the at least one of a radiation coefficient or a value for thermal conductivity for a measured mixed gas when a heater element (61 A) has produced heat at a plurality of heat producing temperatures;

- by a thermal diffusivity calculating equation storing device (402) storing a thermal diffusivity calculating equation that uses at least one of the radiation coefficients or the thermal conductivities for the plurality of heat producing temperatures as independent variables and uses a thermal diffusivity as a dependent variable;

- by a thermal diffusivity calculating portion (305) adapted to calculate a value for the inverse $1/\alpha$ of the thermal diffusivity of the measured mixed gas through substituting the values of at least one of the radiation coefficients ($M_I$) or the thermal conductivities of the measured mixed gas for the plurality of heat producing temperatures ($T_{H1}$, $T_{H2}$, $T_{H3}$, $T_{Hn-1}$), for the independent variables of at least one of the radiation coefficients or thermal conductivities, for the plurality of heat producing temperatures, in the thermal diffusivity calculating equation;

- **in that** the flow rate sensor includes a microchip (8B) that comprises a heater (61B) and a temperature measuring element (63B) ; and

- **in that** said correcting portion (332) is adapted to correct a detection error in the flow rate due to a difference between the value for the inverse of the thermal diffusivity of the calibration gas and the value for the inverse of the thermal diffusivity of the measured mixed gas.

**2.** The flow rate measuring system as set forth in Claim 1, wherein:

the correcting portion (332) is adapted to correct the detection error in the flow rate measured by the flow rate sensor based on a ratio of the value for the inverse of the thermal diffusivity of the calibration gas and the value for the inverse of the thermal diffusivity of the measured mixed gas.

**Patentansprüche**

**1.** Durchflussmesssystem, umfassend:

- einen Messmechanismus (10), der dafür eingerichtet ist, einen Strahlungskoeffizienten und/oder einen Wert der thermischen Leitfähigkeit für ein gemessenes Gasgemisch zu messen,
- einen Durchflusssensor, der dafür eingerichtet ist, einen Durchfluss des gemessenen Gasgemischs zu messen, kalibriert unter Verwendung eines Kalibrierungsgases, und
- einen Korrekturabschnitt (332), der dafür eingerichtet ist, einen Erfassungsfehler im Durchfluss zu korrigieren,
**gekennzeichnet:**

- **dadurch, dass** der Messmechanismus (10) dafür eingerichtet ist, einen Strahlungskoeffizienten und/oder einen Wert der thermischen Leitfähigkeit für ein gemessenes Gasgemisch zu messen, wenn ein Heizelement (61A) Wärme mit mehreren Wärmeerzeugungstemperaturen erzeugt hat,
- durch eine Einrichtung (402) zum Speichern einer Gleichung zum Berechnen der thermischen Diffusivität, die eine Gleichung zum Berechnen der thermischen Diffusivität speichert, welche die Strahlungskoeffizienten und/oder die thermischen Leitfähigkeiten für die mehreren Wärmeerzeugungstemperaturen als unabhängige Variablen verwendet und eine thermische Diffusivität als abhängige Variable verwendet,
- durch einen Abschnitt zum Berechnen der thermischen Diffusivität (305), der dafür eingerichtet ist, einen Wert für die Umkehrfunktion $1/\alpha$ der thermischen Diffusivität des gemessenen Gasgemischs durch Ersetzen der unabhängigen Variablen der Strahlungskoeffizienten und/oder der thermischen Leitfähigkeiten für die mehreren Wärmeerzeugungstemperaturen in der Gleichung zum Berechnen der thermischen Diffusivität durch die Werte der Strahlungskoeffizienten ($M_I$) und/oder der thermischen Leitfähigkeiten des gemessenen Gasgemischs für die mehreren Wärmeerzeugungstemperaturen ($T_{H1}$, $T_{H2}$, $T_{H3}$, $T_{Hn-1}$) zu berechnen,
- dadurch, dass der Durchflusssensor einen Mikrochip (8B) enthält, der eine Heizvorrichtung (61 B) und ein Temperaturmesselement (63B) umfasst, und
- dadurch, dass der Korrekturabschnitt (332) dafür eingerichtet ist, einen Erfassungsfehler im Durchfluss aufgrund einer Differenz zwischen dem Wert für die Umkehrfunktion der thermischen Diffusivität des Kalibrierungsgases und dem Wert für die Umkehrfunktion der thermischen Diffusivität des gemessenen Gasgemischs zu korrigieren.

**2.** Durchflussmesssystem nach Anspruch 1, wobei:

der Korrekturabschnitt (332) dafür eingerichtet ist, den Erfassungsfehler in dem vom Durchflusssensor gemessenen Durchfluss basierend auf einem Verhältnis des Wertes für die Umkehrfunktion der thermischen Diffusivität des Kalibrierungsgases und dem Wert für die Umkehrfunktion der thermischen Diffusivität des gemessenen Gasgemischs zu korrigieren.

**Revendications**

1. Système de mesure de débit, comprenant :

   - un mécanisme de mesure (10) conçu pour mesurer au moins l'un d'un coefficient de rayonnement ou d'une valeur pour une conductivité thermique pour un mélange de gaz mesuré,
   - un capteur de débit conçu pour détecter un débit du mélange de gaz mesuré, étalonné en utilisant un gaz d'étalonnage, et
   - une partie de correction (332) conçue pour corriger une erreur de détection du débit,
   **caractérisé :**

      - **en ce que** ledit mécanisme de mesure (10) est conçu pour mesurer au moins l'un d'un coefficient de rayonnement ou d'une valeur pour une conductivité thermique pour un mélange de gaz mesuré lorsqu'un élément de dispositif de chauffage (61A) a produit de la chaleur à une pluralité de températures de production de chaleur ;
      - par un dispositif de mémorisation d'équation de calcul de diffusivité thermique (402) mémorisant une équation de calcul de diffusivité thermique qui utilise au moins l'un des coefficients de rayonnement ou des conductivités thermiques pour la pluralité de températures de production de chaleur en tant que variables indépendantes et qui utilise une diffusivité thermique en tant que variable dépendante ;
      - par une partie de calcul de diffusivité thermique (305) conçue pour calculer une valeur pour l'inverse $1/\alpha$ de la diffusivité thermique du mélange de gaz mesuré par la substitution des valeurs d'au moins l'un des coefficients de rayonnement (M1) ou des conductivités thermiques du mélange de gaz mesuré pour la pluralité de températures de production de chaleur ($T_{H1}$, $T_{H2}$, $T_{H3}$, $T_{Hn-1}$), aux variables indépendantes d'au moins l'un des coefficients de rayonnement ou des conductivités thermiques, pour la pluralité de températures de production de chaleur, dans l'équation de calcul de diffusivité thermique ;
      - **en ce que** le capteur de débit comprend une micropuce (8B) qui comprend un dispositif de chauffage (61 B) et un élément de mesure de température (63B) ; et
      - **en ce que** ladite partie de correction (332) est conçue pour corriger une erreur de détection de débit due à une différence entre la valeur pour l'inverse de la diffusivité thermique du gaz d'étalonnage et la valeur pour l'inverse de la diffusivité thermique du mélange de gaz mesuré.

2. Système de mesure de débit selon la revendication 1, dans lequel :

   la partie de correction (332) est conçue pour corriger l'erreur de détection du débit mesuré par le capteur de débit sur la base d'un rapport entre la valeur pour l'inverse de la diffusivité thermique du gaz d'étalonnage et la valeur pour l'inverse de la diffusivité thermique du mélange de gaz mesuré.

**FIG. 1**

EP 2 381 248 B1

**FIG. 2**

Microchip

EP 2 381 248 B1

FIG. 3

EP 2 381 248 B1

**FIG. 4**

FIG. 5

**FIG. 6**

20A

401
Radiation Coefficient Storing Device

402
Thermal Diffusivity Calculating Equation Storing Device

300

CPU

301
Radiation Coefficient Calculating Portion

302
Thermal Diffusivity Calculating Equation Generating Portion

312
Inputting Device

313
Outputting Device

303
Driving Circuit

301
8A
} 10

18
101
8A

102
103

**FIG. 7**

**FIG. 8**

```
              ┌──────────────┐
              │    Start     │
              └──────────────┘
                     │
       ┌─────────────▼──────────────┐
       │  Prepare sample mixed gas. │ ──── S100
       └────────────────────────────┘
                     │
       ┌─────────────▼───────────────────┐
       │ Measure the Radiation Coefficient│ ──── S101
       └──────────────────────────────────┘
                     │
   No                ▼
       ◇ Temperature switching complete? ◇ ──── S102
                     │ Yes
                     ▼
   No  ◇ Sample mixed gas switching complete? ◇ ──── S103
                     │ Yes
       ┌─────────────▼──────────────┐
       │        Collect data.       │ ──── S104
       └────────────────────────────┘
                     │
       ┌─────────────▼────────────────────┐
       │    Multiple regression analysis  │ ──── S105
       └──────────────────────────────────┘
                     │
       ┌─────────────▼──────────────────────────────────┐
       │ Store thermal diffusivity calculating equation. │ ──── S106
       └─────────────────────────────────────────────────┘
                     │
              ┌──────▼───────┐
              │     End      │
              └──────────────┘
```

**FIG. 9**

**FIG. 10**

```
            ┌──────────────┐
            │    Start     │
            └──────┬───────┘
                   ↓
   ┌───────────────────────────────────────┐
   │ Prepare mixed gas flow measurement    │ ~ S200
   └───────────────────┬───────────────────┘
                   ↓
   ┌───────────────────────────────────────┐
   │ Measure dissipating factor.           │ ~ S201
   └───────────────────┬───────────────────┘
                   ↓                         ┌ S202
        No      ◇ Temperature switching complete? ◇
                   ↓ Yes
   ┌───────────────────────────────────────┐
   │ Read out equation.                    │ ~ S203
   └───────────────────┬───────────────────┘
                   ↓
   ┌───────────────────────────────────────┐
   │ Calculate thermal diffusion rate.     │ ~ S204
   └───────────────────┬───────────────────┘
                   ↓
            ┌──────────────┐
            │     End      │
            └──────────────┘
```

## FIG. 11

Composition of Sample Mixed Gas

| Gas Type | Density (%) |
|---|---|
| Methane | 80-100 |
| Ethane | 0-10 |
| Propane | 0-4 |
| Butane | 0-2 |
| Nitrogen | 0-7 |
| Carbon Dioxide Gas | 0-2.1 |

## FIG. 12

|  | True Value of 1/α | Calculated Value of 1/α | Error |
|---|---|---|---|
| Sample Mixed Gas 1 | 0.045641471 | 0.04542377 | -0.48% |
| Sample Mixed Gas 2 | 0.047824358 | 0.047741841 | -0.17% |
| Sample Mixed Gas 3 | 0.051202541 | 0.050946528 | -0.50% |
| Sample Mixed Gas 4 | 0.050341278 | 0.050349614 | 0.02% |
| Sample Mixed Gas 5 | 0.049904398 | 0.049792392 | -0.22% |
| Sample Mixed Gas 6 | 0.04968219 | 0.049535842 | -0.29% |
| Sample Mixed Gas 7 | 0.055980754 | 0.05570085 | -0.50% |
| Sample Mixed Gas 8 | 0.053349225 | 0.053509458 | 0.32% |
| Sample Mixed Gas 9 | 0.052716115 | 0.052558664 | -0.30% |
| Sample Mixed Gas 10 | 0.051166597 | 0.051089974 | -0.15% |
| Sample Mixed Gas 11 | 0.058669459 | 0.05895076 | 0.48% |
| Sample Mixed Gas 12 | 0.056673551 | 0.056424158 | -0.44% |
| Sample Mixed Gas 13 | 0.053501694 | 0.053769202 | 0.50% |
| Sample Mixed Gas 14 | 0.045654641 | 0.045830124 | 0.38% |
| Sample Mixed Gas 15 | 0.046109476 | 0.046136618 | 0.06% |
| Sample Mixed Gas 16 | 0.05141891 | 0.051359237 | -0.12% |
| Sample Mixed Gas 17 | 0.052685165 | 0.052441975 | -0.46% |
| Sample Mixed Gas 18 | 0.053296504 | 0.053562987 | 0.50% |
| Sample Mixed Gas 19 | 0.05254851 | 0.052512754 | -0.07% |

FIG. 13

**FIG. 14**

**FIG. 15**

421
Electric Signal Storing Device

21B

402
Thermal Diffusivity Calculating Equation Storing Device

403
Thermal Diffusivity Storing Device

300

**CPU**

321
Measuring Portion

302
Thermal Diffusivity Calculating Equation Generating Portion

305
Thermal Diffusivity Calculating Portion

312
Inputting Device

313
Outputting Device

304
A/D Converting Circuit

303
Driving Circuit

18    101

8A

131    131

FIG. 16

**FIG. 17**

```
                    ┌──────────────┐
                    │    Start     │
                    └──────┬───────┘
                           │
  ┌────────────────────────┤
  │ ┌─────────────────────▼────────────────────┐
  │ │ Prepare sample mixed gas.                 │───  S100
  │ └─────────────────────┬────────────────────┘
  │  ┌─────────────────────┤
  │  │ ┌────────────────────▼───────────────────┐
  │  │ │ Measure the radiation coefficient      │───  S101
  │  │ └────────────────────┬───────────────────┘
  │  │                       │                        S102
  │  │        No    ◇────────▼────────◇
  │  └──────────────  Temperature switching complete?
  │                  ◇─────────────────◇
  │                           │ Yes
  │                           │                        S103
  │          No      ◇────────▼────────◇
  └───────────────────  Sample mixed gas switching complete?
                      ◇─────────────────◇
                               │ Yes
                    ┌──────────▼───────────┐
                    │ Collect data         │───  S104
                    └──────────┬───────────┘
                    ┌──────────▼───────────┐
                    │ Multiple regression  │───  S105
                    │ analysis             │
                    └──────────┬───────────┘
                    ┌──────────▼───────────┐
                    │ Store Concentration  │───  S106
                    │ of Caloric Component │
                    │ Calculating equation.│
                    └──────────┬───────────┘
                    ┌──────────▼───────────┐
                    │      End             │
                    └──────────────────────┘
```

## FIG. 18

23A

Radiation Coefficient Storing Device — 401

Density Calculating Equation Storing Device — 452

Density Storing Device — 453

300

CPU

Radiation Coefficient Calculating Portion — 301

Density Calculating Equation Generating Portion — 352

Density Calculating Portion — 355

Inputting Device — 312

Outputting Device — 313

Driving Circuit — 303

301
8A } 10

18

101

8A

102

103

**FIG. 19**

## FIG. 20

Composition of Sample Mixed Gas

| Gas Type | Density (%) |
|---|---|
| Methane | 80-100 |
| Ethane | 0-10 |
| Propane | 0-4 |
| Butane | 0-2 |
| Nitrogen | 0-7 |
| Carbon Dioxide Gas | 0-2.1 |

## FIG. 21

| | True Value of Alkane Density | Calculated Value for Alkane Density | Error |
|---|---|---|---|
| Sample Mixed Gas 1 | 100 | 99.92 | -0.08 |
| Sample Mixed Gas 2 | 97.92 | 98.21 | 0.29 |
| Sample Mixed Gas 3 | 100 | 99.70 | -0.30 |
| Sample Mixed Gas 4 | 97.02 | 97.25 | 0.23 |
| Sample Mixed Gas 5 | 96.95 | 96.94 | -0.01 |
| Sample Mixed Gas 6 | 94.928 | 95.19 | 0.26 |
| Sample Mixed Gas 7 | 100 | 99.70 | -0.30 |
| Sample Mixed Gas 8 | 95.95 | 96.24 | 0.29 |
| Sample Mixed Gas 9 | 95.89 | 95.70 | -0.19 |
| Sample Mixed Gas 10 | 92.917 | 93.01 | 0.09 |
| Sample Mixed Gas 11 | 100 | 100.26 | 0.26 |
| Sample Mixed Gas 12 | 95.01 | 94.82 | -0.19 |
| Sample Mixed Gas 13 | 91 | 91.08 | 0.08 |
| Sample Mixed Gas 14 | 99.003 | 99.12 | 0.11 |
| Sample Mixed Gas 15 | 98.99 | 99.09 | 0.10 |
| Sample Mixed Gas 16 | 96.02 | 96.31 | 0.29 |
| Sample Mixed Gas 17 | 98.01 | 97.77 | -0.24 |
| Sample Mixed Gas 18 | 98.05 | 98.26 | 0.21 |
| Sample Mixed Gas 19 | 93.99 | 94.03 | 0.04 |

FIG. 22

Calculated Value of Alkane Density (%)

True Value of Alkane Density (%)

**FIG. 23**

22B

421
Electric Signal Storing Device

452
Density Calculating Equation Storing Device

300
**CPU**

321
Measuring Portion

352
Density Calculating Equation Generating Portion

312
Inputting Device

313
Outputting Device

304
A/D Converting Circuit

303
Driving Circuit

18    101

8A

102          103

**FIG. 24**

~ 421

Electric Signal Storing Device

~ 452

Density Calculating Equation Storing Device

~ 453

Density Storing Device

~ 300

CPU

~ 321

Measuring Portion

~ 352

Density Calculating Equation Generating Portion

~ 355

Density Calculating Portion

~ 304

A/D Converting Circuit

~ 303

Driving Circuit

18 ~        ~ 101

8A

131        131

23B

~ 312

Inputting Device

~ 313

Outputting Device

## FIG. 25

24A

401
Radiation Coefficient Storing Device

462
Specific Heat Capacity Calculating Equation Storing Portion

300

**CPU**

301
Dissipating Factor Calculating Portion

362
Specific Heat Capacity Calculating Equation Generating Portion

312
Inputting Device

313
Outputting Device

303
Driving Circuit

18
101
8A

301
8A } 10

102
103

**FIG. 26**

```
                        ┌─────────────┐
                        │    Start    │
                        └──────┬──────┘
                               │
    ┌──────────────────────────▼──────────────────────┐
    │         Prepare sample mixed gas.                │ ～ S100
    └──────────────────────────┬──────────────────────┘
                               │
       ┌───────────────────────▼──────────────────────┐
       │    Measure the radiation coefficient          │ ～ S101
       └───────────────────────┬──────────────────────┘
                               │
                    ╱──────────▼──────────╲  S102
         No  ◄─────◄   Temperature switching complete?  ╲
                    ╲─────────────────────╱
                               │ Yes
                    ╱──────────▼──────────╲  S103
    No  ◄──────────◄   Sample mixed gas switching complete?  ╲
                    ╲─────────────────────╱
                               │ Yes
    ┌──────────────────────────▼──────────────────────┐
    │              Collect data.                       │ ～ S104
    └──────────────────────────┬──────────────────────┘
                               │
    ┌──────────────────────────▼──────────────────────┐
    │        Multiple regression analysis              │ ～ S105
    └──────────────────────────┬──────────────────────┘
                               │
    ┌──────────────────────────▼──────────────────────┐
    │ Store the specific heat capacity calculating equation. │ ～ S106
    └──────────────────────────┬──────────────────────┘
                               │
                        ┌──────▼──────┐
                        │     End     │
                        └─────────────┘
```

**FIG. 27**

**FIG. 28**

```
                    ┌─────────────────┐
                    │     Start       │
                    └────────┬────────┘
                             │
          ┌──────────────────▼─────────────────┐
          │ Prepare mixed gas flow measurement.│────  S200
          └──────────────────┬─────────────────┘
          ┌──────────────────▼─────────────────┐
          │ Measure dissipating factor.        │────  S201
          └──────────────────┬─────────────────┘
                             │                      S202
       No         ╱──────────▼──────────╲
     ┌──────────◄ Temperature switching complete? ►
     │            ╲─────────────────────╱
     │                     │ Yes
     │          ┌──────────▼─────────────────────┐
     │          │ Read out equation.             │────  S203
     │          └──────────┬─────────────────────┘
     │          ┌──────────▼─────────────────────┐
     │          │ Calculate specific heat capacity.│──  S204
     │          └──────────┬─────────────────────┘
                           │
                    ┌──────▼────────┐
                    │      End      │
                    └───────────────┘
```

**FIG. 29**

|  | True Value for CP/k | Calculated Value for CP/k | Error |
|---|---|---|---|
| Sample Mixed Gas 1 | 0.067124129 | 0.067499401 | 0.56% |
| Sample Mixed Gas 2 | 0.06619094 | 0.066527709 | 0.51% |
| Sample Mixed Gas 3 | 0.068046622 | 0.067638342 | -0.50% |
| Sample Mixed Gas 4 | 0.066178289 | 0.066424479 | 0.37% |
| Sample Mixed Gas 5 | 0.066472296 | 0.066189604 | -0.43% |
| Sample Mixed Gas 6 | 0.065230499 | 0.065351107 | 0.18% |
| Sample Mixed Gas 7 | 0.068841234 | 0.068450712 | -0.57% |
| Sample Mixed Gas 8 | 0.066221844 | 0.066603945 | 0.58% |
| Sample Mixed Gas 9 | 0.066586689 | 0.066187169 | -0.60% |
| Sample Mixed Gas 10 | 0.064799469 | 0.064773201 | -0.04% |
| Sample Mixed Gas 11 | 0.069502751 | 0.069434536 | -0.10% |
| Sample Mixed Gas 12 | 0.067079117 | 0.066676642 | -0.60% |
| Sample Mixed Gas 13 | 0.064422987 | 0.064567802 | 0.22% |
| Sample Mixed Gas 14 | 0.066649658 | 0.066967619 | 0.48% |
| Sample Mixed Gas 15 | 0.066714175 | 0.066942942 | 0.34% |
| Sample Mixed Gas 16 | 0.065802349 | 0.066197164 | 0.60% |
| Sample Mixed Gas 17 | 0.067427227 | 0.067022663 | -0.60% |
| Sample Mixed Gas 18 | 0.06709158 | 0.067438884 | 0.52% |
| Sample Mixed Gas 19 | 0.06553519 | 0.065500902 | -0.05% |

FIG. 30

**FIG. 31**

**FIG. 32**

**421**

Electric Signal Storing Device

**462**

Specific Heat Capacity Calculating Equation Storing Portion

**463**

Specific Heat Capacity Storing Device

**300**

**CPU**

**321**

Calculating Portion

**362**

Specific Heat Capacity Calculating Equation Generating Portion

**365**

Specific Heat Capacity Calculating Portion

**304**

A/D Converting Circuit

**303**

Driving Circuit

**25B**

**312**

Inputting Device

**313**

Outputting Device

18 — 101

8A

131

131

**FIG. 33**

EP 2 381 248 B1

21A

41A

102

| Thermal Diffusivity Measuring System |
|---|

103

| Flow Meter |
|---|

104

201

**FIG. 34**

41A Flow Meter

330

Flow Rate Calculating Portion — 331

Correcting Portion — 332

30 Controlling Unit

CPU

8B

13

14

11 Flow Path

12

11 Flow Path

15 Flow Path Holding Unit

EP 2 381 248 B1

FIG. 35

8B : Microchip

FIG. 36

8B : Microchip

8B

64B

62B

61B

63B

65B

60B

66B

## FIG. 37

Composition of Sample Mixed Gas

| Gas Type | Density (%) |
|---|---|
| Methane | 89-96 |
| Ethane | 2.8-6.2 |
| Propane | 0.2-3.5 |
| Butane | 0-1.0 |
| Pentane | 0-0.02 |
| Nitrogen | 0-2.6 |
| Carbon Dioxide Gas | 0-2.1 |

## FIG. 38

| | $1/\alpha$ | Error in Detecting the Flow Rate |
|---|---|---|
| Mixed Gas 1 | 0.0533 | -0.9% |
| Mixed Gas 2 | 0.0473 | -10.2% |
| Mixed Gas 3 | 0.048 | -9.2% |
| Mixed Gas 4 | 0.0487 | -8.2% |
| Mixed Gas 5 | 0.0493 | -7.4% |
| Mixed Gas 6 | 0.0499 | -6.8% |

FIG. 39

**FIG. 40**

EP 2 381 248 B1

FIG. 41

Flow Meter — 41C
Specific Heat Capacity Measuring System — 25A
102, 103, 104, 201

**FIG. 42**

41C Flow Meter

330

Flow Rate Calculating Portion — 331

Mass Flow Rate Calculating Portion — 334

CPU

30 Control Unit

13

8B

14

11 Flow Path

12

11 Flow Path

15 Flow Path Holding Unit

EP 2 381 248 B1

**FIG. 43**

25B

41C

102

| Specific Heat Capacity Measuring System |

103

| Flow Meter |

104

201

**FIG. 44**

Concentration of Caloric Component Measuring System — 23A

Flow Meter — 41B

102 · 103 · 104 · 201

FIG. 45

41B  Flow Meter

330

Flow Rate Calculating Portion — 331

Calorific Flow Rate Calculating Portion — 333

Mass Flow Rate Calculating Portion — 334

CPU

30 Control Unit

8B

13

14

11 Flow Path

12

11 Flow Path

Flow Path
15 Holding Unit

EP 2 381 248 B1

**FIG. 46**

EP 2 381 248 B1

FIG. 47

**REFERENCES CITED IN THE DESCRIPTION**

**Patent documents cited in the description**

- JP 2010097139 A
- JP 2004514138 A
- US 20050034532 A1

- EP 2009431 A1
- JP H5141999 B

**Non-patent literature cited in the description**

- A Tutorial on Support Vector Regression. Neuro-COLT Technical Report NC-TR-98-030